(19) Europäisches Patentamt
European Patent Office
Office européen des brevets

(11) EP 2 136 564 A1

(12) EUROPEAN PATENT APPLICATION
published in accordance with Art. 153(4) EPC

(43) Date of publication:
23.12.2009 Bulletin 2009/52

(21) Application number: 08703029.2

(22) Date of filing: 09.01.2008

(51) Int Cl.:
*H04N 7/32* (2006.01)

(86) International application number:
PCT/JP2008/050158

(87) International publication number:
WO 2008/084817 (17.07.2008 Gazette 2008/29)

(84) Designated Contracting States:
AT BE BG CH CY CZ DE DK EE ES FI FR GB GR HR HU IE IS IT LI LT LU LV MC MT NL NO PL PT RO SE SI SK TR

(30) Priority: 09.01.2007 JP 2007001835
16.04.2007 JP 2007107499
11.10.2007 JP 2007265957

(71) Applicant: Kabushiki Kaisha Toshiba
Minato-ku
Tokyo 105-8001 (JP)

(72) Inventors:
- SHIODERA, Taichiro
Tokyo 105/8001 (JP)
- TANIZAWA, Akiyuki
Tokyo 105-8001 (JP)
- CHUJOH, Takeshi
Tokyo 105-8001 (JP)

(74) Representative: Maury, Richard Philip
Marks & Clerk LLP
90 Long Acre
London
WC2E 9RA (GB)

# (54) IMAGE ENCODING AND DECODING METHOD AND DEVICE

(57) An image encoding apparatus includes a multi-directional predicting unit configured to predict a plurality of pixel blocks by using an encoded pixel as a reference pixel according to a plurality of prediction modes having different prediction directions to generate a plurality of first prediction signals corresponding to the pixel blocks obtained by dividing a frame of an input image signal a setting unit configured to set a weighting factor depending on the prediction directions of the plurality of prediction modes and a spatial distance between a prediction pixel in the pixel block and the reference pixel, a weighted average unit configured to calculate a weighted average of the plurality of first prediction signals according to the weighting factor to generate one second prediction signal corresponding to the pixel blocks, and an encoding unit configured to encode a prediction residual error signal representing a difference between an image signal of the pixel block and at least the second prediction signal to generate encoded data.

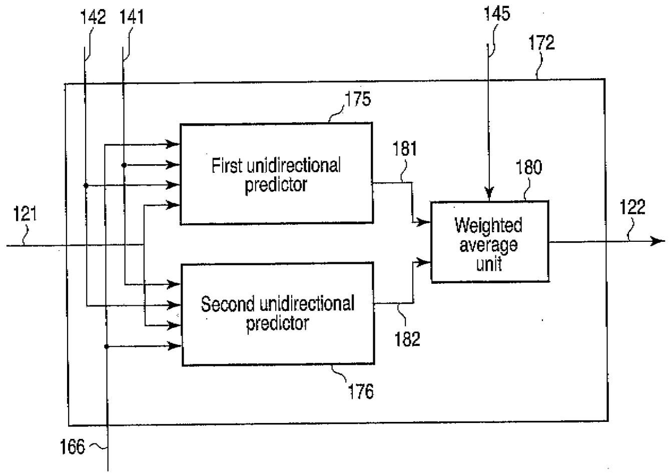


FIG. 11

EP 2 136 564 A1

## Description

### Technical Field

The present invention relates to a method and apparatus for encoding and decoding a moving or a still image.

### Background Art

In recent years, an image encoding method the encoding efficiency of which is considerably improved is recommended as ITU-T Rec.H.264 and ISO/IEC 14496-10 (to be referred to as H.264 hereinafter) in cooperation with ITU-T and ISO/IEC. In an encoding scheme such as ISO/IEC MPEG-1, 2, and 4, ITU-T H.261, and H.263, intra-frame prediction in a frequency region (DCT coefficient) after orthogonal transformation is performed to reduce a code amount of a transformation coefficient. In contrast to this, directional prediction (see Greg Conklin, "New Intra Prediction Modes", ITU-T Q.6/SG16 VCEG, VCEG-N54, Sept. 2001) is employed to realize prediction efficiency higher than that of intra-frame prediction in ISO/IEC MPEG-1, 2 and 4.

In an H. 264 high profile, intra-frame prediction schemes of three types are regulated to a luminance signal, one of them can be selected in a macroblock (16×16 pixelblock). The intra-frame prediction schemes of the three types are called 4×4 pixel prediction, 8×8 pixel prediction, and 16×16 pixel prediction, respectively.

In the 16×16 pixel prediction, four prediction modes called vertical prediction, horizontal prediction, DC prediction, and plane prediction are regulated. In the four prediction modes, of a local decoding signal obtained before a deblocking filter is applied, a pixel value of a macroblock around a macroblock to be encoded is used as a reference pixel value to perform prediction.

In the 4×4 pixel prediction, a macroblock is divided into 4x4 pixelblocks (sub-blocks), any one of nine prediction modes is selected to each of the 4×4 pixelblocks. Of the nine prediction modes, eight modes except for the DC prediction (mode 2) which performs prediction by an average pixel value of available reference pixels have prediction directions arranged at intervals of 22.5°, respectively. Extrapolation is performed in a prediction direction by using the reference pixel to generate a prediction signal.

In the 8×8 pixel prediction, a macroblock is divided into four 8×8 pixelblocks (sub-blocks), and any one of the nine prediction modes is selected to each of the 8×8 pixelblocks. The prediction mode is designed in the same framework as that of the 4×4 pixel prediction. A process of performing three-tap filtering to encoded reference pixels and planarizing reference pixels to be used in prediction to average encoding distortion is added.

In Kenneth K. C. Lee et al. "Spatial Domain Contribution to a High Compression Efficiency System" IWAIT2006, Jun. 2006 (Document 1), a method which selects two prediction modes from the nine prediction mode candidates and calculates averages to prediction signals generated according to the two selected prediction modes in units of pixels to generate a prediction signal is disclosed. According to this method, high prediction efficiency is realized even for a complex texture which is not assumed in normal 4×4 pixel prediction or normal 8×8 pixel prediction.

According to Document 2, in prediction of a sub-block (4x4 pixel blocks or 8×8 pixel blocks) in a macro-block, it is assumed that all pixels in the sub-block are equally influenced by a reference pixel, and prediction signals in two prediction modes are uniformly used as prediction signals which finally use values averaged in units of pixels.

### Disclosure of Invention

In intra-frame prediction of H. 264, one of a plurality of prediction mode candidates is selected for a pixel block. This is because it is assumed that the number of directivities of a texture in a block is one. In a complex texture region, a prediction residual error increases. As a result, encoding efficiency reduces.

On the other hand, in Non-patent document 2, two prediction modes are always used. More specifically, even though prediction can be satisfactorily performed in a single prediction mode, the prediction is performed by using two prediction modes. For this reason, encoding efficiency bears improvements. Furthermore, in Non-patent Document 2, in prediction of a sub-block, prediction signals based on prediction modes are used as prediction signals which finally use values averaged in units of reference pixels on the assumption that all pixels in the sub-block are equally influenced by the reference pixels. However, this assumption is not always satisfied, and a prediction residual error may increase.

It is an object of the present invention to provide highly efficient image encoding and image decoding methods and apparatuses.

According to a first aspect of the present invention, there is provided an image encoding apparatus comprising: a multidirectional predicting unit configured to predict a plurality of pixel blocks by using an encoded pixel as a reference pixel according to a plurality of prediction modes having different prediction directions to generate a plurality of first prediction signals corresponding to the pixel blocks obtained by dividing a frame of an input image signal; a setting unit configured to set a weighting factor depending on the prediction directions of the plurality of prediction modes and a spatial distance between a prediction pixel in the pixel blocks and the reference pixel; a weighted average unit configured to calculate a weighted average of the plurality of first prediction signals according to the weighting factor to generate one second prediction signal corresponding to the pixel blocks; and an encoding unit configured to encode a prediction residual error signal representing a difference between an image signal of the pixel blocks and at least the second prediction signal to generate encoded data.

According to a second aspect of the present invention, there is provided an image decoding apparatus comprising: a decoding unit configured to decode encoded data including the prediction residual error signals to generate prediction residual error signals corresponding to a plurality of pixel blocks obtained by dividing a frame of an image signal; a multidirectional predicting unit configured to predict the pixel blocks by using a decoded pixel as a reference pixel according to a plurality of prediction modes having different prediction directions to generate a plurality of first prediction signals corresponding to the pixel blocks; a setting unit configured to set a weighting factor depending on the prediction directions of the plurality of prediction modes and a spatial distance between a prediction pixel in the pixel blocks and the reference pixel; a weighted average unit configured to calculate a weighted average of the plurality of first prediction signals according to the weighting factor to generate one second prediction signal corresponding to the pixel blocks; and a generating unit configured to generate the prediction residual error signal and a decoding image signal by using at least the second prediction signal.

According to a third aspect of the present invention, there is provided an image encoding apparatus comprising: a first selecting unit configured to select a prediction order of a plurality of sub-blocks obtained by further dividing each of a plurality of encoding target pixel blocks obtained by dividing a frame of an input image signal from a plurality of predetermined prediction orders; a second selecting unit configured to select one prediction mode set including a first prediction mode and a second prediction mode from a plurality of prediction mode sets predetermined to correspond to the plurality of prediction orders and including a plurality of prediction modes having different prediction directions according to the selected prediction order; a first predicting unit configured to predict the encoding target pixel blocks in units of the sub-blocks according to the first prediction mode to generate a plurality of prediction signals corresponding to the encoding target pixel blocks; a second predicting unit configured to predict the first prediction mode by using the second prediction mode corresponding to an encoded pixel block predicted according to the second prediction mode to generate a reference prediction mode; a setting unit configured to set a weighting factor to the first prediction signal depending on the prediction directions of the plurality of prediction modes and a spatial distance between a prediction pixel in the encoding target pixel block and the reference pixel; a weighted average unit configured to calculate a weighted average according to the weighting factor to generate one second prediction signal corresponding to the encoding target pixel block; and an encoding unit configured to encode a prediction residual error signal representing a difference between an image signal of the encoding target pixel block and the second prediction signal, information representing the selected prediction order, and mode information representing the first prediction mode generated on the basis of the reference prediction mode.

According to a fourth aspect of the present invention, there is provided an image decoding apparatus comprising: a decoding unit configured to decode the encoded data to generate a prediction residual error signal, information representing a selected prediction order, and mode information representing a first prediction mode for each of a plurality of pixel blocks obtained by dividing a frame of an image signal; a first selecting unit configured to select a prediction order to a plurality of sub-blocks obtained by dividing a decoding target pixel block from a plurality of predetermined prediction orders; a second selecting unit configured to select one prediction mode set including the first prediction mode and a second prediction mode from a plurality of prediction mode sets predetermined to correspond to the plurality of prediction orders and including a plurality of prediction modes having different prediction directions according to the selected prediction order; a predicting unit configured to predict the decoding target pixel blocks in units of the sub-blocks according to the first prediction mode represented by the decoded mode information to generate a plurality of prediction signals corresponding to the decoding target pixel blocks; a setting unit configured to set a weighting factor to the first prediction signal depending on the prediction directions of the plurality of prediction modes and a spatial distance between a prediction pixel in the decoding target pixel block and a reference pixel; a weighted average unit configured to calculate a weighted average of the plurality of first prediction signals according to the weighting factor to generate one second prediction signal corresponding to the decoding target pixel block; and a generating unit configured to generate a decoding image signal by using the second prediction signal and the prediction residual error signal.

[Effect of the Invention]

According to the present invention, a prediction residual error can be reduced even in a complex texture region in which a texture in a block has a complex directivity. A unidirectional prediction mode having a single prediction direction and a multidirectional prediction mode having different prediction directions can be selected, and a weighted average of prediction signals based on the prediction modes is calculated according to a weighting factor set depending on a prediction direction of a prediction mode and a spatial distance between a prediction pixel and the reference pixel in the multidirectional prediction mode. For this reason, a prediction residual error can be reduced. Therefore, prediction efficiency is improved. As a result, high encoding efficiency can be realized.

Brief Description of Drawings

FIG. 1 is a block diagram showing an image encoding apparatus according to an embodiment.
FIG. 2A is a diagram showing an encoding target block and an encoded block in an encoding target frame.
FIG. 2B is a diagram showing a block size of a macroblock.
FIG. 3A is a diagram showing an 8×8 pixelblock.
FIG. 3B is a diagram showing a 4×4 pixelblock.
FIG. 3C is a diagram showing 8×8/4×4 pixelblocks.
FIG. 4 is a block diagram showing details of a predictor in FIG. 1.
FIG. 5 is a block diagram showing details of a prediction signal generator in FIG. 1.
FIG. 6A is a diagram showing 8x8 pixelblocks and block indexes.
FIG. 6B is a diagram showing a prediction order by sequential prediction to the blocks in FIG. 6A.
FIG. 7A is a diagram showing 4x4 pixelblocks and block indexes.
FIG. 7B is a diagram showing a prediction order by sequential prediction to the blocks in FIG. 7A.
FIG. 8A is a diagram showing a prediction mode in a unidirectional predictor.
FIG. 8B is a graph showing a relationship between a prediction pixel and a reference pixel in 4x4 pixel prediction.
FIG. 8C is a diagram for explaining a prediction signal generating method in mode 0.
FIG. 8D is a diagram for explaining a prediction signal generating method in mode 4.
FIG. 9 is a diagram showing a name of a prediction mode and a mode index in a unidirectional predictor.
FIG. 10 is a diagram showing a name of a prediction mode and a mode index in a bidirectional predictor.
FIG. 11 is a block diagram showing details of the bidirectional predictor in FIG. 5.
FIG. 12A is a conceptual diagram of vertical/horizontal prediction (mode 01) in 4×4 pixel prediction.
FIG. 12B is a conceptual diagram of a vertical/diagonal-down-right prediction (mode 04) in the 4×4 pixel prediction.
FIG. 13 is a diagram for explaining a position of a prediction pixel with respect to 4x4 pixel blocks.
FIG. 14A is a diagram showing a relationship between reference pixels and Euclidean distances of prediction pixels in vertical prediction (mode 0) in 4×4 pixel blocks.
FIG. 14B is a diagram showing a relationship between reference pixels and Euclidean distances of prediction pixels in horizontal prediction (mode 1) in 4x4 pixel blocks.
FIG. 14C is a diagram showing a relationship between reference pixels and Euclidean distances of prediction pixels in diagonal-down-right prediction (mode 4) in 4×4 pixel blocks.
FIG. 14D is a diagram showing a relationship between reference pixels and Euclidean distances of prediction pixels in horizontal-down prediction (mode 6) in 4x4 pixel blocks.
FIG. 15A is a graph showing a relationship between a prediction pixel and reliability in vertical prediction (mode 0) in 4x4 pixel blocks.
FIG. 15B is a graph showing a relationship between a prediction pixel and reliability in horizontal prediction (mode 1) in 4x4 pixel blocks.
FIG. 15C is a graph showing a relationship between a prediction pixel and reliability in diagonal-down-right prediction (mode 4) in 4x4 pixel blocks.
FIG. 15D is a graph showing a relationship between a prediction pixel and reliability in horizontal-down prediction (mode 6) in 4x4 pixel blocks.
FIG. 16A is a graph showing a relationship between a prediction pixel and a prediction coefficient allocated to vertical prediction (mode 0) in vertical/horizontal prediction (mode 10) in 4x4 pixel blocks.
FIG. 16B is a graph showing a relationship between a prediction pixel and a prediction coefficient allocated to horizontal-down prediction (mode 1) in vertical/horizontal prediction (mode 10) in 4x4 pixel blocks.
FIG. 17A is a diagram showing a one-sided Gaussian distribution obtained by modeling reliability of a prediction mode.
FIG. 17B is a diagram showing a one-sided Laplace distribution obtained by modeling reliability of a prediction mode.
FIG. 18 is a diagram showing a table which calculates a Euclidean distance from reliability of a prediction mode.
FIG. 19 is a diagram showing a relationship between a city block distance obtained by modeling reliability of a prediction mode and a weighting factor.
FIG. 20 is a diagram showing a table used in calculation of the weighting factor in FIG. 19.
FIG. 21 is a diagram showing a relationship between a city block distance obtained by modeling reliability of a prediction mode and a weighting factor.
FIG. 22 is a diagram showing a table used in calculation of the weighting factor in FIG. 19.

FIG. 23 is a diagram showing a table used in calculation of a weighting factor.
FIG. 24 is a diagram showing a relationship between a Euclidean distance obtained by modeling reliability of a prediction mode and a weighting factor.
FIG. 25 is a diagram showing a table used in calculation of the weighting factor in FIG. 24.
FIG. 26 is a diagram showing an index indicating a spatial distance obtained by modeling reliability of a prediction mode.
FIG. 27 is a diagram showing a relationship between a spatial distance obtained by modeling reliability of a prediction mode and the reliability.
FIG. 28 is a diagram showing a relationship between a spatial distance obtained by modeling reliability of a prediction mode and a weighting factor.
FIG. 29 is a diagram showing a table used in calculation of the weighting factor in FIG. 28.
FIG. 30 is a flowchart showing a processing procedure of image encoding according to one embodiment.
FIG. 31 is a flowchart showing a partial processing procedure in FIG. 31 in detail.
FIG. 32 is a diagram showing an example of a syntax structure used in an image encoder.
FIG. 33 is a diagram showing an example of a data structure of a macro-block layer syntax.
FIG. 34 is a diagram showing an example of a data structure of a macro-block prediction syntax.
FIG. 35 is a diagram for explaining two prediction modes of 4x4 pixel prediction.
FIG. 36 is a diagram showing a combination of the two prediction modes in FIG. 35.
FIG. 37 is a diagram showing allocation of codes to mode indexes indicating the two prediction modes.
FIG. 38 is a flowchart showing a procedure of encoding mode indexes of prediction modes when a plurality of prediction modes are selected.
FIG. 39 is a diagram showing an example of a data structure of a macro-block prediction syntax.
FIG. 40 is a diagram showing an example of a data structure of a macro-block prediction syntax.
FIG. 41 is a diagram showing a method of deriving a prediction mode.
FIG. 42 is a diagram showing a block position referred when a prediction mode is predicted.
FIG. 43 is a diagram showing an example of a data structure of a macro-block prediction syntax.
FIG. 44 is a diagram showing an example of a data structure of a sequence parameter set syntax.
FIG. 45 is a diagram showing an example of a data structure of a picture parameter set syntax.
FIG. 46 is a diagram showing an example of a data structure of a slice header syntax.
FIG. 47 is a diagram showing an example of a data structure of a macro-block layer syntax.
FIG. 48 is a diagram showing still another example of the macro-block prediction syntax.
FIG. 49 is a block diagram showing details of a prediction signal generator in FIG. 1.
FIG. 50A is a diagram showing a changed prediction order obtained by extrapolation/interpolation block prediction to a block in FIG. 6A.
FIG. 50B is a diagram showing another changed prediction order to the block in FIG. 6A.
FIG. 51A is a diagram showing a changed prediction order obtained by extrapolation/interpolation block prediction to a block in FIG. 7A.
FIG. 51B is a diagram showing another changed prediction order to the block in FIG. 7A.
FIG. 52 is a diagram for explaining a prediction order table used in a prediction order switching unit.
FIG. 53A is a diagram for explaining extrapolation/interpolation block prediction to an 8x8 pixel block.
FIG. 53B is a diagram for explaining extrapolation/interpolation block prediction to 4x4 pixel blocks.
FIG. 54A is a diagram showing a positional relationship between a reference pixel and a prediction pixel in extrapolation block prediction.
FIG. 54B is a diagram showing a relationship between an interpolation block (1) and a reference pixel in 4x4 pixel prediction.
FIG. 54C is a diagram showing a relationship between an interpolation block (2) and a reference pixel in 4x4 pixel prediction.
FIG. 54D is a diagram showing a relationship between an interpolation block (3) and a reference pixel in 4x4 pixel prediction.
FIG. 55A is a diagram for explaining a prediction signal generating method when vertical prediction (mode 0) is selected in extrapolation block prediction.
FIG. 55B is a diagram for explaining a prediction signal generating method when diagonal-down-right prediction (mode 4) is selected in extrapolation block prediction.
FIG. 56 is a diagram showing a prediction mode of interpolation block prediction in a unidirectional predictor.
FIG. 57 is a diagram showing a prediction mode of unidirectional prediction performed in interpolation block prediction in the unidirectional predictor.
FIG. 58A is a diagram showing a selectable prediction mode for an interpolation block (1) in the unidirectional predictor.

FIG. 58B is a diagram showing a selectable prediction mode for an interpolation block (2) in the unidirectional predictor.

FIG. 58C is a diagram showing a selectable prediction mode for an interpolation block (3) in the unidirectional predictor.

FIG. 58D is a diagram showing a selectable prediction mode for an extrapolation block (4) in the unidirectional predictor.

FIG. 59A is a diagram for explaining a prediction signal generating method for the interpolation block (1) in inverse-vertical prediction (mode 9).

FIG. 59B is a diagram for explaining a prediction signal generating method for the interpolation block (2) in the inverse-vertical prediction (mode 9).

FIG. 60A is a diagram for explaining a prediction signal generating method for the interpolation block (1) in inverse-horizontal prediction (mode 10).

FIG. 60B is a diagram for explaining a prediction signal generating method for an interpolation block (3) in the inverse-horizontal prediction (mode 10).

FIG. 61A is a diagram for explaining a prediction signal generating method for the interpolation block (1) in diagonal-upper-left prediction (mode 12).

FIG. 61B is a diagram for explaining a prediction signal generating method for the interpolation block (1) in the diagonal-upper-left prediction (mode 12).

FIG. 61C is a diagram for explaining a prediction signal generating method for the interpolation block (2) in the diagonal-upper-left prediction (mode 12).

FIG. 62 is a diagram showing a name and a mode index of a prediction mode of interpolation block prediction in a bidirectional predictor.

FIG. 63 is a flowchart showing a processing procedure of image encoding according to one embodiment.

FIG. 64 is a diagram showing an example of a data structure of a macro-block prediction syntax.

FIG. 65 is a diagram for explaining a formula for transforming a prediction mode into an encoding index.

FIG. 66 is a diagram for explaining a formula for inversely transforming a decoded index into a prediction mode.

FIG. 67 is a diagram for explaining a table for transforming a prediction mode into an encoding index.

FIG. 68 is a diagram showing a name and a mode index of a prediction mode which can be used in the interpolation blocks (1), (2), and (3) and the extrapolation block (4).

FIG. 69 is a diagram showing an example of a data structure of a macro-block layer syntax.

FIG. 70 is a diagram showing an example of a data structure of a sequence parameter set syntax.

FIG. 71 is a diagram showing an example of a data structure of a picture parameter set syntax.

FIG. 72 is a diagram showing an example of a data structure of a slice header syntax.

FIG. 73 is a diagram showing an example of a data structure of a macro-block layer syntax.

FIG. 74 is a diagram showing still another example of the macro-block prediction syntax.

FIG. 75 is a block diagram showing an image decoding apparatus according to one embodiment.

FIG. 76 is a block diagram showing details of a prediction signal generator in FIG. 75.

FIG. 77 is a block diagram showing details of a bidirectional predictor in FIG. 76.

FIG. 78 is a block diagram showing an image decoding apparatus according to one embodiment.

FIG. 79 is a block diagram showing details of a prediction signal generator in FIG. 75.

FIG. 80A is a diagram showing a name notation of a sub-block in extxapolation/interpolation block prediction.

FIG. 80B is a diagram showing a name notation of a sub-block in extrapolation/interpolation block prediction.

FIG. 81 is a diagram showing a prediction mode set in sequential block prediction.

FIG. 82 is a diagram showing a prediction mode set obtained when 8x8 pixel prediction is performed in extrapolation/interpolation block prediction and a prediction order is given by D → B → C → A.

FIG. 83 is a diagram showing a prediction mode set obtained when 8x8 pixel prediction is performed in extrapolation/interpolation block prediction and a prediction order is given by D → C → B → A.

FIG. 84 is a diagram showing a correspondence relationship between a prediction order of pixel blocks and a prediction mode set.

FIG. 85 is a diagram showing another example of the data structure of the macro-block layer syntax.

FIG. 86A is a diagram showing a procedure of 4x4 pixel prediction.

FIG. 86B is a diagram showing a procedure of the 4x4 pixel prediction.

FIG. 87 is a diagram showing an example of a data structure of a syntax about a prediction residual error signal representing a difference between an encoding prediction mode and a reference prediction mode.

FIG. 88A is a diagram showing a method of deriving a reference prediction mode performed when an encoding target macro-block is in 8×8 pixel block prediction and extrapolation/interpolation block prediction.

FIG. 88B is a diagram showing the method of deriving a reference prediction mode performed when the encoding target macro-block is in the 8x8 pixel block prediction and the extrapolation/interpolation block prediction.

FIG. 89A is a diagram showing the method of deriving a reference prediction mode performed when the encoding target macro-block is in the 8×8 pixel block prediction and the extrapolation/interpolation block prediction.

FIG. 89B is a diagram showing the method of deriving a reference prediction mode performed when the encoding target macro-block is in the 8x8 pixel block prediction and the extrapolation/interpolation block prediction.

FIG. 90A is a diagram showing the method of deriving a reference prediction mode performed when the encoding target macro-block is in the 8x8 pixel block prediction and the extrapolation/interpolation block prediction.

FIG. 90B is a diagram showing the method of deriving a reference prediction mode performed when the encoding target macro-block is in the 8×8 pixel block prediction and the extrapolation/interpolation block prediction.

FIG. 90C is a diagram showing the method of deriving a reference prediction mode performed when the encoding target macro-block is in the 8×8 pixel block prediction and the extrapolation/interpolation block prediction.

FIG. 90D is a diagram showing the method of deriving a reference prediction mode performed when the encoding target macro-block is in the 8x8 pixel block prediction and the extrapolation/interpolation block prediction.

FIG. 91 is a diagram showing the method of deriving a reference prediction mode performed when the encoding target macro-block is in the 8×8 pixel block prediction and the extrapolation/interpolation block prediction.

FIG. 92A is a diagram showing the method of deriving a reference prediction mode performed when the encoding target macro-block is in the 8×8 pixel block prediction and the extrapolation/interpolation block prediction.

FIG. 92B is a diagram showing the method of deriving a reference prediction mode performed when the encoding target macro-block is in the 8x8 pixel block prediction and the extrapolation/interpolation block prediction.

FIG. 92C is a diagram showing the method of deriving a reference prediction mode performed when the encoding target macro-block is in the 8×8 pixel block prediction and the extrapolation/interpolation block prediction.

FIG. 92D is a diagram showing the method of deriving a reference prediction mode performed when the encoding target macro-block is in the 8×8 pixel block prediction and the extrapolation/interpolation block prediction.

FIG. 93 is a diagram showing the method of deriving a reference prediction mode performed when the encoding target macro-block is in the 8×8 pixel block prediction and the extrapolation/interpolation block prediction.

FIG. 94 is a flowchart showing predicting and encoding procedures in a pixel block.

FIG. 95 is a flowchart showing a method of calculating an encoding cost of a prediction mode in FIG. 94.

FIG. 96 is a diagram showing sub-blocks in 4x4 pixel block prediction and a sub-block upper left end pixel position in 8×8 pixel block prediction.

FIG. 97A is a diagram showing a table to derive a relative position of a reference pixel block when both macro-blocks to which an encoding target pixel block and a reference pixel block belong are in extrapolation/interpolation block prediction.

FIG. 97B is a diagram showing a table to derive the relative position of the reference pixel block when both the macro-blocks to which the encoding target pixel block and the reference pixel block belong are in the extrapolation/interpolation block prediction.

FIG. 98A is a diagram showing a table to derive the relative position of the reference pixel block when both the macro-blocks to which the encoding target pixel block and the reference pixel block belong are in the extrapolation/interpolation block prediction.

FIG. 98B is a diagram showing a table to derive the relative position of the reference pixel block when both the macro-blocks to which the encoding target pixel block and the reference pixel block belong are in the extrapolation/interpolation block prediction.

FIG. 98C is a diagram showing a table to derive the relative position of the reference pixel block when both the macro-blocks to which the encoding target pixel block and the reference pixel block belong are in the extrapolation/interpolation block prediction.

FIG. 98D is a diagram showing a table to derive the relative position of the reference pixel block when both the macro-blocks to which the encoding target pixel block and the reference pixel block belong are in the extrapolation/interpolation block prediction.

FIG. 99A is a diagram showing a table to derive the relative position of the reference pixel block when both the macro-blocks to which the encoding target pixel block and the reference pixel block belong are in the extrapolation/interpolation block prediction.

FIG. 99B is a diagram showing a table to derive the relative position of the reference pixel block when both the macro-blocks to which the encoding target pixel block and the reference pixel block belong are in the extrapolation/interpolation block prediction.

FIG. 100A is a diagram showing a table to derive the relative position of the reference pixel block when both the macro-blocks to which the encoding target pixel block and the reference pixel block belong are in the extrapolation/interpolation block prediction.

FIG. 100B is a diagram showing a table to derive the relative position of the reference pixel block when both the macro-blocks to which the encoding target pixel block and the reference pixel block belong are in the extrapolation/interpolation block prediction.

FIG. 100C is a diagram showing a table to derive the relative position of the reference pixel block when both the macro-blocks to which the encoding target pixel block and the reference pixel block belong are in the extrapolation/interpolation block prediction.

FIG. 100D is a diagram showing a table to derive the relative position of the reference pixel block when both the macro-blocks to which the encoding target pixel block and the reference pixel block belong are in the extrapolation/interpolation block prediction.

FIG. 101 is a diagram showing an example of a data structure of a syntax about a prediction residual error signal representing a difference between an encoding prediction mode and a reference prediction mode.

Best Mode for Carrying Out the Invention

Embodiments of the present invention will be described below with reference to the drawings.

<First Embodiment: Image Encoding Apparatus>

As shown in FIG. 1, in an image encoding apparatus according to an embodiment of the invention, an input image signal 120 of a moving image or a still image is input to an image encoder 100. The image encoder 100 has a frame divider 101, a predictor 102, a mode selector 103, an orthogonal transformation/quantization unit 104, an inverse quantization/invexse orthogonal transformation unit 105, an adder 106, a reference image memory 107, and an entropy encoder 108. The image encoding apparatus in FIG. 1 is realized by hardware such as an LSI chip or by executing an image encoding program in a computer.

An encoding controller 110 gives encoding control information 140 to the image encoder 100 to control a whole of an encoding process of the image encoder 100 and properly receives feedback information 150 from the image encoder 100. The encoding control information 140 includes prediction mode index information (described later), block size switching information, prediction order switching information, prediction mode number switching information, quantization parameter information, weight coefficient information, and the like. The quantization parameter information includes a quantization width (quantization step size), a quantization matrix, and the like. The feedback information 150 includes generated coding bits amount information in the image encoder 100 required to determine quantization parameters.

In the image encoder 100, the input image signal 120 is input to the frame divider 101. In the frame divider 101, an encoding target frame of the input image signal 120 is divided into a plurality of pixelblocks to generate a block image signal 121. For example, an encoding target frame in FIG. 2A is divided into a plurality of blocks each having a 16x16 pixel/block size as shown in FIG. 2B. The block shown in FIG. 2B is called a macroblock and is a basic processing unit for encoding. More specifically, encoding is performed in unit of a macroblock.

The block image signal 121 output from the frame divider 101 is subjected to intra-frame prediction by the predictor 102 first. The intra-frame prediction is a scheme which performs prediction closed in a frame as has been known. The predictor 102 uses a coded pixel as a reference pixel to predict an encoding target block, thereby generating a prediction signal 122 in unit of a macroblock.

In the predictor 102, a plurality of prediction modes for intra-frame prediction are prepared, and prediction is performed according to all selectable prediction modes. The prediction mode mentioned here denotes a direction prediction mode in which prediction is performed from an encoded pixel according to a specific direction in a space to generate a prediction signal. The predictor 102 may have a prediction mode which performs intra-prediction of H. 264, i.e., 8×8 pixel prediction in FIG. 3A, 4×4 pixel prediction in FIG. 3B, or 8×8/4×4 pixel prediction in FIG. 3C (8×8 pixel prediction and 4×4 pixel prediction are mixed with each other in a macroblock). In the intra-prediction of H. 264, next prediction cannot be performed without forming a local decoded image in the macroblock. In this case, orthogonal transformation/quantization and inverse quantization/inverse orthogonal transformation may be performed in the predictor 102.

In the 8×8 pixel prediction and the 4x4 pixel prediction, macro-blocks are divided into sub-blocks of 8x8 pixel blocks and 4x4 pixel blocks, respectively. However, the shape (including size) of the sub-block is not particularly limited. For example, the shapes of 16x8 pixels, 8×16 pixels, 8×4 pixels, and 4×8 pixels may be used. Therefore, 8×4 pixel prediction or 2×2 pixel prediction can also be realized by the same framework as described above.

When a block size of the sub-block is reduced, i.e., when the number of divided macroblocks increases, an amount of code used when block size switching information (described later) is encoded increases. However, since intra-frams prediction having higher prediction efficiency can be performed, a residual error is reduced. Therefore, in consideration of a balance of the amount of coding bits for transformation coefficient information (described later) and a local decoding signal, a block size may be selected. The same process as described above may be performed to a pixel region having an arbitrary shape generated by a region dividing method.

In the predictor 102, a prediction residual error signal 123 is generated by subtracting the prediction signal 122 from the prediction signal 122 and the block image signal 121. The prediction residual error signal 123 is input to the orthogonal transformation/quantization unit 104 and the mode selector 103. In the orthogonal transformation/quantization unit 104, orthogonal transformation is performed to the prediction residual error signal 123, and the transformation coefficient obtained by the orthogonal transformation is quantized to generate quantization transformation coefficient information 127.

With respect to the shape of a transformation/quantization block which is a processing unit in the orthogonal transformation/quantization unit 104, shapes of 8×8 pixels, 4×4 pixels, 16×8 pixels, 8×16 pixels, 8×4 pixels, and 4×8 pixels can be selected. Alternatively, different shapes are given to the transformation/quantization blocks in one macroblock. For example, 8x8 pixelblocks and 4×4 pixelblocks may be mixed in a macroblock as shown in FIG. 3C.

In the mode selector 103, on the basis of prediction mode information 124 (Hereafter, prediction mode index information, block size switching information, prediction order switching information, and prediction mode number switching information are called to be prediction mode information generically) such as prediction mode index information, block size switching information, prediction order switching information, and the prediction mode number switching information related to a prediction mode to be input through the prediction residual error signal 123 and the predictor 102, an encoding cost is calculated. On the basis of this, an optimum prediction mode is selected.

More specifically, when the prediction mode information 124 is represented by OH, and a sum of absolute values of prediction residual error signals is represented by SAD, the mode selector 103 selects a prediction mode which gives the minimum value of an encoding cost K calculated by the following equation as an optimum mode.

[Equation 1]

$$K = SAD + \lambda \times OH \qquad (1)$$

where λ denotes a constant which is determined on the basis of a value of a quantization parameter.

As another example of a cost calculation in the mode selector 103, only the prediction mode information OH or only the sum of absolute values SAD of the prediction residual error signals may be used. A value obtained by Hadamard-transforming or approximating the prediction mode information or the prediction residual error signal may be used. A cost function may be formed by using a quantization width and a quantization parameter.

As still another example of the cost calculation, a virtual encoder is prepared, and an amount of code obtained by actually encoding the prediction residual error signal 123 generated in each prediction mode and a square error between a decoded image signal 130 obtained by locally decoding encoded data and a block image signal 121 may be used. In this case, a prediction mode which gives the minimum value of an encoding cost J calculated by the following equation is selected as an optimum mode:

[Equation 2]

$$J = D + \lambda \times R \qquad (2)$$

where D denotes an encoding distortion expressing the square error between the block image signal 121 and the decoded image signal 130. On the other hand, R denotes an amount of code estimated by virtual encoding.

When the encoding cost J in Equation (2) is used, virtual encoding and local decoding (inverse quantization and inverse orthogonal transformation) are necessary in each prediction mode. For this reason, an amount of processing or a circuit scale increases. However, since the cost J reflects an accurate amount of code and accurate encoding distortion, a more optimum prediction mode can be selected. As a result, higher encoding efficiency can be obtained. In Equation (2), the encoding distortion D and the amount of coding bits R are used in calculation of the encoding cost J. However, the encoding cost J may be calculated by using any one of D and R. A cost function may be formed by using a value obtained by approximating D and R.

From the mode selector 103, optimum prediction mode information 125 expressing a selected prediction mode and a prediction signal 126 corresponding to the selected prediction mode are output. The optimum prediction mode information 125 is input to the orthogonal transformation/quantization unit 104 together with the prediction residual error signal 123 from the predictor 102. The orthogonal transformation/quantization unit 104 performs orthogonal transformation, for example, discrete cosine transformation (DCT) to the prediction residual error signal 123 with reference to the optimum prediction mode information 125. As the orthogonal transformation, wavelet transformation, independent component analysis, or the like may be used. In the orthogonal transformation/quantization unit 104, a transformation coefficient obtained by the orthogonal transformation is quantized to generate the quantization transformation coefficient information 127. In this case, a quantization parameter such as a quantization width required for quantization in the orthogonal transformation/quantization unit 104 is designated by the quantization parameter information included in the encoding control information 140 from the encoding controller 110.

The quantization transformation coefficient information 127 is input to the entropy encoder 108 together with information related to prediction such as prediction mode index information 141, block size switching information 142, prediction order switching information 143, prediction mode number switching information 144, and a quantization parameter which are included in the encoding control information 140. The entropy encoder 108 performs entropy encoding such as Huffman encoding, Golomb encoding, or arithmetic encoding to the quantization transformation coefficient information 127 and the information related to prediction to generate encoded data 146. The encoded data 146 is multiplexed by a multiplexer 111 and transmitted through an output buffer 112 as an encoding bit stream 147.

The quantization transformation coefficient information 127 is also input to the inverse quantization/inverse orthogonal transformation unit 105. The inverse quantization/inverse orthogonal transformation unit 105 inversely quantizes the quantization transformation coefficient information 127 according to quantization parameter information from the encoding controller 110 and performs inverse orthogonal transformation such as inverse discrete cosine transformation (IDCT) to a transformation coefficient obtained by the inverse quantization, thereby generating a prediction residual error signal 128 equivalent to the prediction residual error signal 123 output from the predictor 102.

The prediction residual error signal 128 generated by the inverse quantization/inverse orthogonal transformation unit 105 is added to the prediction signal 126 from the mode selector 103 in the adder 106 to generate a local decoding signal 129. The local decoding signal 129 is accumulated in the reference image memory 130. The local decoding signal accumulated in the reference image memory 107 is read as the reference image signal 130 and referred to when the prediction residual error signal 123 is generated by the predictor 102.

An encoding loop (in FIG. 1, predictor 102 → orthogonal transformation/quantization unit 104 → inverse quantization/inverse orthogonal transformation unit 105 → reference image memory 130 → predictor 102) is made when processing to all selectable prediction modes is finished in an encoding target block. When the processing of the encoding loop is finished to a certain encoding target block, the block image signal 121 of the next encoding target block is input to the predictor 102 to perform encoding again.

The encoding controller 110 performs control of entire encoding such as rate control by feedback control of an amount of generated coding bits or quantization parameter control, encoding mode control, and control of the predictor. The image encoding apparatus in FIG. 1 is realized by hardware such as an LSI chip or realized by execution of an image encoding program in a computer.

<First embodiment: About Predictor 102>

The predictor 102 will be described below by using FIG. 4. The predictor 102 has a prediction signal generator 113 which generates a prediction signal and further has an internal mode selector 114, an internal orthogonal transformation/quantization unit 115, an internal inverse quantization/inverse orthogonal transformation unit 116, and an internal reference image memory 118 to perform prediction in units of a plurality of small pixelblocks (called sub-blocks) obtained by further dividing a macroblock.

When the block image signal 121 is input to the predictor 102, the prediction signal 122 obtained by unidirectional prediction (described later) or bidirectional prediction (described later) is generated by the prediction signal generator 113. In this case, prediction mode information including the prediction mode index information 141, the block size switching information 142, the prediction order switching information 143, the prediction mode number switching information 144, and the weight coefficient information 145 is transmitted from the encoding controller 110 to the prediction signal generator 113. The encoding controller 110 transmits a plurality of prediction modes to the prediction signal generator 113 to cause the prediction signal generator 113 to perform prediction in the plurality of prediction modes. The prediction signal generator 113 generates, in addition to the prediction signal 122 obtained by the respective prediction modes, prediction mode information 161 corresponding to the prediction signal 122.

A subtractor 119 subtracts the prediction signal 114 from the block image signal 121 to generate the prediction residual error signal 123. The internal mode selector 114 selects a prediction mode on the basis of the prediction mode information 161 (including the prediction mode index information 141, the block size switching information 142, the prediction order switching information 143, and the prediction mode number switching information 144) transmitted through the prediction signal generator 113 and the prediction residual error signal 123 to output the prediction mode information 124 representing the selected prediction mode.

The prediction residual error signal 123 and the prediction mode information 124 outputted from the internal mode selector 114 are input to the internal orthogonal transformation/quantization unit 115. In the internal orthogonal transformation/quantization unit 115, orthogonal transformation, for example, DCT is performed to the prediction residual error signal 123 with reference to the prediction mode information 124. As the orthogonal transformation, wavelet transformation, independent component analysis, or the like may be used. In the internal orthogonal transformation/quantization unit 115, a transformation coefficient obtained by orthogonal transformation is quantized to generate quantization transformation coefficient information 163. In this case, a quantization parameter such as a quantization width required for quantization in the internal orthogonal transformation/quantization unit 115 is designated by the quantization parameter information included in the encoding control information 140 from the encoding controller 110.

The quantization transformation coefficient information 163 is input to the internal inverse quantization/inverse orthogonal transformation unit 116. The internal inverse quantization/inverse orthogonal transformation unit 116 inversely quantizes the quantization transformation coefficient information 163 according to the quantization parameter information from the encoding controller 110 and performs inverse orthogonal transformation such as IDCT to a transformation coefficient obtained by the inverse quantization, thereby generating a prediction residual error signal 164 equivalent to the prediction residual error signal 123.

The prediction residual error signal 164 generated by the internal inverse quantization/inverse orthogonal transformation unit 116 is added to a prediction signal 162 from the internal mode selector 114 in an adder 117 to generate an internal decoding signal 165. The internal decoding signal 165 is accumulated in the internal reference image memory 118.

A local decoding signal accumulated in the internal reference image memory 118 is read as an internal reference image signal 166 and referred to when a prediction residual error signal is generated by the prediction signal generator 113. Upon completion of prediction in all the sub-blocks in the predictor 102, the prediction signal 122, the prediction residual error signal 123, and the prediction mode information 124 corresponding to the macroblock are output outside the predictor 102.

<First embodiment: About Prediction Signal Generating Unit 113>

The prediction signal generator 113 will be described below with reference to FIG. 5. FIG. 5 shows only a part related to generation of the prediction signal 122 in the prediction signal generator 113.

A block image signal to be input is input to a unidirectional predictor 171 and a bidirectional predictor 172.

The unidirectional predictor 171 and the bidirectional predictor 172 predict sub-blocks with reference to an encoded pixel according to prediction modes selected by the unidirectional predictor 171 and the bidirectional predictor 172 to generate prediction signals corresponding to the sub-blocks.

More specifically, the unidirectional predictor 171 selects, on the basis of the prediction mode index information 141, one prediction mode from a plurality of prepared prediction modes. The unidirectional predictor 171 generates a prediction signal according to the prediction mode thus selected and the block size switching information 142 with reference to a reference image signal 166. The bidirectional predictor 172 selects two prediction modes of the plurality of prepared prediction modes on the basis of the prediction mode index information 141. The bidirectional predictor 172 generates a prediction signal according to the two selected prediction modes, the block size switching information 142, and the weighting factor information 145 with reference to the reference image signal 166. Prediction signals output from the unidirectional predictor 171 and the bidirectional predictor 172 are input to a prediction mode count switching unit 173.

The prediction mode count switching unit 173 is controlled according to prediction mode count switching information 144 to select any one of the prediction signal generated by the unidirectional predictor 171 and the prediction signal generated by the bidirectional predictor 172 to output the selected prediction signal 122. In other words, the prediction mode count switching unit 173 selects the number of usable prediction modes from the plurality of predetermined prediction modes.

An encoding order of sub-blocks will be described below with reference to FIGS. 6A, 6B, 7A, and 7B. FIG. 6A shows an index :blk serving as a reference of a sub-block (8x8 pixel blocks) in a macro-block in 8×8 pixel prediction. Similarly, FIG. 7A shows an index :blk of a sub-block (4×4 pixel block) in a macro-block in 4×4 pixel prediction. In FIG. 6B, the 8x8 pixel blocks obtained by dividing the macro-block by four are ordered to sequentially perform prediction and an encoding process. In FIG. 7B, in consideration of the 8x8 pixel blocks obtained by dividing a macro-block by four, 4x4 pixel blocks obtained by further dividing the 8×8 pixel blocks are ordered to sequentially perform prediction and an encoding process.

The sub-blocks described above are input to the unidirectional predictor 171 or the bidirectional predictor 172 to generate prediction signals corresponding to the sub-blocks. The prediction mode count switching unit 173 outputs a prediction signal obtained by the unidirectional predictor 171 when the prediction mode count switching information 144 indicates a prediction mode count "1". When the prediction mode count switching information 144 indicates a prediction mode count "2", the prediction mode count switching unit 173 outputs a prediction signal obtained by the bidirectional predictor 172. The prediction signal output from the prediction mode count switching unit 173 is extracted as an output from the prediction signal generator 113.

Processes of the unidirectional predictor 171 and the bidirectional predictor 172 will be described below. As described above, the unidirectional predictor 171 and the bidirectional predictor 172 use decoded pixels held in the internal reference image memory 118 shown in FIG. 4 as the reference image signal 166 to predict sub-blocks to be encoded.

(Process of Unidirectional Predicting Unit 171)

As prediction modes in the unidirectional predictor 171, 9 modes, for example, mode 0 to mode 8 are present. As shown in FIG. 8A, the eight modes (mode 0, mode 1, and modes 3 to 8) except for mode 2 have prediction directions (directions in which encoded pixels are referred to) which are shifted at 22.5° intervals in an image space formed by the image encoder 100, and are called direction prediction modes. Mode 2 is a DC prediction mode in the unidirectional predictor 171. FIG. 9 shows names of prediction modes: modes 0 to 8 of sequential block prediction in the unidirectional predictor 171. Mode indexes indicating modes 0 to 8 are given to the names, respectively.

FIG. 8B shows a relationship between prediction pixels and reference pixels in 4×4 pixel prediction. In FIG. 8B, pixels A to M are reference pixels, and pixels a to p are prediction pixels. A concrete predicting method will be described below with reference to FIGS. 8A, 8B, 8C, and 8D.

In the unidirectional predictor 171, when DC prediction of mode 2 is selected, values of the prediction pixels a to p are calculated by the following formula, and a prediction signal is generated.

[Numerical Formula 3]

$$a \sim p = ave(A, B, C, D, I, J, K, L) \quad (3)$$

In this formula, ave (.) means an average (called an average pixel value) of pixel values (luminance) of the reference pixels shown in ().

When some of the reference pixels in () cannot be used, a prediction signal is generated by calculating an average pixel value of only usable reference pixels. When there is no usable reference pixel, a value which is half (128 in case of 8 bits) the maximum luminance of the prediction signal is set as a prediction signal in the prediction signal generator 113.

When a mode other than mode 2 is selected, the unidirectional predictor 171 uses a predicting method which copies the reference pixels to prediction pixels in the prediction directions shown in FIG. 8A. More specifically, a prediction signal generating method used when mode 0 (vertical prediction) is selected is expressed by the following formula:

[Numerical Formula 4]

$$\begin{aligned} a, e, i, m &= A \\ b, f, j, n &= B \\ c, g, k, o &= C \\ d, h, l, p &= D \end{aligned} \quad (4)$$

This mode 0 can be selected only when the reference pixels A to D are used. In mode 0, as shown in FIG. 8C, the reference pixels A to D are directly copied to prediction pixels aligned in a vertical direction to generate a prediction signal.

On the other hand, a prediction signal generating method used when mode 4 (diagonal-down-right prediction) is selected is expressed by the following formula:

[Numerical Formula 5]

$$\begin{aligned} d &= (B+(C<<1)+D+2) >> 2 \\ c, h &= (A+(B<<1)+C+2) >> 2 \\ b, g, l &= (M+(A<<1)+B+2) >> 2 \\ a, f, k, p &= (I+(M<<1)+A+2) >> 2 \\ e, j, o &= (J+(I<<1)+M+2) >> 2 \\ i, n &= (K+(J<<1)+I+2) >> 2 \\ m &= (L+(K<<1)+J+2 >> 2 \end{aligned} \quad (5)$$

Mode 4 can be selected only when the reference pixels A to D and reference pixels I to M can be used. In mode 4, as shown in FIG. 8D, values generated by a 3-tap filter are copied in a 45-degree lower right direction to generate a prediction signal.

With respect to prediction modes other than modes 0, 2, and 4, the same framework as described above is used. More specifically, a prediction signal is generated by a method of copying reference pixels which can be used in a prediction direction to prediction pixels aligned in the prediction direction.

(Process of Bidirectional Predicting Unit 172)

In unidirectional prediction, a prediction signal is generated on the assumption that an image in a block has one spatial directivity. When the image in the block has two or more spatial directivities, the assumption is not satisfied. For this reason, a prediction residual error signal tends to increase in only the unidirectional prediction. For this reason, when the image has two or more spatial directivities, two modes of the 9 prediction modes (including DC prediction) in the unidirectional predictor 171 are simultaneously used in the bidirectional predictor 172 to perform prediction in consideration of a plurality of spatial directivities, so that the prediction residual error signal is suppressed from increasing.

The bidirectional predictor 172 will be described below with reference to FIG. 11. The bidirectional predictor 172 has a first unidirectional predictor 175, a second unidirectional predictor 176, and an weighted average unit 180. The unidirectional predictors 175 and 176 are the same as the unidirectional predictor 171 shown in FIG. 5. Different prediction modes are set to the unidirectional predictors 175 and 176 according to the prediction mode index information 141, and encoding target blocks are predicted by the set prediction modes. More specifically, in the unidirectional predictors 175 and 176, prediction signals 181 and 182 are generated according to the prediction modes and the block size switching information 142 with reference to the reference signal 166.

The prediction signals 181 and 182 generated by the unidirectional predictors 175 and 176 are input to the weighted average unit 180. In the weighted average unit 180, for example, weighted averages of the prediction signals 181 and 182 are calculated in units of pixels according to the weighting factor information 145 given by the encoding controller 110 to thereby generate the prediction signal 122. The first unidirectional predictor 175 can be omitted by performing the same process as that in the unidirectional predictor 171 shown in FIG. 5. In this case, the prediction signal 181 output from the unidirectional predictor 171 and the prediction signal 182 output from the second unidirectional predictor 176 are input to the weighted average unit 180.

FIG. 10 shows a mode index corresponding to a name of a prediction mode in the bidirectional predictor 172. In FIG. 10, a prediction mode using two modes is present. For example, a name and a mode index of a prediction mode using vertical prediction (mode 0) and horizontal prediction (mode 1) are described as "vertical/horizontal prediction" and "mode 01", respectively. For example, a name and a mode index of a prediction mode using vertical prediction (mode 0) and DC prediction (mode 2) are described as "vertical/DC prediction" and "mode 02", respectively.

As an example, a prediction signal generating method obtained by vertical/horizontal prediction using vertical prediction (mode 0) and horizontal prediction (mode 1) will be described below. FIG. 12A shows a concept of vertical/horizontal prediction (mode 01) in 4x4 pixel prediction. A relationship between a prediction pixel and a reference pixel in the 4x4 pixel prediction is the same as that in FIG. 8B. For example, a prediction pixel a uses, as a prediction signal, a weighted average pixel value between a pixel A referred to in vertical prediction and a pixel I referred to in horizontal prediction. At a prediction pixel b, a weighted average pixel value between a reference pixel B in vertical prediction and a reference pixel I in diagonal-down-right prediction is set as a prediction signal. With respect to other prediction pixels, prediction signals are generated by the same method as described above.

More specifically, in vertical/horizontal prediction (mode 01), a prediction signal is calculated by using the following formula.

[Numerical Formula 6]

$$X(01,n) = \omega_0(n)^{*}X(0,n)+\omega_1(n)^{*}X(1,n) \qquad (6)$$

In this case, indexes (prediction pixel positions) corresponding to the prediction pixels a to p shown in FIG. 8B. X(0,n) and X(1,n) denote prediction signals generated by vertical prediction and horizontal prediction which are unidirectional predictions at prediction pixel positions n. $\omega_0$ (n) and $\omega_1$ (n) denote weighting factors corresponding to the prediction pixel positions n in mode 0 and mode 1, respectively. Concrete methods of generating the prediction signals X(0,n) and X(1,n) are the same as the methods expressed by formula (4) and formula (5), and a description thereof will be omitted.

On the other hand, in the vertical/DC prediction (mode 02), a prediction signal X(02,n) is calculated by using the following formula:

[Numerical Formula 7]

$$X(02,n) = \omega_0(n)^{*}X(0,n) + \omega_2(n)^{*}X(2,n) \qquad (7)$$

In the vertical/diagonal-down-right prediction (mode 04), a prediction signal X(04,n) is calculated by using the following formula:

[Numerical Formula 8]

$$X(04,n) = \omega_0(n)^*X(0,n) + \omega_4(n)^*X(4,n) \quad (8)$$

FIG. 12B shows a concept of a predicting method in mode 04.

Also in a multidirectional prediction other than mode 01 and mode 02, a prediction signal can be calculated as described above. The multidirectional prediction described above is expressed by the following general formula.

[Numerical Formula 9]

$$X(UV,n) = \omega_U(n)^*X(U,n) + \omega_V(n)^*X(V,n) \quad (9)$$

In this formula, reference symbols X(U,n) and X(V,n) denote prediction modes "U" and "V" of unidirectional predictions, respectively, and reference symbol X(UV,n) denotes a prediction signal of a prediction mode "UV" of a bidirectional prediction. Reference symbols $\omega_U$ (n) and $\omega_V$ (n) denote weighting factors corresponding to prediction pixel positions n in the prediction mode "U" and the prediction mode "V", respectively, and satisfy a condition given by the following formula:

[Numerical Formula 10]

$$\omega_U(n) + \omega_V(n) = 1 \quad (10)$$

Methods of setting weighting factors in prediction modes used in calculation of a weighted average in the weighted average unit 180 will be described below. The weighting factor is set by giving the weighting factor information 145 from, for example, the encoding controller 110 to the weighted average unit 180 in the bidirectional predictor 172 as described above. More specifically, in the embodiment, the encoding controller 110 has a function of a weighting factor setting unit which calculates and sets a weighting factor. The weighting factor setting unit may also be arranged at a portion except for the encoding controller 110, for example, in the bidirectional predictor 172 in FIG. 11. Furthermore, the weighting factor setting unit may be realized by a table given by a ROM.

In general, when a spatial distance between a prediction pixel and a reference pixel increases, prediction accuracy of a prediction pixel becomes deteriorated. On the other hand, since a prediction pixel having a short spatial distance to a reference pixel is highly correlative to the reference pixel, high prediction accuracy can be easily obtained. Therefore, a prediction residual error signal corresponding to a prediction pixel having a long spatial distance to a reference pixel increases compared with a prediction residual error signal corresponding to a prediction pixel having a short spatial distance. For this reason, weighting factors are switched in units of pixels in consideration of prediction directions of prediction modes and spatial distances between reference pixels and prediction pixels.

A concrete method of deriving a weighting factor will be described below. Reliabilities obtained in consideration of spatial distances between prediction pixels and reference pixels in all the prediction modes, more specifically, reliabilities of prediction signals corresponding to prediction pixels and obtained in the prediction modes are set. The reliability is expressed by an inverse number of a Euclidean distance between a reference pixel and a prediction pixel used in a corresponding prediction mode. In the vertical prediction (mode 0), since prediction pixels a, e, i, and m copy the value of the reference pixel A as shown in the formula (4), reliabilities are 1, 1/2, 1/3, and 1/4 which are inverse numbers of Euclidean distances between the reference pixel A and the prediction pixels a, e, i, and m. The reliabilities of the vertical prediction (mode 0) are expressed by the following formulas:

[Numerical Formula 11]

$$\begin{aligned} &a, b, c, d = 1 \\ &e, f, g, h = 1/2 \\ &i, j, k, l = 1/3 \\ &m, n, o, p = 1/4 \end{aligned} \quad (11)$$

FIG. 14A shows a relationship between a reference pixel and a corresponding Euclidean distance in mode 0, and FIG. 15A shows a relationship between a prediction pixel and reliability in mode 0. In this case, relationships of the prediction pixels a to p at a pixel position (i, j) in FIG. 15A are shown in FIG. 13.

Reliabilities in a horizontal prediction mode (mode 1) are expressed as follows.

[Numerical Formula 12]

$$\begin{aligned} a, e, i, m &= 1 \\ b, f, j, n &= 1/2 \\ c, g, k, o &= 1/3 \\ d, h, l, p &= 1/4 \end{aligned} \qquad (12)$$

FIG. 14B shows a relationship between a reference pixel and a corresponding Euclidean distance in mode 1, and FIG. 15B shows a relationship between a pixel position and reliability in mode 1.

Reliabilities of the diagonal-down-right prediction (mode 4) are expressed as follows:

[Numerical Formula 13]

$$\begin{aligned} a, b, c, d, e, i, m &= 1/\sqrt{2} \\ f, g, h, j, n &= 1/2\sqrt{2} \\ k, l, o &= 1/3\sqrt{2} \\ p &= 1/4\sqrt{2} \end{aligned} \qquad (13)$$

In mode 4, a value generated by a 3-tap filter as expressed by the formula (5) is copied as a prediction signal. Therefore, three pixels are present as reference pixels. In the embodiment, as shown in FIG. 14C, a center pixel of the three pixels to be used is set as a representative of the reference pixels to calculate a Euclidean distance. FIG. 15C shows a relationship between a pixel position and reliability in mode 4.

Reliabilities in horizontal-down prediction (mode 6) are expressed as follows:

[Numerical Formula 14]

$$\begin{aligned} a, e, i, m &= \sqrt{5}/2 \\ b, f, j, n &= \sqrt{5} \\ c, g, k, o &= 3\sqrt{5}/2 \\ d, h, l, p &= 2\sqrt{5} \end{aligned} \qquad (14)$$

In mode 6, with respect to pixels of a, e, i, m, c, g, k, and o, Euclidean distances of prediction pixels are calculated from a virtually positioned reference pixel according to a prediction angle (FIG. 14D). For example, with respect to the pixels a and g, a virtual reference pixel is arranged at an intermediate position between the reference pixels M and I. FIG. 15D shows a relationship between a pixel position and reliability in mode 6.

Also in another prediction mode, reliability of a prediction signal of each prediction pixel is expressed by an inverse number of a Euclidean distance between the prediction pixel and a reference pixel used in prediction, and generalized by the following formula:

[Numerical Formula 15]

$$\rho(n) = A \cdot 1/\Delta L \qquad (15)$$

where $\Delta L = \sqrt{\Delta x^2 + \Delta y^2}$

In this formula, reference symbol $\rho(n)$ denotes reliability at a prediction pixel position n, and reference symbols $\Delta x$ and $\Delta y$ are distances between prediction pixels and reference pixels in a horizontal direction and a vertical direction. Reference symbol A denotes a constant ($A > 0$).

In bidirectional prediction, a value which has a sum of reliabilities of two prediction modes to the same prediction pixel as a denominator and has reliability of each prediction mode as a numerator is used as a weighting factor for a weighted average. For example, in vertical/horizontal prediction (mode 01) which performs bidirectional prediction by vertical prediction (mode 0) and horizontal prediction (mode 1), a weighting factor in the prediction pixel a is expressed by the following formula:

[Numerical Formula 16]

Weighting factor of mode 0: 1/2

Weighting factor of mode 1: 1/2 (16)

Therefore, a prediction signal (prediction value) to the pixel a is expressed by the following formula:

[Numerical Formula 17]

$$a = 1/2^{*}X(0,0) + 1/2^{*}X(1,0) \quad (17)$$

On the other hand, a weighting factor in the prediction pixel b is expressed by the following formula:

[Numerical Formula 18]

Weighting factor of mode 00: 2/3

Weighting factor of mode 10: 1/3 (18)

Therefore, the prediction signal to the prediction pixel a is expressed by the following formula:

[Numerical Formula 19]

$$b = 2/3^{*}X(0,1) + 1/3^{*}X(1,1) \quad (19)$$

Similarly, prediction signals to the other prediction pixels c to p are expressed by the following formula:

[Numerical Formula 20]

$$c = 3/4^{*}X(0,2) + 1/4^{*}X(1,2)$$
$$d = 4/5^{*}X(0,3) + 1/5^{*}X(1,3)$$
$$e = 1/3^{*}X(0,4) + 2/3^{*}X(1,4)$$
$$f = 1/2^{*}X(0,5) + 1/2^{*}X(1,5)$$
$$g = 3/5^{*}X(0,6) + 2/5^{*}X(1,6)$$
$$h = 2/3^{*}X(0,7) + 1/3^{*}X(1,7)$$
$$I = 1/4^{*}X(0,8) + 4/3^{*}X(1,8)$$
$$j = 2/5^{*}X(0,9) + 3/5^{*}X(1,9)$$
$$k = 1/2^{*}X(0,10) + 1/2^{*}X(1,10)$$
$$l = 4/7^{*}X(0,11) + 3/7^{*}X(1,11)$$
$$m = 1/5^{*}X(0,12) + 4/5^{*}X(1,12)$$
$$n = 1/3^{*}X(0,13) + 2/3^{*}X(1,13)$$
$$o = 3/7^{*}X(0,14) + 4/7^{*}X(1,14)$$
$$p = 1/2^{*}X(0,15) + 1/2^{*}X(1,15) \quad (20)$$

FIGS. 16A and 16B show weighting factors at pixel positions in mode 0 and mode 1, respectively. A weighting factor about each prediction mode is generalized by the following formula:

[Numerical Formula 21]

$$\omega_U = \frac{\rho(U,n)}{\rho(U,n)+\rho(V,n)}$$

$$\omega_V(n) = \frac{\rho(V,n)}{\rho(U,n)+\rho(V,n)} \quad (21)$$

In this formula, reference symbol p(U,n) denotes reliability of a prediction signal at a prediction pixel position n in prediction mode U, and reference symbol p(V,n) denotes reliability of a prediction signal at the prediction pixel position n in prediction mode V. Therefore, a final prediction signal at the prediction pixel position n is expressed by the following formula instead of formula (9).

[Numerical Formula 22]

$$X(UV,n) = \frac{\rho(U,n)}{\rho(U,n)+\rho(V,n)} * X(U,n) + \frac{\rho(V,n)}{\rho(U,n)+\rho(V,n)} * X(V,n) \quad (22)$$

As another embodiment, a weighting factor may be set to 0 or a positive integer, and a sum of weighting factors is set to a power of 2 (exponent is expressed as N). In this manner, although an arithmetic error caused by rounding occurs, a prediction signal can be easily calculated by only integer calculation. The bidirectional prediction used in this case is expressed by the following general formula:

[Numerical Formula 23]

$$X(UV,n) = \{\omega_U(n)*X(U,n) + \omega_V(n)*X(V,n) + OFFSET\} >> N \quad (23)$$

where, $\omega_U(n)$ and $\omega_V(n)$ are integer numbers, and OFFSET is an offset value used when the prediction signals are calculated and expressed by the following formula:

[Numerical Formula 24]

$$OFFSET = 2^{(N-1)} \quad (24)$$

The weighting factor satisfies the following condition:

[Numerical Formula 25]

$$\omega_1(n) + \omega_2(n) = 2^N \quad (25)$$

The following formula is used to round the weighting factors $\omega_U(n)$ and $\omega_V(n)$.

[Numerical Formula 26]

$$\omega_U(n) = \left\lfloor M * \frac{\rho(U,n)}{\rho(U,n)+\rho(V,n)} + 0.5 \right\rfloor$$

$$\omega_V(n) = \left\lfloor M * \frac{\rho(V,n)}{\rho(U,n)+\rho(V,n)} + 0.5 \right\rfloor = M-\omega_U(n)$$

$$M = 2^N \tag{26}$$

where $\lfloor x \rfloor$ is a maximum integer which does not exceed a real number x.

As an example, prediction signals of prediction pixels a to p in vertical/horizontal prediction (mode 01) when N = 6 are expressed by the following formula instead of formula (17), formula (19), and formula (20).

[Numerical Formula 27]

```
a = (32*X(00,0) + 32*X(01,0) + 32) >> 6
b = (37*X(00,1) + 27*X(01,1) + 32) >> 6
c = (43*X(00,2) + 21*X(01,2) + 32) >> 6
d = (51*X(00,3) + 13*X(01,3) + 32) >> 6
e = (27*X(00,4) + 37*X(01,4) + 32) >> 6
f = (32*X(00,5) + 32*X(01,5) + 32) >> 6
g = (38*X(00,6) + 26*X(01,6) + 32) >> 6
h = (48*X(00,7) + 16*X(01,7) + 32) >> 6
I = (21*X(00,8) + 43*X(01,8) + 32) >> 6
j = (26*X(00,9) + 38*X(01,9) + 32) >> 6
k = (32*X(00,10) + 32*X(01,10) + 32) >> 6
l = (43*X(00,11) + 21*X(01,11) + 32) >> 6
m = (13*X(00,12) + 51*X(01,12) + 32) >> 6
n = (16*X(00,13) + 48*X(01,13) + 32) >> 6
o = (21*X(00,14) + 43*X(01,14) + 32) >> 6
p = (32*X(00,15) + 32*X(01,15) + 32) >> 6      (27)
```

In this embodiment, two prediction modes are selected to one prediction pixel to generate a prediction signal. However, as another embodiment, three or more prediction modes may be selected to generate a prediction signal. In this case, a ratio of inverse numbers of spatial distances between reference pixels and prediction pixels may be set as a weighting factor.

In this case, an inverse number of a Euclidean distance between a reference pixel and a prediction pixel used by a prediction mode is used as reliability. However, as another example, reliability may be set by using a distribution model using the Euclidean distance as a variable. The distribution model uses at least one of a linear model, an M-order function ($M \geq 1$), a nonlinear function such as a one-sided Laplace distribution or a one-sided Gaussian distribution, and a fixed value which is independent of a distance to a reference pixel is used. When the one-sided Gaussian distribution is used as a model, reliability is expressed by the following formula:

[Numerical Formula 28]

$$\rho(n) = B \times \exp\left(-\frac{\Delta L^2}{2\sigma^2}\right) \tag{28}$$

where, $\Delta L = \sqrt{\Delta x^2 + \Delta y^2}$

In this formula, reference symbol ρ(n) denotes reliability of a prediction signal at the prediction pixel position n, reference symbol $\sigma^2$ denotes a variance, and reference symbol B denotes a constant (B > 0). An example of a weighting factor (B = 1) obtained when the one-sided Gaussian distribution is used is shown in FIG. 17A.

When the one-sided Laplace distribution is used as a model, reliability is expressed by the following formula.

[Numerical Formula 29]

$$\rho(n) = C \times \exp\left(-\frac{\Delta L}{\sigma}\right) \qquad (29)$$

where, $\Delta L = \sqrt{\Delta x^2 + \Delta y^2}$

In this formula, reference numeral σ denotes a standard deviation, and reference symbol C denotes a constant (C > 0).

An example of a weighting factor (C = 1) obtained when the one-sided Laplace distribution is used is shown in FIG. 17B. As a model of reliability, an isotropic correlation model obtained by modeling a self-correlation function, an elliptic correlation model, or a generalized Gaussian model obtained by generalizing a Laplace distribution or a Gaussian distribution may be used.

As another example, a table obtained by modeling a relationship between a Euclidean distance between a reference pixel and a prediction pixel and reliability in advance is held, and a weighting factor can also be calculated from the table. Formation of the table will be described below with reference to FIG. 18. FIG. 18 shows a table of ρ' (n, ΔL) obtained by rounding the Euclidean distance ΔL and reliabilities represented by models of formulas (15), (28), and (29). In this table, the reliabilities are rounded such that A, B, and C in formulas (15), (28), and (29) are set to 64. More specifically, the reliabilities are calculated by the following equations:

[Numerical Formula 30]

$$\rho'(n, \Delta L) = \left\lfloor A \times \frac{1}{\Delta L} + 0.5 \right\rfloor \qquad (30)$$

[Numerical Formula 31]

$$\rho'(n, \Delta L) = \left\lfloor B \times \exp\left(-\frac{\Delta L^2}{2\sigma^2}\right) + 0.5 \right\rfloor \qquad (31)$$

$$\sigma = 2.5$$

[Numerical Formula 32]

$$\rho'(n, \Delta L) = \left\lfloor C \cdot \exp\left(-\frac{\Delta L}{\sigma}\right) + 0.5 \right\rfloor \qquad (32)$$

$$\sigma = 5.0$$

As shown in FIG. 18, a Euclidean distance which can be actually set changes depending on prediction modes. In 4x4 pixel prediction, when a prediction angle is a constant multiple of 90° as in mode 0 or mode 1 shown in FIG. 8A, the Euclidean distance is an integer. When a prediction angle is (constant multiple of 90° + 45°) as in mode 3 or mode 4, the Euclidean distance is a multiple of √2. When a prediction angle is (constant multiple of 90° + 22.5°) as in mode 5, mode 6, mode 7, or mode 8, the Euclidean distance is a multiple of √5/2.

When a weighting factor is calculated from the table shown in FIG. 18, calculation of the following formula is performed based on reliabilities corresponding to Euclidean distances of two prediction modes "U" and "V" used in bidirectional prediction.

[Numerical Formula 33]

$$\omega_V(n) = \left\lfloor M * \frac{\rho'(n, \Delta L_V)}{\rho'(n, \Delta L_U) + \rho'(n, \Delta L_V)} + 0.5 \right\rfloor = M - \omega_U(n) \quad (33)$$

In this formula, reference symbol $\rho'(n,\Delta L_U)$ denotes a weighting coefficient to a Euclidean distance between a prediction pixel at a prediction pixel position n and a reference pixel in the prediction mode "U", and reference symbol $\rho'(n,\Delta L_V)$ denotes a weighting coefficient to a Euclidean distance between a prediction pixel at a prediction pixel position n and a reference pixel in the prediction mode "V". When $\omega_U(n)$ and $\omega_V(n)$ are assigned to formula (23), a prediction signal obtained by bidirectional prediction is generated. Reference symbols A, B, and C and reference symbol $\sigma$ shown in formula (31) and formula (32) may express other values.

Furthermore, a process expressed by formula (33) is tabled and held, and a weighting factor may be calculated by a table lookup method. FIG. 19 shows a relationship between city block distances $\Delta L_U$ and $\Delta L_V$ (set to values ranging from 2 to 8) obtained when reliability in 4x4 pixel prediction is modeled by a Laplace distribution in formula (32) and weighting factors $\omega_U$ and $\omega_V$ expressed in formula (23) (note that C = 256). In this case, the weighting factors $\omega_U$ and $\omega_V$ are calculated by using a table shown in FIG. 20 according to the following formula:

[Numerical Formula 34]

$$\omega_U = \mathrm{dist2weight}[\Delta L_U - 2][\Delta L_V - 2]$$
$$\omega_V = C - \omega_U \quad (34)$$

FIG. 21 shows a relationship between the city block distances $\Delta L_U$ and $\Delta L_V$ which are changed such that a standard deviation in formula (32) is set to 1.0 and the weighting factors $\omega_U$ and $\omega_V$ expressed in formula (23). In this case, the weighting factors $\omega_U$ and $\omega_V$ are calculated by using a table dist2weight shown in FIG. 22 according to the following formula. Furthermore, also in 8x8 pixel prediction, as in the 4x4 pixel prediction, a table is created. FIG. 23 shows a table dist2weight8x8 modeled by Laplace distribution (standard deviation = 3.0). The weighting factors $\omega_U$ and $\omega_V$ are calculated by using a table shown in FIG. 23 according to the following formula:

[Numerical Formula 35]

$$\omega_U = \mathrm{dist2weight8x8}[\Delta L_U - 2][\Delta L_V - 2] \quad (35)$$

When city block distances $\Delta L_U$ and $\Delta L_V$ are expressed by Euclidean distances, as shown in FIG. 18, in consideration of spatial distances $\sqrt{2}$ and $\sqrt{5}$, a table (dist2weight') is created. More specifically, under the same condition (Laplace distribution) as that in formula (32), the relationship between the city block distances $\Delta L_U$ and $\Delta L_V$ and the weighting factors $\omega_U$ and $\omega_V$ is shown in FIG. 24, and the weighting factors $\omega_U$ and $\omega_V$ are calculated from a table dist2weight' as shown in FIG. 25 as follows:

[Numerical Formula 36]

$$\omega_U = \mathrm{dist2weight'}[idx_u][idx_v]$$
$$\omega_V = C - \omega_U \quad (36)$$

Reference symbols idx u and idx_v are indexes of spatial distances. More specifically, the indexes are transformed according to FIG. 26.

With respect to the tables dist2weight and dist2weight8x8 shown in FIGS. 20 and 22, the spatial distances may be quantized or thinned to reduce the capacity of a memory which holds the tables.

In the embodiment, a Euclidean distance is used as a spatial distance between a reference pixel and a prediction pixel. However, as another embodiment, a Minkowski distance obtained by generalizing a city block distance or a spatial distance may be used as the spatial distance between the reference pixel and the prediction pixel. A spatial distance between a reference pixel and a prediction pixel when the city block distance is used is expressed by the following formula:

[Numerical formula 37]

$$\Delta L = \Delta x + \Delta y \tag{37}$$

A spatial distance between a reference pixel and a prediction pixel when the Minkowski distance is used is expressed by the following formula:

[Numerical Formula 38]

$$\Delta L = \sqrt[k]{\Delta x^k + \Delta y^k} \tag{38}$$

In this formula, the ΔL is equivalent to a city block distance when k = 1 and is equivalent to a Euclidean distance when k = 2.

The reliability ρ(n) shown in formula (29) may be replaced as follows:

[Numerical Formula 39]

$$\rho(n) = \rho_X(n) \cdot \rho_Y(n) \tag{39}$$

In this formula, reference symbols $\rho_X(n)$ and $\rho_Y(n)$ denote reliability component about a vertical direction and reliability component about a horizontal direction, respectively. A table in which different model distributions or preset reliabilities are described can be applied. More specifically, the reliability components $\rho_X(n)$ and $\rho_Y(n)$ are expressed by the following formula:

[Numerical Formula 40]

$$\rho_X(n) = B \times \exp\left(-\frac{\Delta L_X}{\sigma_X}\right)$$
$$\rho_Y(n) = B \times \exp\left(-\frac{\Delta L_Y}{\sigma_Y}\right) \tag{40}$$

In this formula, reference symbols $\sigma_X$ and $\sigma_Y$ denote standard deviations used in the reliabilities about the vertical direction and the horizontal direction. Reference symbols $\Delta L_X$ and $\Delta L_Y$ denote a horizontal component (horizontal distance component) and a vertical component (vertical distance component) of a distance between an encoding target pixel and a reference pixel. More specifically, a weighting factor setting unit included in the encoding controller 110 calculates the reliability components $\rho_X(n)$ and $\rho_Y(n)$ of the distance components $\Delta L_X$ and $\Delta L_Y$ according to evaluation rules of the distance components, and the reliability components $\rho_X(n)$ and $\rho_Y(n)$ are multiplied as described in formula (39) to synthesize reliability ρ(n).

[Numerical Formula 41]

$$\rho(n) = B \times \exp\left(-\left(\frac{\Delta L_X}{\sigma_X} + \frac{\Delta L_Y}{\sigma_Y}\right)\right) \tag{41}$$

In this formula, when reference symbols $\Delta L_X$ and $\Delta L_Y$ denote city block distances, the following formula is satisfied:

[Numerical Formula 42]

$$\Delta L = \Delta L_X + \Delta L_Y \tag{42}$$

When the reference symbols $\Delta L_X$ and $\Delta L_Y$ denote Euclidean distances, the following formula is satisfied:

[Numerical Formula 43]

$$\Delta L = \sqrt{\Delta L_X{}^2 + \Delta L_Y{}^2} \quad (43)$$

When the modeled prediction reliability is generalized, the following formula is obtained:

[Numerical Formula 44]

$$\rho(n) = B^{2} \cdot \alpha^{(a \cdot \Delta LX + b \cdot \Delta LY)} \quad (44)$$

Note that reference symbol $\alpha$ denotes a base, and reference symbols a and b denote weights to the distances $\Delta L_X$ and $\Delta L_Y$, respectively.

When prediction reliabilities are calculated by formulas (39), (40-1), (40-2), and (41), 1 is subtracted from the values $\Delta L_X$ and $\Delta L_Y$ each to reset the values $\Delta L_X$ and $\Delta L_Y$ such that maximum values are set as the prediction reliabilities (when $\Delta L_X$ and $\Delta L_Y$ = 0, the reliabilities are B which is maximum) as described below. On the basis of the values $\Delta L_X$ and $\Delta L_Y$, the reliabilities may be calculated.

[Numerical Formula 45]

$$\Delta L_X \leftarrow \Delta L_X - 1$$
$$\Delta L_Y \leftarrow \Delta L_Y - 1 \quad (45)$$

As another example, as $\rho_X(n)$ and $\rho_Y(n)$, a preset table or a model distributed system such as a Laplace distribution, a binomial distribution, a Gaussian distribution, a Cauchy distribution, or an exponential distribution may be used. A reliability also calculated by a combination of the Laplace distribution and the Gaussian distribution is described in the following formula:

[Numerical Formula 46]

$$\rho(n) = B \times \exp\left(-\frac{\Delta L_X}{\sigma_X}\right) \times \exp\left(-\frac{\Delta L_Y^2}{\sigma_Y^2}\right) \quad (46)$$

As in formulas (30) to (32), reliabilities are held such that relationships between vertical components and horizontal components of distances and the reliabilities $\Delta L_X$ and $\Delta L_Y$ are tabled, and weighting factors can also be calculated from the table. In formula (3), reliabilities between $\Delta L_X$ and $\Delta L_Y$ obtained when $\sigma_V$ = 3.0 and $\sigma_H$ = 1.5, and B = 256 are shown in FIG. 27.

Furthermore, as in formula (34), the processes of formula (33) may be tabled and held, and weighting factors may be calculated by a table lookup method. A table dist2weight_oval of weighting factors under the same conditions as those in FIG. 27 is shown in FIGS. 28 and 29.

When a vertical component and a horizontal component of a distance $\Delta L_U$ in the mode U used in bidirectional prediction are represented by $\Delta L_{U,X}$ and $\Delta L_{U,Y}$, respectively, and when a vertical component and a horizontal component of a distance $\Delta L_V$ in the mode v are represented by $\Delta L_{V,X}$ and $\Delta L_{V,Y}$, the weighting factors can be calculated by the following formula. In this example, it is assumed that $\Delta L_{U,X}$, $\Delta L_{U,Y}$, $\Delta L_{V,X}$, and $\Delta L_{V,Y}$ are set to values ranging from 0 to 3 according to formula (46).

[Numerical Formula 47]

$$\omega_U = \text{dist2weight_oval}[\Delta L_{U,Y} \ll 2) + \Delta L_{U,X}]$$
$$\times [(\Delta L_{V,Y} \ll 2) + [\Delta L_{V,X}]$$
$$\omega_V = B - \omega_U \quad (47)$$

As in 8x8 pixel prediction, the relationships are tabled and held to make it possible to calculate weighting factors.

In the embodiment, reliability of one type is applied to a unit of a pixel block. However, as another embodiment, a plurality of reliability candidates are prepared in units of sequences, pictures, slices, macro-blocks, or sub-blocks, and the reliability candidates may be switched in these units. For example, formula (15), formula (28), and formula (29) may be applied as reliability candidates to encoding blocks, respectively, and reliability candidate which has a minimum encoding cost given by formula (1) or (2) may be applied as a final reliability.

As another embodiment, one prediction of the bidirectional prediction may be an intra-prediction, and the other may be an inter-prediction. In this case, by transformation performed to correct a temporal distance into a spatial distance, the reliability as described above can be determined. More specifically, the transformation is performed by the following formula:

[Numerical Formula 48]

$$\Delta L = \alpha \cdot \Delta L_t + \beta \qquad (48)$$

In this case, reference symbol $\Delta L_t$ denotes a temporal distance between a reference pixel and a prediction pixel, and reference symbols $\alpha$ and $\beta$ denote constants.

As another example, a time-space distance may be defined, which may replace the Euclidean distance or the city block distance. More specifically, the time-space distance is defined by the following formula:

[Numerical Formula 49]

$$\Delta L_{st} = \sqrt[k]{\alpha \times \Delta L^k + \beta \times \Delta L^k_t} \qquad (49)$$

In this formula, reference symbol $\Delta L_{st}$ denotes a time-space distance, and reference symbol k denotes a constant.

In this embodiment, the bidirectional prediction is expressed as formula (9), and a constant term may be added. In this case, formula (9) is changed as follows:

[Numerical Formula 50]

$$X(UV,n) = \omega_1(n)^* X(U,n) + \omega_2(i,j)^* X(V,n) + Const \qquad (50)$$

Reference symbol Const denotes a constant term. The constant term Const is set by a difference between average values of reference pixels and encoding target pixel blocks. Even though spatial directivities of textures of the reference pixels and the encoding target blocks are correlated to each other, when the averages are different from each other due to gradation or the like, a prediction residual error can be suppressed from increasing. When one prediction of the bidirectional prediction is an intra-prediction, and the other prediction is an inter-prediction, an average luminance of a reference picture referred to in the inter-prediction and Const to correct the average luminance of the picture may be set.

A weighting factor of each combination of prediction modes calculated from the reliability may be calculated in advance, and the weighting factors may be tabled by a ROM. In the embodiment, a weighting factor of one type is applied to each unit of a pixel block. However, as another embodiment, the plurality of weighting factor candidates are prepared in units of sequences, pictures, slices, macro-blocks, or sub-blocks, and the plurality of weighting factor candidates may be switched in these units. For example, the plurality of reliability candidates may be applied to encoding blocks, respectively, and reliability candidate which has a minimum encoding cost given by formula (1) or (2) may be applied as a final reliability.

In this manner, according to the embodiment, when the prediction signal generator 113 including the weighted average unit 180 is provided, weighting factors can be implicitly set in units of pixels. Therefore, an appropriate weighted average is calculated without increasing overhead information to make it possible to generate a prediction signal. As a result, a prediction residual error considerably reduces, and encoding efficiency is improved.

(First Embodiment: Processing Procedure of Image Encoding)

A processing procedure of the image encoder 100 will be described below with reference to FIG. 30. When an input image signal 120 of one frame is input to the image encoder 100 (step S101), an encoding target frame of the input image signal 120 is divided by the frame divider 101 into a plurality of pixel blocks (macro-blocks) to generate a block image signal 121. Encoding to the block image signal 121 is started (step S102). The block image signal 121 is input to the predictor 102.

In the predictor 102, the prediction mode count switching information 144 determines whether unidirectional prediction is performed to sub-blocks (step S103). When the unidirectional prediction is performed (the result in S103 is YES), the unidirectional predictor 171 performs prediction (step S104). When the unidirectional prediction is not performed (the result in S103 is NO), the bidirectional predictor 172 performs prediction (step S105).

Upon completion of the prediction in step S104 or S105, total costs (1) or (2) in macro-blocks are calculated from formula (1) or (2) (step S106 or S107). The total costs calculated in step S106 or S107 are compared with each other to determine a predicting method (step S108). The orthogonal transforming/quantizing unit 104 and the entropy encoder 108 perform encoding by the predicting method determined as described above to output the encoded data 146 (step S109).

At this time, inverse quantization and inverse orthogonal transformation are performed to the quantization transformation coefficient information 127 by the inverse quantizing/inverse orthogonal transforming unit 105 to generate a decoded prediction residual error signal 128. The decoded prediction residual error signal 128 and the prediction signal 126 input from the mode selector 103 are added to each other by the adder 106 to generate a local decoding signal 129. The local decoding signal 129 is accumulated in a reference image memory 106.

It is determined whether predictive encoding of one frame of the input image signal 120 is ended (step S110). When the predictive encoding is ended (the result in S110 is YES), the input image signal 120 of the next frame is input, and predictive encoding is performed again. On the other hand, when the predictive encoding of one frame is not ended (the result in S110 is NO), the operation returns to step S102 to perform predictive encoding to the block image signal 121 in the next macro-block.

Procedures of predicting processes in steps S104 and S105 in FIG. 30 will be described below with reference to FIG. 31.

When the block image signal 121 is input to the predictor 102, a sub-block expressed by blk = 0 is set in the prediction signal generator 113 (step S201). Furthermore, a prediction mode and an encoding cost in the mode selector 103 and the internal mode selector 114 are initialized (step S202). For example, prediction mode: index is set to 0, and minimum encoding cost: min_cost is set to be infinite.

A prediction signal 122 is generated by one mode which can be selected to the sub-block expressed by blk = 0 by the prediction signal generator 113 (step S203). A difference between the block image signal 121 and the prediction signal 122 is calculated to generate a prediction residual error signal 123, and an encoding cost is calculated according to formula (1) or (2) (step S204).

The mode selector 103 determines whether the calculated encoding cost is smaller than the minimum encoding cost: min_cost (step S205). When the encoding cost is smaller than the minimum encoding cost (the result in S205 is YES), the calculated encoding cost is updated by the minimum encoding cost, and prediction mode information obtained at that time is held as a best_mode index representing optimum prediction mode information (step S206). When the calculated cost is larger than the minimum encoding cost: min_cost (the result in S205 is NO), mode index: index is incremented, and it is determined whether the incremented index is larger than a last number (MAX) of the mode (step S207).

When the index is larger than MAX (the result in S207 is YES), the optimum prediction mode information 125 and the prediction residual error signal 126 are given from the mode selector 103 to the orthogonal transforming/quantizing unit 104 to perform orthogonal transformation and quantization. The quantization transformation coefficient information 127 obtained by the orthogonal transforming/quantizing unit 104 is entropy-encoded by the entropy encoder 108 together with the prediction mode index information 141 (step S208). On the other hand, when the index is smaller than MAX (the result in S207 is NO), the operation returns to step S203 to generate the prediction signal 122 of a prediction mode represented by the next index.

When encoding in best_mode is performed, the quantization transformation coefficient information 163 obtained by an internal orthogonal transforming/quantizing unit 115 is given to the internal inverse quantizing/inverse orthogonal transforming unit 116 to perform inverse quantization and inverse transformation. The decoded prediction residual error signal 164 generated by the internal inverse quantizing/inverse orthogonal transforming unit 116 and the prediction signal 162 of the best_mode input from the internal mode selector 114 are added to each other by an internal adder 117. The internal decoding signal 165 generated by the internal adder 117 is stored in the internal reference image memory 118 (step S208).

The block encoding count: blk is incremented. It is determined whether a value of blk after the increment is larger than the total number: BLK_MAX (16 if 4x4 pixel prediction, and 4 if 8x8 pixel prediction) of small blocks in a macro-block (step S209). When the value of blk after the increment is larger than BLK_MAX (the result in S209 is YES), a predicting process in the macro-block is ended. On the other hand, when the value of blk after the increment is smaller than BLK_MAX (the result in S209 is NO), the operation returns to step S202 to perform a predicting process to a small block represented by the next blk.

(First Embodiment: First Example of Syntax Structure)

An outline of a syntax structure used in the image encoder 100 will be described below with reference to FIG. 32.
A syntax mainly includes three parts called a high-level syntax 201, a slice level syntax 204, and a macro-block level syntax 207. In the high-level syntax 201, syntax information of an upper layer which is equal to or higher than a slice is filled up. In the slice level syntax 204, pieces of information are clearly written in units of slices. In the macro-block level syntax 207, changed values of quantization parameters, mode information, and the like which are required in units of macro-blocks are clearly written.
Each of the three parts includes a plurality of further divided syntaxes. More specifically, the high-level syntax 201 includes syntaxes called a sequence parameter set syntax 202 and a picture parameter set syntax 203 at a sequence level and a picture level. The slice level syntax 204 includes a slice header syntax 205 and a slice data syntax 206. The macro-block level syntax 207 includes a macro-block layer syntax 208 and a macro-block prediction syntax 209.
In the macro-block layer syntax 208, as shown in FIG. 33, a macro-block type mb_type is written.
In the macro-block prediction syntax 209, as shown in FIG. 34, pieces of prediction mode information are clearly written in units of sub-blocks (4x4 pixel blocks or 8x8 pixel blocks) in a macro-block. With respect to unidirectional prediction, prediction mode information representing a mode to be used in the plurality of prediction modes is expressed by intra4x4(8x8)_pred_mode_10 or intra4x4(8x8)_pred mode_11. With respect to bidirectional prediction, prediction mode information includes two syntaxes. In this case, a prediction mode having a smaller mode index (list 0) of two prediction modes selected from a plurality of prediction modes is expressed by intra4x4(8x8)_pred_mode_10, and a prediction mode having a larger mode index (list 1) is expressed by intra4x4 (8x8) pred_mode_11. A prediction mode having a larger mode index (list 0) may be expressed by intra4x4 (8x8)_pred_mode_10, and a prediction mode having a smaller mode index (list 1) may be expressed by intra4x4 (8x8)_pred_mode_11.
A configuration of a macro-block prediction syntax when the 4x4 pixel prediction is selected will be described below with reference to FIG. 34.
Reference symbol intra4x4_bi__pred_flag in FIG. 34 denotes a flag which switches whether bidirectional prediction is performed to the 4x4 pixel blocks. More specifically, FALSE of the flag intra4x4_bi_pred_flag means that the unidirectional prediction is performed to the 4x4 pixel blocks, and TRUE means that the bidirectional prediction is performed to the 4x4 pixel blocks.
Details of the syntaxes will be described below.
When 4x4 pixel blocks represented by a block index luma4x4Blk is to be predicted, intra4x4_pred_mode_10 denotes data representing a mode, used in prediction of the 4x4 pixel blocks, of prediction modes of 9 types prepared for the unidirectional prediction. When the data intra4x4_pred_mode_10 is to be encoded, entropy encoding (Huffman coding, Golomb coding, arithmetic coding, or the like) is performed depending on the total number of prediction modes.
When the intra4x4_bi_pred_flag is TRUE, the intra4x4_pred_mode_11 is further encoded. With reference to encoding of the intra4x4_pred_mode_11, it is considered that the intra4x4_red_mode_11 and the intra4x4_pred_mode_10 cannot have the same prediction modes. For this reason, the number obtained by subtracting 1 from the number of states of the intra4x4_pred_mode_10 is the number of states of a symbol which can be set in the intra4x4_pred_mode_11. On the basis of the number of states, entropy encoding is performed.
In this case, with respect to the intra4x4_bi_pred_flag, the intra4x4_pred_mode_10 and the intra4x4_pred_mode_11 may be encoded, multiplexed to an encoding stream, and then transmitted. On the other hand, the information of the intra4x4_bi_pred_flag may be expressed by activity information calculated from encoded blocks and pixels. In this case, when the same method as that on the encoding side is used on the decoding side, the same information as that on the encoding side is expressed as the information of the intra4x4_bi_pred_flag.

(Preferable Example When Plurality of Prediction Modes are Selected)

Furthermore, when the intra4x4_pred_mode_11 is to be encoded, a maximum value which can be obtained by the intra4x4_pred_mode_11 is adaptively predicted according to the intra4x4_pred_mode_10, and entropy encoding may be performed on the basis of the maximum value. In this case, the intra4x4_pred_mode_10 and the intra4x4_pred_mode_11 shown in FIG. 35 have combinations indicated by blank portions in FIG. 36. In FIG. 36, since fine-hatched portions indicate overlapping portions, respectively, codes for entropy encoding need not be allocated to the fine-hatched portions. As indicated by rough-hatched portions in FIG. 36, when the intra4x4_pred_mode_10 and the intra4x4_red_mode_11 are equal to each other, the intra4x4_bi_pred_flag becomes FALSE. Since codes are allocated in advance, new codes need not be allocated.
In this case, when intra4x4_pred_mode_11 < intra4x4_red_mode_10 is satisfied, the maximum value which can be obtained by the intra4x4_pred_mode_11 changes depending on the intra4x4_pred mode_10. For example, when the intra4x4_pred_mode_10 is 2, only two values of 0 and 1 can be obtained by the intra4x4_pred_mode_11, and the maximum value is 1. When the intra4x4_pred_mode_10 is 8, eight values of 0 to 7 can be obtained, and the maximum value is 7.

As described above, the maximum value which can be obtained by the intra4x4_red_mode_11 can be predicted by the value of the intra4x4 pred_mode_10 and determined.

A concrete code allocating method is shown in FIG. 37. The numerical values in FIG. 37 indicate binary signals (0 or 1) set according to the combinations of the intra4x4_pred_mode_10 and the intra4x4_pred_mode_11. When the intra4x4_pred_mode_10 is 0, only 1 can be obtained by the intra4x4_pred_mode_11. For this reason, codes need not be allocated. On the decoding side, the intra4x4_pred_mode_10 is decoded in advance to make it possible to decode the intra4x4_pred_mode_11 according to FIG. 37.

The binary signals which decode the intra4x4_pred_mode_11 are set to binary[i] (i = 0, 1, 2,...) in a decoding order, and a decoding order of the intra4x4_pred_mode_11 of each intra4x4_pred_mode_10 will be described below. More specifically, the decoding may be performed according to the following formulas (51) to (57). When the intra4x4_pred_mode_10 is 1, the intra4x4_pred mode_11 need not be decoded.

When the intra4x4_pred_mode_10 is 2, only 1 bit is decoded, and the intra4x4_red_mode_11 is decoded according to the following formula:

[Numerical Formula 51]

```
intra4x4_pred_mode_l1 = binary[0]        (51)
```

when the intra4x4_pred_mode_10 is 4, only 2 bits are decoded, and the intra4x4_red_mode_11 is decoded according to the following formula:

[Numerical Formula 52]

```
intra4x4_pred_mode_l1 = (binary[0]<<1)
+ binary[1]                                (52)
```

When the intra4x4_pred_mode_10 is 4, only 3 bits are decoded, and the intra4x4_pred_mode_11 is decoded according to the following formula:

[Numerical Formula 53]

```
intra4x4_pred_mode_l1
= (binary[0]<<2) + binary[1]<<1)
+ (binary[2]                               (53)
```

When the intra4x4_pred_mode_10 is 3, only the first 1 bit is decoded. When the decoded value is 0, the intra4x4_red_mode_1 is allocated as 0. When the decoded value is 1, another 1 bit is decoded, and a value obtained by incrementing the resultant value by 1 may be set as the intra4x4_pred_mode_1.

[Numerical Formula 54]

```
if(binary[0]==0)
    intra4x4_pred_mode_l1 = binary[0]
else
    intra4x4_pred_mode_l1 = binary[1] + 1    (54)
```

when the intra4x4_pred_made_10 is 5, only the first 2 bits are decoded. When the decoded value ((binary[0] <<1) + binary[1]) is 2 or less, the intra4x4_pred_mode_1 is allocated by the decoded value. When the decoded value is 3, another 1 bit is decoded, and a value obtained by incrementing the resultant value by 3 may be set as the intra4x4_pred_mode_1.

[Numerical Formula 55]

```
if(((binary[0]<<1) + binary[1] ≤ 2)
    intra4x4_pred_mode_l1 = (binary[0]<<1)
    +binary[1])
else
    intra4x4_pred_mode_l1 = binary[2] + 3    (55)
```

When the intra4x4_pred_mode_10 is 6, only the first 2 bits (banaxy[0], binary[1]) are decoded. When the decoded value ((binary[0]<<1) + binary[1]) is 1 or less, the intra4x4_pred_mode_1 is allocated by the symbol value. When the decoded value is 2 or more, another 1 bit binary[2] is decoded, and the intra4x4_pred_mode is calculated from binary[1] and binary[2]).

[Numerical Formula 56]

```
if(((binary[0]<<1) + binary[1]) ≤ 1)
    intra4x4_pred_mode_l1 = ((binary[0]<<1)
    + binary[1])
else
    intra4x4_pred_mode_l1 = (binary[1]<<1)
    + binary[2] + 2                          (56)
```

When the intra4x4_pred_mode_10 is 7, only the first 2 bits (binary[0], binary[1]) are decoded. When the decoded value ((binary[0]<<1) + binary[1]) is 1 or less, the intra4x4_pred_mode is allocated as the decoded value. When the decoded value is 2 or more, another 1 bit binary[2] is decoded, and when ((binary[1]<<1) + binary[2]) is 2 or less, the intra4x4_pred_mode_1 is calculated from (binary[1] and binary[2]). When (binary[1]<<1) + binary[2]) is 3, (another 1 bit binary[3] is decoded to calculate the intra4x4_pred_mode_1.

[Numerical Formula 57]

```
if(((binary[0]<<1) + binary[1]) ≤ 1)
    intra4x4_pred_mode_l1 = ((binary[0]<<1)
    + binary[1])
else if (((binary[1]<<1) + binary[2]) ≤ 2)
    intra4x4_pred_mode_l1 = (binary[1]<<1)
    + binary[2] + 2
else
    intra4x4_pred_mode_l1 = binary[3] + 5    (57)
```

As another example, the same code table as that in FIG. 37 may be designed as intra4x4_pred_mode_11> intra4x4_redmode_10. In this case, a minimum value which can be obtained by the intra4x4_pred_mode_11 is predicted from the value of the intra4x4_pred_mode_10 and determined. As described above, when the intra4x4_bi_pred_flag is not used, codes may also be allocated when the intra4x4_pred_mode_11 and the intra4x4_pred_mode_10 are equal to each other.

As still another example, binary signals to be set are not always the binary signals shown in FIG. 37. Entropy binarization such as isometric coding, Golomb coding, or exponential Golomb coding may be performed, or a table may be set in advance, so that binary signals may be generated by a table lookup method.

The above explanation describes the example in which, when the two prediction modes intra4x4_pred_mode_ 10 and intra4x4_red_mode_11 are selected to the same encoding target block in the 4x4 pixel prediction, from one prediction mode which is encoded in advance, a prediction mode to be encoded next is predicted to encode prediction mode information.

An encoding procedure for prediction mode information (mode index) when a plurality of prediction modes including three or more prediction modes are selected will be described below with reference to a flowchart in FIG. 38.

When a plurality (N) of prediction modes are selected in step S301, the N prediction modes are sorted in descending order of mode indexes idx (step S302). The N prediction modes may be sorted in ascending order of the mode indexes idx. As a variable i (i = 1 to N), i = 1 is set (step S303). It is then examined whether i = 1 is satisfied (step S304).

When i = 1 is satisfied, a mode index idx[i] obtained at that time is set (step S306). Since the prediction modes are sorted in descending order of the mode indexes idx in step S302, idx[i] indicates the maximum value when i = 1. Thereafter, the idx[i] is encoded by a minimum number of bits required to express the maximum value of the predicted idx[i] (step S308).

On the other hand, when i = 1 is not satisfied in step S205, i.e., i is 2 or more, a maximum value which can be obtained by idx[i] is predicted from a mode index idx[i-1] which is encoded beforehand (step S307). In step S308, the idx[i] is encoded by a minimum number of bits required to express the maximum value of the idx[i] predicted in step S307.

When the encoding of the mode index is ended in step S308, i is incremented by 1 (step S309), and it is examined whether i = N is satisfied (step S310). Processes in steps S304 to S309 are repeated until i = N is satisfied. When i = N is satisfied, the encoding of the mode index is ended.

When a plurality of prediction modes are selected as described above, the mode indexes expressing the plurality of prediction modes are encoded in descending order of values. More specifically, from a prediction mode in which encoding of a mode index is ended, a prediction mode in which a mode index should be encoded next is predicted, and a mode index expressing the predicted prediction mode is encoded. In this case, a maximum value which can be obtained by the mode index expressing the predicted prediction mode is predicted, and encoding is performed by a minimum number of bits (length of code) required to express the maximum value. In this manner, an amount of code required to encode the mode index can be effectively reduced to contribute to improvement of encoding efficiency of the image encoding apparatus.

An encoding method for mode indexes expressing a plurality of prediction modes can also be applied to intra-frame prediction other than 4x4 pixel prediction and can also be applied to inter-frame prediction.

Since the 8x8 pixel prediction has the same syntax as that of the 4x4 pixel prediction as shown in FIG. 34, a description thereof will be omitted.

As another example, as shown in FIG. 39, without using the intra4x4_bi_pred_flag, prediction mode information may be expressed. In this case, when the intra4x4_pred_mode_10 and the intra4x4_pred_mode_11 are equal to each other, the prediction is equivalent to unidirectional prediction.

As still another example, the intra4x4_pred_mode_10 may be encoded by using correlation with intra4x4_pred_mode_10_org in an adjacent block. A concrete syntax structure is shown in FIG. 40, and the configuration of the macro-block prediction syntax shown in FIG. 34 is replaced with a configuration in FIG. 40. A prev_intra4x4_pred_mode_10_flag in FIG. 40 is a flag representing whether a prediction mode ref_pred_mode in list 0 calculated from a reference block (described later) and a prediction mode intra4x4_pred mode_10 in list 0 of the block are equal to each other.

FIG. 41 shows a method of deriving prev_intra4x4_pred_mode_10_flag[order]. In this case, ref_blka_mode_10 in FIG. 41 represents a prediction mode in list 0 of a nearest encoded block blkA located on the left of the block blkA, and ref_blkb_mode_10 represents a prediction mode in list 0 of a nearest encoded block located on the upper side of a block blkB. The positions of the ref_blkA_mode_10 and the ref_blkB_mode_10 change depending on block_order_flag, and are concretely shown in FIG. 42. The blocks blkA and blkB are left and upper encoded blocks adjacent to the corresponding blocks, respectively.

When the prev_intra4x4_red_mode_10_flag[order] is TRUE, the information of the intra4x4_pred_mode_10 can be expressed with 1 bit by using correlation with an adjacent block. For this reason, encoding efficiency is improved.

On the other hand, when the prev_intra4x4_pred_inode_10_flag[order] is FALSE, as a prediction mode in list 0 except for the prev_intra4x4_pred_mode_10_flag[order], rem_intra4x4_pred_mode_10[order] is shown. This is data representing any one of the prediction modes rem_intra4x4_pred_mode_10[order] except for ref_pred_mode_org. The data is entropy-encoded on the basis of the number of states of symbols which can be obtained in the prediction modes in list 0 except for the ref_pred_mode.

Since the syntax in the 8x8 pixel prediction is the same as the syntax in the 4x4 pixel prediction as shown in FIG. 40, a description thereof will be omitted.

When the syntax structure described above is provided, encoding efficiency is improved even in encoding of a prediction mode.

(First Embodiment: Second Example of Syntax Structure)

As another example, a plurality of reliability candidates of prediction modes in the bidirectional prediction may be prepared in units of blocks and switched in units of the blocks. A concrete syntax configuration is shown in FIG. 43.

The configuration of the macro-block prediction syntax shown in FIG. 34 is replaced with the configuration shown in FIG. 43. Reference symbol intra4x4_bi_pred_weight_mode shown in FIG. 43 is data representing which reliability candidate is used for the 4x4 pixel blocks. For example, when the intra4x4_bi_pred_weight_mode is 0, a Gaussian distribution is allocated. When the intra4x4_bi_pred_weight_mode is 1, a Laplace distribution is allocated. When the intra4x4_bi_pred_weight_mode is 2, a fixed value is allocated. As another distribution, a linear model or an M-order function ($M \geq 1$) can be replaced.

FIGS. 44, 45, 46, 47, and 48 show still another example of a syntax structure used in the image encoder 100. Pieces of syntax information required in this example include the sequence parameter set syntax 202, the picture parameter set syntax 203, the slice header syntax 205, and the macro-block layer syntax 208 in FIG. 32. Syntaxes shown in FIGS. 44, 45, 46, 47, and 48 are added to the syntax structure of the first example. The syntaxes will be described below.

Reference symbol intra_bi_pxed_weight_in_seq_flag shown in the sequence parameter set syntax in FIG. 44 denotes a flag representing whether reliabilities of prediction modes used in the bidirectional prediction are set in the sequence. When the flag intra_bi_pred_weight_in_seq_flag is TRUE, intra_bi_pred_weight_in_seq_mode is further shown. This serves as data representing reliability used in the sequence. Therefore, in a layer which is a picture or lower layer, reliability represented by the intra_bi_pred_weight_in_seq_mode is uniformly applied, and the reliability is not reset. On the other hand, when the intra_bi_pred_weight_in_seq_flag is FALSE, in the layer which is a picture or lower layer, it is shown that the reliabilities of the prediction modes are set.

Reference symbol intra_bi_pred_weight_in_pic_flag shown in a picture parameter set syntax in FIG. 45 is a flag representing whether reliabilities of the prediction modes used in the bidirectional prediction are set in the picture. When the intra_bi_pred_weight_in_pic_flag is TRUE, intra_bi_pred_weight_in_pic_mode is further shown. This serves as data representing reliability used in the picture. Therefore, in a layer which is a slice or lower layer, reliability represented by the intra_bi_pred_weight_in_pic_mode is uniformly applied, and the reliability is not reset. On the other hand, when the intra_bi_pred_weight_in_pic_flag is FALSE, in the layer which is a slice or lower layer, it is shown that the reliabilities of the prediction modes are set.

Reference symbol intra_bi_pred_weight_in_slice_flag shown in a slice header syntax in FIG. 46 is a flag representing whether reliabilities of the prediction modes used in the bidirectional prediction are set in the slice. When the intra_bi_pred_weight_in_slice_flag is TRUE, intra_bi_pred_weight_in_slice_mode is further shown. This serves as data representing reliability used in the slice. Therefore, in a layer which is a macro-block or lower layer, reliability represented by the intra_bi_red_weight_in_slice_mode is uniformly applied, and the reliability is not reset. On the other hand, when the intra_bi_pred_weight_in_slice_flag is FALSE, in the layer which is a macro-block or lower layer, it is shown that the reliabilities of the prediction modes are set.

Reference symbol intra_bi-pred_weight_in_mb_flag shown in a macro-block syntax in FIG. 47 is a flag representing whether reliabilities of the prediction modes used in the bidirectional prediction are set in the macro-block. When the intra_bi_pred_weight_in_mb_flag is TRUE, intra_bi_pred_weight_in_mb_mode is further shown. This serves as data representing reliability used in the macro-block. Therefore, in a sub-block, reliability represented by the intra_bi_pred_weight_in_mb_mode is uniformly applied, and the reliability is not reset. On the other hand, when the intra_bi_pred_weight_in_mb_flag is FALSE, in the subblock, it is shown that the reliabilities of the prediction modes are set.

Reference symbol intra4x4(8x8)_bi_pred_weight_inode[luma4x4(BX8)BlkIdx] shown in a macro-block prediction syntax in FIG. 48 denotes data representing reliability in a sub-block represented by luma4x4(8x8)BlkIdx. The intra4x4(8x8)_bi_pred_weight_mode[luma4x4(8x8)Blkldxl is effective when the flag intra_bi_pred_flag is TRUE and when the intra_bi_pred_weight_in_mb_flag is TRUE. The intra4x4_(8x8)_bi_pred_weight_mode[luma4x4(8x8)BlkIdx] can be used only when a prediction type of a macro-block is intra-frame prediction.

It is assumed that initial values of the syntaxes intra_bi_pred_weight_in_seq_flag, intra_bi_pred_weight_in_pic_flag, intra_bi_pred_weight_in_slice_flag, and intra_bi_pred_weight_in_mb_flag are set to TRUE, and that initial values of intra_bi_pred_weight_in_seq_mode, intra_bi_pred_weight_in_pic_mode, intra_bi_pred_weight_in_slice_mode, intra_bi_pred_weight_in_mb_mode, and intra_bi_pred_weight_mode are set to 0.

Pieces of information represented by the syntaxes may be encoded or transmitted to a decoding side, or may be switched depending on activity information such as correlation or variance of pixels in encoded adjacent blocks.

In the embodiment, intra_bi_pred_weight_in seq_flag, intra_bi_pred_weight_in_pic_flag, intra_bi_pred_weight_in_slice_flag, intra_bi_pred_weight_in_mb_flag, intra_bi_pred_weight_in_seq_mode, intra_bi_pred_weight_in_pic_mode, intra_bi_pred_weight_in_slice_mode, intra_bi_pred_weight_in_mb_mode, and intra_bi_pred_weight_mode represent switching flags or data related to reliabilities of the layers. However, as another embodiment, the reliabilities may be replaced with weighting factors, respectively. In this case, the syntaxes are flags or data representing switching of the reliabilities in the layers.

Since the 8x8 pixel prediction has the same syntaxes as those in the 4x4 pixel prediction shown in FIG. 48, a description thereof will be omitted.

(Second Embodiment: Example in Which Order of Encoding Target Blocks in MB is Changed)

A prediction signal generator 1013 used when encoding is performed while switching orders of sub-blocks in a macro-block will be described below with reference to FIG. 49. In the embodiment, the prediction signal generator 1013 is replaced with the prediction signal generator 113 in the first embodiment. A prediction order switch 170 switches prediction orders of sub-blocks in the macroblock on the basis of the prediction order switching information 143 with respect to the block image signal 121. More specifically, the prediction order switch 170 selects a prediction order to a plurality of sub-blocks obtained by dividing a pixelblock (macroblock) from a plurality of predetermined prediction orders. Block image signals the prediction orders of which are switched by the prediction order switch 170 are input to a unidirectional predictor 171 and a bidirectional predictor 172.

The unidirectional predictor 171 and the bidirectional predictor 172 predict a macroblock with reference to encoded pixels according to the prediction order switched and selected by the prediction order switch 170 and the prediction modes respectively selected to generate a prediction signal corresponding to the macroblock.

More specifically, the unidirectional predictor 171 selects one prediction mode from the plurality of prepared prediction modes on the basis of the prediction mode index information 141. The unidirectional predictor 171 generates prediction signals with reference to the internal reference image signal 166 according to the prediction mode selected as described above and the block size switching information 142. The bidirectional predictor 172 selects two kinds of prediction modes from the plurality of prepared prediction modes on the basis of the prediction mode index information 141. The bidirectional predictor 172 generates prediction signals with reference to the internal reference image signal 166 according to the two kinds of prediction modes selected as described above, the block size switching information 142, and the weight coefficient information 145. The prediction signals output from the unidirectional predictor 171 and the bidirectional predictor 172 are input to a prediction mode number switch 173.

The prediction mode number switch 173 is controlled according to the prediction mode number switching information 144 to select any one of the prediction signal generated by the unidirectional predictor 171 and the prediction signal generated by the bidirectional predictor 172, thereby outputting a selected prediction signal 122. In other words, the prediction mode number switch 173 selects the number of usable prediction modes from a plurality of predetermined prediction modes.

An operation of the prediction order switch 170 will be described with reference to FIGS. 6A to 6B, FIGS. 50A to 50B, FIGS. 51A to 51B, and FIG. 52. FIG. 6A shows an index :blk serving as a reference of sub-blocks (8x8 pixelblocks) in a macroblock in 8x8 pixel prediction. Similarly, FIG. 7A shows an index :blk of sub-blocks (4x4 pixelblocks) in a macroblock in 4x4 pixel prediction. In FIG. 6A, 8×8 pixelblocks obtained by dividing a macroblock by four are placed in the order such that raster block prediction and an encoding process are performed. In FIG. 7A, in consideration of the 8x8 pixelblocks obtained by dividing the macroblock by four, and 4x4 pixelblocks obtained by dividing the 8x8 pixelblock by four are placed in the order such that raster block prediction and an encoding process are performed.

The prediction order switch 170 is controlled by the prediction order switching information 143. The prediction order switch 170 transforms an the index :blk serving as a reference depending on a value of a flag :block_order_flag (described later) representing the prediction order switching information 143 to switch a prediction order of sub-blocks. To an order :idx of the sub-blocks, an index :order (expressing a prediction order) of the sub-blocks in actual encoding is given by the following formula:

[Numerical Formula 58]

$$order = blkConv[block_order_flag][idx] \quad (58)$$

FIG. 52 shows an example of a concrete transformation table of blkConv[][]. When the flag :block_order_flag is 0 (FALSE), an index :order of a sub-block in actual predictive encoding is an index :idx itself of a sub-block to be encoded, and prediction of blocks and a prediction order are not changed (such prediction performed by the prediction order is called raster block prediction hereinafter).

FIGS. 6B and 7B show prediction orders obtained by raster block prediction to FIGS. 6A and 7A. More specifically, in FIG. 6B, the prediction order is set as an order (0 → 1 → 2 → 3) depending on the index :idx. Similarly, as in FIG. 7B, the prediction order is set as an order (0 → 1 → 2 → ... → 14 → 15) depending on the index :idx.

On the other hand, when the flag :block_order_flag is 1 (TRUE), an index :order of sub-blocks to be actually prediction-encoded exhibits a prediction order in which one diagonal block of four sub-blocks is predicted by extrapolation first and the three remaining blocks are predicted by extrapolation or interpolation. The prediction performed by the prediction order will be called extrapolation/interpolation prediction hereinafter.

FIGS. 50A and 51A show changes in prediction order obtained by the extrapolation/interpolation prediction corresponding to FIGS. 6A and 7A, respectively. In FIG. 50A, a sub-block of index = 3 is predicted by extrapolation first, sub-blocks of idx = 1 and idx = 2 are predicted, and finally a sub-block of idx = 0 located at a diagonal position of the position of a sub-block of idx = 3 is predicted by extrapolation. In FIG. 51A, prediction orders are set to four sub-blocks of 4x4 pixels obtained by dividing the 8×8 pixelblock by four as in FIG. 50A.

As still another example, prediction orders of sub-blocks may be arbitrarily set as shown in FIGS. 50B and 51B depending on properties such as a correlation between pixels in a macroblock.

As described above, the sub-blocks the prediction orders of which are switched by the prediction order switch 170 are input to the unidirectional predictor 171 or the bidirectional predictor 172 to generate prediction signals corresponding to the sub-blocks. The prediction mode number switch 173 outputs a prediction signal obtained by the unidirectional predictor 171 when the prediction mode number switching information 144 represents prediction mode number "1" and outputs a prediction signal obtained by the bidirectional predictor 172 when the prediction mode number switching information 144 represents prediction mode number "2". A prediction signal output from the prediction mode number switch 173 is extracted as an output 122 from the prediction signal generator 113.

Processes of the unidirectional predictor 171 and the bidirectional predictor 172 corresponding to the prediction orders set by the flag :block_order_flag will be described below. As described above, the unidirectional predictor 171 and the bidirectional predictor 172 predict sub-blocks to be encoded by using decoded pixels held in the internal reference image memory 118 shown in FIG. 4 as the internal reference image signal 166.

Since unidirectional prediction and bidirectional prediction in sequential block prediction are the same as those in the first embodiment, a description thereof will be omitted.

(Extrapolation/Interpolation Block Prediction)

In the extrapolation/interpolation block prediction as described in FIG. 50A, an order of sub-blocks in a macroblock is changed into a prediction order in which block_order_flag is TRUE in formula (59) on the basis of the sequence block prediction. For example, when prediction of 8x8 pixel blocks is to be performed, as shown in FIG. 53A, one block at an outer corner is predicted as a block (to be referred to as an extrapolation block hereinafter) to which extrapolation prediction can be performed first, and the other three blocks are predicted as blocks (to be referred to as interpolation blocks hereinafter) to which interpolation prediction can be performed. More specifically, an extrapolation block (1) is predicted first, and interpolation blocks (2), (3), and (4) are predicted next. On the other hand, when prediction is performed to 4x4 pixel blocks, as shown in FIG. 53B, prediction of an extrapolation block and prediction of an interpolation block are performed to 4x4 pixel blocks in units of 8x8 pixel blocks to set a prediction order.

A predicting process in units of 8x8 pixel blocks performed when 4x4 pixel prediction is selected will be described below. In the predicting process, upon completion of prediction in units of 8x8 pixel blocks, prediction is performed to the next 8x8 pixel blocks. In this manner, prediction in units of 8x8 pixel blocks is repeated a total of 4 times.

(Extrapolation Block Prediction)

When an extrapolation block is to be predicted, a distance between a reference pixel and a prediction pixel is long. For this reason, a range of the reference pixel is shown in FIG. 54A. In FIG. 54A, pixels A to X and Z are reference pixels, and pixels a to p are prediction pixels. Although the range of the reference pixels becomes large, a method of generating a prediction signal by copying a reference pixel according to a prediction angle is the same as that in the above sequential block prediction.

More specifically, when DC prediction in mode 2 is selected in an extrapolation block, the prediction pixels a to p are calculated by the following formula:

[Numerical Formula 59]

$$a \sim p = ave(E, F, G, H, U, V, W, X) \quad (59)$$

In this formula, ave(·) means an average pixel value of reference pixels shown in ().

When some of the reference pixels in () cannot be used, a prediction signal is generated by calculating an average pixel value of only usable reference pixels. When there is no usable reference pixel, a value which is half (128 in case of 8 bits) the maximum luminance of the prediction signal is set as a prediction signal in the prediction signal generator 113.

When a mode other than mode 2 is selected, the unidirectional predictor 171 uses a predicting method which copies the reference pixels to prediction pixels in the prediction directions shown in FIG. 8A. More specifically, a prediction signal generating method used when mode 0 (vertical prediction) is selected is expressed by the following formula:

[Numerical Formula 60]

$$a, e, i, m = E$$
$$b, f, j, n = F$$
$$c, g, k, o = G$$
$$d, h, l, p = H \qquad (60)$$

This mode 0 can be selected only when the reference pixels E to H are used. In mode 0, as shown in FIG. 55A, the reference pixels E to H are directly copied to prediction pixels aligned in a vertical direction to generate a prediction signal.

On the other hand, a prediction signal generating method used when mode 4 (diagonal-down-right prediction) is selected in an extrapolation block is expressed by the following formula:

[Numerical Formula 61]

$$d = (B+(C<<1)+D+2) >> 2$$
$$c, h = (A+(B<<1)+C+2) >> 2$$
$$b, g, l = (Z+(A<<1)+B+2) >> 2$$
$$a, f, k, p = (Q+(Z<<1)+A+2) >> 2$$
$$e, j, o = (R+(Q<<1)+Z+2) >> 2$$
$$i, n = (S+(R<<1)+Q+2) >> 2$$
$$m = (T+(S<<1)+R+2 >> 2 \qquad (61)$$

Mode 4 can be selected only when the reference pixels A to D, Q to T, and Z can be used. In mode 4, as shown in FIG. 55B, values generated by a 3-tap filter are copied in a 45-degree lower right direction to generate a prediction signal.

With respect to prediction modes other than modes 0, 2, and 4, almost the same framework as described above is used. More specifically, by a method of copying reference pixels which can be used in a prediction direction or interpolated values generated by the reference pixels to prediction pixels aligned in the prediction direction, a prediction signal is generated.

(Interpolation Block Prediction)

In FIGS. 53A and 53B, when an interpolation block (2) is to be predicted, prediction of the extrapolation block (4) is ended in advance. For this reason, prediction can be performed with reference to pixels of the extrapolation block (4). In the prediction of the interpolation block (3), prediction can be performed with reference to the pixels of the extrapolation blocks (4) and pixels of the interpolation block (2). When the extrapolation block (1) is to be predicted, prediction can be performed with reference to pixels of the interpolation block (3) in addition to the pixels of the extrapolation block (4) and the interpolation block (2).

FIGS. 54B, 54C, and 54D show relationships between the interpolation blocks (1), (2), and (3) in the 4x4 pixel blocks and reference pixels. Pixels RA to RI are reference blocks newly added to FIG. 54A, and pixels a to p are prediction pixels.

(Process of Unidirectional Predicting Unit 171 in Interpolation Block Prediction)

The unidirectional predictor 171, as shown in FIG. 56, has a total of 17 modes of directional prediction in an extrapolation block with respect to interpolation block prediction and extrapolation prediction in an inverse direction with reference to a reference pixel in an encoded macro-block. The 17 modes except for mode 2 have prediction directions which shift by 22.5° each.

FIG. 57 shows names of prediction modes 00 to 16 of unidirectional prediction performed by interpolation block prediction in the unidirectional predictor 171. Mode indexes 00 to 16 representing modes 0 to 16 are added to the names, respectively. In FIG. 57, an inverse-direction prediction mode is added to the prediction mode of the extrapolation block prediction (sequential block prediction) shown in FIG. 9.

More specifically, modes of vertical prediction, horizontal prediction, DC prediction, diagonal-down-left prediction, diagonal-down-right prediction, vertical-right prediction, horizontal-down prediction, vertical-left prediction, and horizontal-upper prediction are common to those in FIGS. 9 and 57. On the other hand, in FIG. 57, in addition to the modes shown in FIG. 9, vertical-upper prediction (mode 9), horizontal-left prediction (mode 10), diagonal-upper-right prediction (mode 11), diagonal-upper-left prediction (mode 12), vertical-upper-left prediction (mode 13), horizontal-upper-left prediction (mode 14), vertical-upper-right prediction (mode 15), and horizontal-down-left prediction (mode 16) are added as inverse-direction prediction modes.

It is determined depending on positional relationships between interpolation blocks and reference pixels and the presence/absence of the reference pixels as shown in FIGS. 53A and 53B whether the prediction modes can be selected. For example, in the interpolation block (1), since the reference pixels are arranged in all the left, right, upper, and lower directions, all modes 0 to 16 can be selected as shown in FIG. 58A. In the interpolation block (2), since no reference pixel is arranged on the right side, as shown in FIG. 58B, mode 10, mode 14, and mode 16 cannot be selected. In the interpolation block (3), since no reference pixel is arranged on the lower side, as shown in FIG. 58C, mode 9, mode 13, and mode 15 cannot be selected.

A prediction signal generating method of the unidirectional predictor 171 in the interpolation block prediction will be described below. In the unidirectional predictor 171, when DC prediction in mode 2 is selected, an average pixel value of the nearest upper, lower, left, and right reference pixels is calculated to generate a prediction signal.

More specifically, with respect to the interpolation block (1), a prediction signal is calculated according to the following formula:

[Numerical Formula 62]

$$a \sim p = \mathrm{ave}(A, B, C, D, RA, RB, RC, RD, Q, R, S, T, RE, RF, RG, RH) \quad (62)$$

With respect to the interpolation block (2), a prediction signal is calculated according to the following formula:

[Numerical Formula 63]

$$a \sim p = \mathrm{ave}(Q, R, S, T, E, F, G, H, RA, RB, RC, RD) \quad (63)$$

With respect to the interpolation block (3), a prediction signal is calculated according to the following formula:

[Numerical Formula 64]

$$a \sim p = \mathrm{ave}(A, B, C, D, U, V, W, X, RE, RF, RG, RH) \quad (64)$$

In the formulas (62), (63), and (64), ave(·) means an average pixel value of the reference pixels shown in ().

When some of the reference pixels in () cannot be used, a prediction signal is generated by calculating an average pixel value of only usable reference pixels.

When a mode other than mode 2 is selected, the unidirectional predictor 171 uses a predicting method which copies the reference pixels to prediction pixels in the prediction directions shown in FIG. 56. A description of calculation of the prediction pixels in mode 0 to mode 8 will be omitted because prediction is performed at the same prediction angles as those in the extrapolation block.

With respect to mode 9 to mode 16, encoded blocks arranged in a macro-block are referred to in the order of pixels of the encoded extrapolation block (4) or a prediction order. More specifically, when mode 9 (vertical-upper prediction) is selected, a prediction signal is generated from a reference pixel located at a nearest position in the lower direction. With respect to the interpolation block (1) and the interpolation block (2), prediction signals are calculated according to the following formula:

[Numerical Formula 65]

$$a, e, i, m = RA$$
$$b, f, j, n = RB$$
$$c, g, k, o = RC$$
$$d, h, l, p = RD \qquad (65)$$

FIGS. 59A and 59B show methods of generating prediction signals to the interpolation block (1) and the interpolation block (2) in mode 9. Reference pixels RA to RD are directly copied to prediction pixels aligned in a vertical direction to generate a prediction signal. With respect to the interpolation block (3), mode 9 cannot be used because no reference pixel is present in the lower direction.

On the other hand, when mode 10 (horizontal-left prediction) is selected, a prediction signal is generated from a reference pixel located at a nearest position in the right direction. With respect to the interpolation block (1) and the interpolation block (3), prediction signals are calculated according to the following formula:

[Numerical Formula 66]

$$a, b, c, d = RE$$
$$e, f, g, h = RF$$
$$i, j, k, h = RG$$
$$m, n, o, p = RH \qquad (66)$$

FIGS. 60A and 60B show methods of generating prediction signals to the interpolation block (1) and the interpolation block (3) in mode 10. Reference pixels RE to RH are directly copied to prediction pixels aligned in a horizontal direction to generate a prediction signal. With respect to the interpolation block (2), mode 10 cannot be used because no reference pixel is present in the right direction.

Furthermore, when mode 12 (diagonal upper left prediction) is selected, with respect to the interpolation block (1), a prediction signal is calculated according to the following formula:

[Numerical Formula 67]

$$d = (RE+(RF<<1)+RG+2) >> 2$$
$$c, h = (RF+(RG<<1)+RH+2) >> 2$$
$$b, g, l = (RG+(RH<<1)+RI+2) >> 2$$
$$a, f, k, p = (RH+(RI<<1)+RD+2) >> 2$$
$$e, j, o = (RI+(RD<<1)+RC+2) >> 2$$
$$i, n = (RD+(RC<<1)+RB+2) >> 2$$
$$m = (RC+(RB<<1)+RA+2 >> 2 \qquad (67)$$

With respect to the interpolation block (2), a prediction signal is calculated according to the following formula:

[Numerical Formula 68]

$$d, c, h, b, g, l, a, f, k, p = RD$$
$$e, j, o = (RC+(RD<<1)+RD+2) >> 2$$
$$i, n = (RB+(RC<<1)+RD+2) >> 2$$
$$m = (RA+(RB<<1)+RC+2) >> 2 \qquad (68)$$

With respect to the interpolation block (3), a prediction signal is calculated according to the following formula:

[Numerical Formula 69]

$$d = (RE+(RF<<1)+RG+2) >> 2$$
$$c, h = (RF+(RG<<1)+RH+2) >> 2$$
$$b, g, l = (RG+(RH<<1)+RH+2) >> 2$$
$$a, f, k, p, e, j, o, m = RH \quad (69)$$

FIGS. 61A, 61B, and 61C show methods of generating prediction signals to the interpolation block (1), the interpolation block (2), and the interpolation block (3) in mode 12. Values generated by a 3-tap filter are copied in a 45-degree upper left direction to generate a prediction signal.

With respect to prediction modes (modes 10, 11, 13 to 16) other than the modes 2, 9, and 12, prediction methods which copy prediction signals which can be referred to and are interpolated from the nearest pixels in the prediction directions shown in FIGS. 58A, 58B, 58C, and 58D are also used. When no reference pixel is arranged in a prediction direction, a value of the nearest reference pixel may be copied to generate a reference pixel, and then the reference pixel may be used. Alternatively, a virtual reference pixel may be generated from interpolation of a plurality of reference pixels, and the reference pixel may be used in prediction.

(Process of Bidirectional Predicting Unit 172 in Interpolation Block Prediction)

The bidirectional predictor 172 performs prediction including a plurality of directivities by simultaneously using two modes of 17 prediction modes (including DC prediction) of interpolation block prediction performed by the unidirectional predictor 171 in the interpolation block prediction. A concrete prediction signal generating method is the same as that described in the first embodiment. More specifically, prediction signals of the selected two modes (mode "U" and mode "V" in formula (10) and formula (24)) are used as prediction signals of prediction pixels having weighted averages using weighting factors in units of pixels.

FIG. 62 shows a mode index corresponding to a name of a prediction mode performed in interpolation block prediction in the bidirectional predictor 172. In FIG. 62, there is a prediction mode using two modes. For example, a name and a mode index of a prediction mode when vertical prediction (mode 0) and inverse-direction horizontal prediction (mode 10) are used are described as "vertical/inverse-direction horizontal prediction" and "mode 0010", respectively. When each of the numbers of the prediction modes is a number in single figure, 0 is added at the head of the number, and the number is described as a number in double-figures. Mode 0 and mode 00 have the same meanings.

For example, when bidirectional prediction by vertical prediction (mode 00) and horizontal-left prediction (mode 10) is performed (vertical/inverse horizontal prediction: mode 0010), weighting factors at the prediction pixel a are expressed by the following formula:

[Numerical Formula 70]

Weighting factor of mode 00: 4/5

Weighting factor of mode 10: 1/5 (70)

Therefore, a prediction value at the prediction pixel a is expressed by the following formula:

[Numerical Formula 71]

$$a = 4/5*X(00,0) + 1/5*X(10,0) \quad (71)$$

Weighting factors at the prediction pixel b are expressed by the following formula:

[Numerical Formula 72]

Weighting factor of mode 00: 3/4

Weighting factor of mode 10: 1/4 (72)

Therefore, a prediction value at the prediction pixel a is expressed by the following formula:

[Numerical Formula 73]

$$b = 3/4*X(00,1) + 1/4*X(10,1) \quad (73)$$

In addition, prediction values at the prediction pixels c - p are expressed by the following formula:

[Numerical Formula 74]

$$c = 2/3*X(00,2) + 1/3*X(10,2)$$
$$d = 1/2*X(00,3) + 1/2*X(10,3)$$
$$e = 2/3*X(00,4) + 1/3*X(10,4)$$
$$f = 3/5*X(00,5) + 2/5*X(10,5)$$
$$g = 1/3*X(00,6) + 2/3*X(10,6)$$
$$h = 2/3*X(00,7) + 1/3*X(10,7)$$
$$i = 4/7*X(00,8) + 3/7*X(10,8)$$
$$j = 1/2*X(00,9) + 1/2*X(10,9)$$
$$k = 2/5*X(00,10) + 3/5*X(10,10)$$
$$l = 1/4*X(00,11) + 3/4*X(10,11)$$
$$m = 1/2*X(00,12) + 1/2*X(10,12)$$
$$n = 3/7*X(00,13) + 4/7*X(10,13)$$
$$o = 1/3*X(00,14) + 2/3*X(10,14)$$
$$p = 1/5*X(00,15) + 4/5*X(10,15) \quad (74)$$

Reference symbol n denotes a pixel position in 4x4 pixel blocks.

As in Formula (24), a prediction signal may be calculated by only integer calculation as in formula (24).

In this manner, the bidirectional prediction of an interpolation block can perform not only simple interpolation prediction in which directions of the prediction modes are completely paired but also interpolation prediction which copes with slight changes in directivity or complexity of the blocks. Furthermore, weighting factors can be implicitly set in units of pixels, whereby appropriate filtering can be performed without increasing overhead information. As a result, a prediction residual error considerably reduces.

(Second Embodiment: Processing Procedure of Image Encoding)

A processing procedure of the image encoder 100 will be described below with reference to FIG. 63. When the input image signal 120 of one frame is input to the image encoder 100 (step S401), an encoding target frame of the input image signal 120 is divided by the frame divider 101 into a plurality of pixel blocks (macro-blocks) to generate a block image signal 121. Encoding to the block image signal 121 is started (step S402). The block image signal 121 is input to the predictor 102.

In the predictor 102, it is determined on the basis of the prediction order switching information 143 whether a prediction order of sub-blocks is changed (step S403). When the prediction order is not changed (the result in S403 is NO), block_order_flag is FALSE, and the prediction switching unit 170 selects "sequential block prediction", which predictively encodes sub-blocks in an order described in formula (59) .

In sequential block prediction, it is determined by the prediction mode count switching information 144 whether unidirectional prediction is performed to sub-blocks (step S404). When the unidirectional prediction is performed (the result in S404 is YES), the unidirectional predictor 171 performs prediction (step S406). When the unidirectional prediction is not performed (the result in S404 is NO), the bidirectional predictor 172 performs prediction (step S407).

On the other hand, when a prediction order is changed (the result in S403 is YES), block_order_flag is TRUE, and the prediction order switching unit 170 selects "extrapolation/interpolation block prediction" which predictively encodes sub-blocks in an order described in formula (59).

In the extrapolation/interpolation block prediction, it is determined by the prediction mode count switching information 144 whether unidirectional prediction is performed to sub-blocks (step S405). In this case, when the unidirectional prediction is performed (the result in S405 is YES), the unidirectional predictor 171 performs prediction (step S408). When the unidirectional prediction is not performed (the result in S405 is NO), the bidirectional predictor 172 performs prediction (step S409).

Upon completion of predictions in steps S406, S407, S408, or S409, total costs (1), (2), (3), or (4) in macro-blocks are calculated from formula (1) and formula (2) (steps S411, S412, S413, or S414). The total costs calculated in steps S411, S412, S413, or S414 are compared with each other to determine a predicting method (step S415). By the predicting method thus determined, the orthogonal transforming/quantizing unit 104 and the entropy encoder 108 perform encoding to output the encoded data 146 (step S416).

At this time, the inverse quantizing/inverse orthogonal transforming unit 105 performs inverse quantization and inverse orthogonal transformation to the quantization transformation coefficient information 127 to generate the decoded prediction residual error signal 128. The decoded prediction residual error signal 128 and the prediction signal 126 input from the mode selector 103 are added by the adder 106 to generate the local decoding signal 129. The local decoding signal 129 is accumulated in the reference image memory 106.

It is determined whether predictive encoding of one frame of the input moving image signal 120 is ended (step S417). When the predictive encoding is ended (the result in S417 is YES), the input image signal 120 of the next one frame is input, and predictive encoding is performed again. On the other hand, when predictive encoding of one frame is not ended (the result in S417 is NO), the operation returns to step S402 to perform predictive encoding to the block image signal 121 of the next macro-block. As procedures of predicting processes in steps S404 and S405, the same processes as those in the first embodiment are performed. For this reason, a description of the procedure will be omitted.

(Second Embodiment: First Example of Syntax Structure)

FIG. 64 shows another example of a syntax structure used in the image encoder 100 in the second embodiment. Necessary syntax information is macro-block layer syntax 208 in FIG. 32. In this case, a configuration of a macro-block layer syntax shown in FIG. 33 is replaced with a configuration shown in FIG. 64. The syntaxes will be described below.

Reference symbol block_order_flag described in the macro-block layer syntax in FIG. 64 shows whether prediction orders are switched in a macro-block. More specifically, the flag: block_order_flag which is FALSE means that prediction orders are not switched in the macro-block. The flag which is TRUE means that prediction orders are switched in the macro-block.

In the macro-block prediction syntax in FIG. 64, prediction mode information of each of the sub-blocks (4x4 pixel blocks or 8x8 pixel blocks) in a macro-block is clearly written. With respect to unidirectional prediction, prediction mode information representing a mode to be used in a plurality of prediction modes is expressed by intra4x4(8x8)_pred_mode_10_org or intra4x4(8x8)_pred_mode_11_org. With respect to bidirectional prediction, the prediction mode information includes two syntaxes. In this case, a prediction mode having a smaller mode index (list 0) of two prediction modes selected from a plurality of prediction modes is expressed by intra4x4(8x8)_pred_mode_10_org, and a prediction mode having a larger mode index (list 1) is expressed by intra4x4(8x8)_pred_mode_11_org. The prediction mode having a larger mode index (list 0) may be expressed by intra4x4(8x8)_pred_mode_10_org, and the prediction mode having a smaller mode index (list 1) may be expressed by intra4x4(8x8)_pred_mode_11_org.

A configuration of a macro-block prediction syntax when 4x4 pixel prediction is selected will be described below with reference to FIG. 64.

blkConv[block_order_flag][luma4x4BlkIdx] in FIG. 64 has a transformation table which transforms a prediction order as shown in FIG. 52 to output an index of an encoding target block.

Reference symbol intra4x4_pred_mode_10[block_order_flag][order] in FIG. 64 denotes data of an index obtained by transforming intra4x4_pred_mode_10_org[block_order_flag] [order] according to modeConv[block_order_flag][intra4x4_pred_mode_10_org] (described later).

Reference symbol intra-4x4_bi_pxed_flag in FIG. 64 denotes a flag which switches whether bidirectional prediction is performed to the 4x4 pixel blocks. More specifically, the flag: intra-4x4_bi_pred_flag which is FALSE means that unidirectional prediction is performed to the 4x4 pixel blocks. The flag which is TRUE means that bidirectional prediction is performed to the 4x4 pixel blocks.

Reference symbol intra4x4_pred_mode_11 in FIG. 64 denotes data of an index obtained by transforming intra4x4_pred_mode_11_org_[block__order_flag][order] according to modeConv[block_order_flag][intra4x4_pred_mode_11_org] (described later). The data intra4x4_pred_mode_11 is encoded when the intra-4x4_bi_pred_flag is TRUE.

Details of syntaxes will be described below.

Transformation is performed to luma4x4Blk for each block_order_flag according to a table expressed by blkConv [block_order_flag][luma4x4BlkIdx], and a block index: order, representing an encoding target sub-block is calculated (see FIG. 52).

When 4x4 pixel blocks represented by block index: order are to be predicted, as shown in FIG. 65, intra4x4_pred_mode_10_org[block_order_flag][order] is transformed into intra4x4_pred_mode_10[order]. This process is performed because usable prediction modes change depending on block_order_flag and positions of 4x4 pixel blocks in a macro-block. More specifically, as shown in FIG. 67, when block_order_flag is 0 (FALSE), intra4x4_pred_mode_10_org is directly assigned to intra4x4_pred_mode_10. At this time, the intra4x4_pred_mode_10 denotes data representing a prediction mode, which is used in prediction of the 4x4 pixel blocks, in prepared prediction modes of 9 types of the unidirectional prediction.

On the other hand, when the block_order_flag is 1 (TRUE: extrapolation/interpolation block prediction), tables are switched depending on positions of the 4x4 pixel blocks in an encoding target macro-block. FIG. 68 shows prediction modes which can be used in the sub-blocks (the interpolation blocks (1), (2), and (3), and the extrapolation block (4)) shown in FIGS. 53A and 53B and name of the prediction modes when macro-blocks adjacent to an encoding target macro-block on the left, upper, upper right, and upper left sides can be referred to.

As shown in FIG. 68, it is apparent that, although all 17 modes can be used in the interpolation block (1), the interpolation blocks (2) and (3) have unusable modes. Therefore, as shown in FIG. 67, intra4x4_pred_mode_10_org [block_order_flag] [order] is converted into intra4x4_pred_mode_10 by modeConv[][] to remove an unusable prediction mode in advance, so that efficiency of entropy encoding (described later) is improved. As a concrete example of transformation, when a prediction mode of the interpolation block (2) is mode 15 (inverse-direction vertical-right prediction), "13" is assigned to the intra4x4_pred_mode_10. When the prediction mode of the interpolation block (3) is mode 14 (inverse-direction horizontal-upper prediction), "12" is assigned to the intra4x4_pred_mode_10.

When the intra4x4_pred_mode_10 is to be encoded, the number of states of usable modes changes depending on block_order_flag and block positions. For this reason, entropy encoding (Huffman coding, Golomb coding, arithmetic coding, or the like) is performed depending on the positions of 4x4 pixel blocks to be encoded. The number of states which can be held by a symbol is shown in FIG. 67. The above is an explanation of the syntaxes about encoding of the intra4x4_pred_mode_10_org.

When the intra-4x4_bi_pred_flag is TRUE, intra4x4_pred-inode_11_org is encoded. With respect to the encoding of the intra4x4_pred_mode_11_org, almost the same processes as those in the intra4x4_pred_mode_10_org are performed.

The intra4x4_pred_mode_11_org is transformed into intra4x4_pred_mode_11 according to modeConv[][], and entropy encoding of the intra4x4_pred_mode_11 is performed by a variable length code depending on block_order_flag and order. However, since the intra4x4_pred_mode_11 and the intra4x4_pred_mode_10 cannot have the same prediction mode, the number obtained by subtracting 1 from the number of states of the intra4x4_pred_mode_10 is the number of states which can be obtained by the intra4x4_pred_mode_11. On the basis of the number of states, the entropy encoding is performed.

As another example, the intra4x4_pred_mode_10_org and the intra4x4_pred_mode_11_org may be entropy-encoded without being transformed according to the modeConv[][]. The above is the details of the syntaxes.

(Second Embodiment: Second Example of Syntax Structure)

FIG. 69 shows another example of a syntax structure used in the image encoder 100. Necessary syntax information is the macro-block layer syntax 208 shown in FIG. 32. In this case, the configuration of the macro-block layer syntax shown in FIG. 33 is replaced with a configuration shown in FIG. 69. The syntaxes will be described below.

Reference symbol block_order_flag shown in a macro-block layer syntax in FIG. 69 denotes a flag representing whether prediction orders are switched in the macro-block. When the flag block_order_flag is TRUE, the prediction orders are switched to perform extrapolation/interpolation block prediction. On the other hand, when the flag block_order_flag is FALSE, the prediction orders are not switched, and sequential block prediction is performed. A concrete method of describing a prediction order when the flag block_order_flag is TRUE is shown in block_order_in_mb_mode. The block_order_in_mb_mode shows the prediction order as follows.

When the prediction mode is mode 0, a prediction order in execution of the extrapolation/interpolation block prediction described in the first embodiment is given. When the prediction mode is mode 1, a combination of prediction orders is transformed into an index, and the prediction orders are shown by index information. When a prediction order is determined for four blocks, one of 23 prediction orders obtained by removing the sequential block prediction from 24 prediction orders (= 4P4) by permutation is determined for each macro-block. More specifically, the block_order_idx shown in FIG. 69 gives the block combination index. When the prediction mode is mode 2, order numbers are directly shown to the blocks, respectively. An order of 4x4 pixel blocks is shown by 16 block_order4x4[BLK]. An order of 8x8 pixel blocks is shown by 4 block_order8x8[BLK].

The syntax structure can also be modified as described below.

(a) When the block_order_in_mb_mode is 1, only 1 block to be encoded first may be shown.

(b) In the 4x4 pixel prediction, since the number of indexes of prediction orders are enormous, the prediction orders of the 4x4 pixel blocks shown in units of 8x8 pixel blocks may be repeated four times to reduce information of the indexes.

(c) When the block_order_in mb_mode is 2, block_order4x4[BLK] may be shown by an external table, a difference between the block_order4x4[BLK] and adjacent block_order4x4[] may be expressed by a variable code length.

(d) Since the final block_order4x4[15] is one remaining prediction order, block order4x4[15] need not be shown. The same as described above is applied to the 8x8 pixel blocks. In the 4x4 pixel prediction, the prediction orders of the 4x4 pixel blocks shown in units of 8x8 pixel blocks may be repeated four times to reduce information of the block_order4x4.

(e) Values of information of the block_order_in_mb_mode, the block_order_idx, the block_order4x4, and the block order8x8 are adaptively set in units of sequences, pictures, slices, or macro-blocks.

(Second Embodiment: Third Example of Syntax Structure)

FIGS. 70, 71, 72, 73, and 74 show still another examples of the structure of the syntax used in the image encoder 100. The syntax information required in the examples includes the sequence parameter set syntax 202, the picture parameter set syntax 203, the slice header syntax 205, and the macro-block layer syntax 208 in FIG. 32. The syntaxes shown in FIGS. 70, 71, 72, 73, and 74 are added to the syntax structure of the first example. The syntaxes will be described below.

Reference symbol block_order_in_seq_flag shown in the sequence parameter set syntax in FIG. 70 denotes a flag representing whether switching of prediction orders is made possible in a sequence. When the flag block_order_in_seq_flag is TRUE, the prediction orders can be switched in the sequence. On the other hand, when the flag block_order_in_seq_flag is FALSE, the prediction orders cannot be switched in the sequence.

Reference symbol block_order_in_pic_flag in the picture parameter set syntax in FIG. 71 denotes a flag representing whether switching of the prediction orders is made possible in the picture. When the flag block_order_in_pic_flag is TRUE, the prediction orders can be switched in the picture. On the other hand, when the flag block_order_in_pic_flag is FALSE, the prediction orders cannot be switched in the picture.

Reference symbol block_order_in_slice_flag shown in the slice header syntax in FIG. 72 denotes a flag representing whether switching of the prediction orders is made possible in the slice. When the flag block_order_in_slice_flag is TRUE, the prediction orders can be switched in the slice. On the other hand, when the flag block_order_in_slice_flag is FALSE, the prediction orders cannot be switched in the slice.

Reference symbol block_order_flag shown in the macro-block layer syntax in FIG. 73 denotes a flag representing whether the prediction orders are switched in the macro-block. When the block_order_flag is TRUE, the prediction orders are switched, and extrapolation/interpolation block prediction is performed. On the other hand, when the flag block_order_flag is FALSE, sequential block prediction is performed without switching the prediction orders. The flag block_order_flag is effective only when the flag block_order_in_slice_flag is TRUE, and can be used only when a prediction type of the macro-block is intra-frame prediction.

Reference symbol intra_bi_pred_in_seq_flag shown in the sequence parameter set syntax in FIG. 70 is a flag representing whether bidirectional prediction is made possible in the sequence. When the flag intra_bi_pred_in_seq_flag is TRUE, bidirectional prediction can be performed in the sequence. On the other hand, when the intra_bi_pred_in_seq_flag is FALSE, the bidirectional prediction cannot be performed in the sequence.

Reference symbol intra_bi_pred_in_pic_flag shown in the picture parameter set syntax in FIG. 71 is a flag representing whether bidirectional prediction is made possible in the picture. When the intra_bi_pred_in_pic_flag is TRUE, the bidirectional prediction can be performed in the picture. On the other hand, when the flag intra_bi_pred_in_pic_flag is FALSE, the bidirectional prediction cannot be performed in the picture.

Reference symbol intra_bi_pred_in_slice_flag shown in the slice header syntax in FIG. 72 is a flag representing whether bidirectional prediction is made possible in a slice. When the intra_bi_pred_in_slice_flag is TRUE, the bidirectional prediction can be performed in the slice. On the other hand, when the intra_bi_pred_in_slice_flag is FALSE, the bidirectional prediction cannot be performed in the slice.

Reference symbol intra_bi_pred_in_mb_flag shown in the macro-block layer syntax in FIG. 73 is a flag representing whether the bidirectional prediction is made possible in the macro-block. When the intra_bi_pred_in_mb_flag is TRUE, the bidirectional prediction can be performed in the macro-block. On the other hand, when the intra_bi_pred_in_mb_flag is FALSE, the bidirectional prediction cannot be performed in the macro-block.

Reference symbol intra4x4_bi_pred_flag shown in the macro-block prediction syntax in FIG. 74 denotes a flag representing whether bidirectional prediction is performed in the prediction block. When the intra4x4_bi_pred_flag is TRUE, the bidirectional prediction is performed in the prediction block. On the other hand, when the intra4x4_bi_pred_flag is FALSE, the bidirectional prediction is not performed in the macro-block. The intra4x4_bi_pred_flag is effective only when the intra_bi_pred_in_mb_flag is TRUE and can be used only when the prediction type of the macro-block is intra-frame prediction. An initial value of the syntax is set to be FALSE.

<Third Embodiment: Image Decoding Apparatus>

To an image decoding apparatus according to an embodiment of the present invention shown in FIG. 75, an encoding bit stream 320 transmitted from an image encoding apparatus (not shown; for example, the image encoding apparatus in FIG. 1) and transmitted through a transmission system or an accumulation system is input. The encoding bit stream 320 is temporarily accumulated in an input buffer 901 and separated by an inverse multiplexing unit 302 in units of frames on the basis of a syntax. Thereafter, the separated bit streams are input to a decoding unit 304. The decoding unit 304 includes an entropy decoding unit 305, an inverse quantizing/inverse orthogonal transforming unit 306, an adder 307, a reference image memory 308, and a prediction signal generator 309. The image decoding apparatus in FIG. 60 is realized by hardware such as an LSI chip or by execution of an image decoding program in a computer.
In the decoding unit 304, the encoding bit stream separated by the inverse multiplexing unit 302 is input to an entropy decoding unit 303. In the entropy decoding unit 303, according to the syntax structure shown in FIG. 32, code strings are entropy-decoded to a high-level syntax, a slice level syntax, and a macro-block level syntax of the encoding bit stream.
In this manner, from the entropy decoding unit 303, in addition to quantization transformation coefficient information 321 and quantization parameter information, information related to prediction modes such as prediction mode index information 331, block size switching information 332, and prediction mode count switching information 334 (the prediction mode index information, the block size switching information, and the prediction mode count switching information will be generally called prediction mode information) are output. The quantization transformation coefficient information 321 is information obtained by performing orthogonal transformation and quantization to a prediction residual error signal. The quantization parameter information includes information such as a quantization width (quantization step size) and a quantization matrix.
The quantization transformation coefficient information 321 is inversely quantized by the inverse quantizing/invexse orthogonal transforming unit 306 according to a recovered quantization parameter, and is subjected to inverse orthogonal transformation such as IDCT. In this case, the inverse orthogonal transformation has been explained. However, when wavelet transformation or the like is performed on an encoding side, the inverse quantizing/inverse orthogonal transforming unit 306 may perform corresponding inverse quantization/inverse wavelet transformation or the like.
A prediction residual error signal 322 is output from the inverse quantizing/inverse orthogonal transforming unit 306 and input to the adder 307. The adder 307 adds the prediction signal 323 output from the prediction signal generator 309 to the prediction residual error signal 322 to generate a decoded image signal 324. The decoded image signal 324 is input to the reference image memory 308, given to an output buffer 311, and output from the output buffer 311 at a timing managed by a decoding control unit 310.
On the other hand, the prediction mode index information 331, the block size switching information 332, and the prediction mode count switching information 334 decoded by the entropy decoding unit 305 are input to the prediction signal generator 309. To the prediction signal generator 309, an already decoded reference image signal 325 is further input from the reference image memory 308. The prediction signal generator 309 generates the prediction signal 323 with reference to the reference image signal 325 on the basis of the prediction mode index information 331, the block size switching information 332, and the prediction mode count switching information 334. The decoding control unit 310 performs control of all decoding processes of the decoding unit 304, for example, control of an input buffer 301 and the output buffer 311, control of a decoding timing, and the like.

(Prediction Signal Generator 309)

The prediction signal generator 309 will be described below with reference to FIG. 76. The prediction signal generator 309 shown in FIG. 76 is basically the same as the prediction signal generator 113 in the image encoding apparatus described above. In FIG. 61, in response to the reference image signal 325 from the reference image memory 308, an image signal of a sub-block in a macro-block is input to a unidirectional predictor 371 and a bidirectional predictor 372.
The unidirectional predictor 371 selects one prediction mode of a plurality of prepared prediction modes on the basis of the prediction mode index information 331 and generates a prediction signal with reference to the reference image signal 325 according to the selected prediction mode and the block size switching information 332. The bidirectional predictor 372 selects two prediction modes of the plurality of prepared prediction modes on the basis of the prediction mode index information 331 and generates a prediction signal with reference to the reference image signal 325 according to the selected prediction modes, the block size switching information 332, and weighting factor information 335. Prediction signals output from the unidirectional predictor 371 and the bidirectional predictor 372 are input to a prediction mode count switching unit 373.
The prediction mode count switching unit 373 is controlled according to prediction mode count switching information 344 to select any one of the prediction signal generated by the unidirectional predictor 371 and the prediction signal generated by the bidirectional predictor 372, and outputs the selected prediction signal 323. FIGS. 6B and 7B show prediction orders to FIGS. 6A and 7A.

As described above, the prediction mode count switching unit 373 outputs the prediction signal obtained by the unidirectional predictor 371 when the prediction mode count switching information 334 represents prediction mode count "1", and outputs the prediction signal obtained by the bidirectional predictor 372 when the prediction mode count switching information 334 represents prediction mode count "2". The prediction signal output from the prediction mode count switching unit 373 is extracted as the output 323 from the prediction signal generator 309.

The prediction mode count switching unit 373 is controlled according to the prediction mode count switching information 334 given to each of the prediction blocks (4x4 pixel blocks or 8x8 prediction blocks) to output the prediction signal 323. More specifically, in the 4x4 pixel prediction, intra4x4_bi_pred_flag is described in each of the 4x4 pixel blocks.

More specifically, the prediction mode count switching unit 373 selects a prediction signal obtained by the unidirectional predictor 371 when the flag: intra4x4_bi_pred_flag serving as the prediction mode count switching information 334 is FALSE, and selects a prediction signal obtained by the bidirectional predictor 172 when the intra4x4_bi_pred_flag is TRUE.

(Bidirectional Predicting Unit 372)

The bidirectional predictor 372 will be described below with reference to FIG. 77. The bidirectional predictor 372 includes a first unidirectional predictor 375, a second unidirectional predictor 376, and a weighted average unit 380. Each of the first unidirectional predictor 375 and the second unidirectional predictor 376 are the same as the unidirectional predictor 371 shown in FIG. 76. Different prediction modes are input to the first unidirectional predictor 375 and the second unidirectional predictor 376 according to the prediction mode index information 331, respectively, to predict an encoding target block.

In the first unidirectional predictor 375 and the second unidirectional predictor 376, prediction signals 381 and 382 are generated with reference to the reference image signal 325 according to the prediction mode, the block size switching information 332, and the weighting factor information 335. The prediction signals 381 and 382 generated by the unidirectional predictors of two types are input to the weighted average unit 380. In the weighted average unit 380, a weighted average of the prediction signals 381 and 382 is obtained in units of pixels according to the weighting factor information 335 given by, for example, the decoding control unit 310 to output the prediction signal 323. However, the first unidirectional predictor 375 can be omitted when the same process as that of the unidirectional predictor 371 is performed. In this case, the prediction signal output from the unidirectional predictor 371 and the prediction signal 382 output from the second unidirectional predictor 376 are input to the weighted average unit 380.

Since concrete processes of the unidirectional predictor 371 and the weighted average unit 380 are the same as those of the unidirectional predictor 171 and the weighted average unit 180 in the image encoding apparatus, a description thereof will be omitted. A method of setting a weighting factor in each of the prediction modes used in calculation of a weighted average in the weighted average unit 380 is the same as that in the weighted average unit 180. The weighting factor, as described above, is set in such a manner that, for example, the weighting factor information 335 is given from the decoding control unit 310 to the weighted average unit 380 in the bidirectional predictor 372. More specifically, in the embodiment, for example, it is assumed that the decoding control unit 310 has a function of a weighting factor setting unit which calculates and sets a weighting factor. The weighting factor setting unit may be arranged in, for example, the bidirectional predictor 372 in FIG. 76 without being arranged in the decoding control unit 310. Furthermore, the weighting factor setting unit may be realized by a table given by a ROM.

The syntax structure is basically shown in FIG. 32. However, a configuration of a macro-block prediction syntax obtained when 4x4 pixel prediction is selected will be described below with reference to FIG. 34.

Reference symbol intra4x4_bi_pred_flag in FIG. 34 denotes a flag which switches whether bidirectional prediction is performed to the 4x4 pixel blocks. More specifically, the flag intra4x4_bi_pred_flag which is FALSE means that unidirectional prediction is performed to the 4x4 pixel blocks. The flag which is TRUE means that bidirectional prediction is performed to the 4x4 pixel blocks.

Reference symbol intra4x4_pred_mode_11 denotes data of a decoded index. The data intra4x4_pred_mode_11 is decoded when the intra4x4_bi_pred_flag is TRUE.

(Third Embodiment: First Example of Syntax Structure)

Details of syntaxes will be described below.

When 4x4 pixel blocks shown by a block index order are to be decoded, reference symbol intra4x4_pred_mode_10[luma4x4BlkIdx] denotes data representing one prediction mode, which is used in decoding of the 4x4 pixel blocks, of prediction modes of 9 types of the unidirectional prediction.

When the intra4x4_bi_pred_flag is TRUE, intra4x4_pred_mode_11[luma4x4BlkIdx] is further decoded to obtain data representing one prediction mode, which is used in decoding of the 4x4 pixel blocks, of prediction modes used in the bidirectional prediction together with the intra4x4_pred_mode_10. In another example, the information of the intra4x4_bi_pred_flag is separated from an encoding bit stream and decoded. However, the information of the intra4x4_bi_pred_flag is shown by the activity information calculated from decoded blocks and pixels. In this case, when the same logic at that on the encoding side is used, the information of the intra4x4_bi_pred_flag which is the same as that on the encoding side is shown. For this reason, separating and decoding processes from the encoding bit stream are not necessary.

As another example, prediction mode information may be expressed without using the intra4x4_bi_pred_flag as shown in FIG. 39. In this case, when the prediction modes indicated by the intra4x4_pred_mode_10 and the intra4x4_pred_mode_11 are equal to each other, the prediction is equivalent to the unidirectional prediction.

As still another example, the intra4x4_pred_mode_10 may be encoded by using correlation between the intra4x4_pred_mode_10 and the intra4x4_pred_mode_10 in an adjacent block. A concrete syntax structure is shown in FIG. 40, and the configuration of the macro-block prediction syntax shown in FIG. 34 is replaced with the configuration shown in FIG. 25. Reference symbol prev_intra4x4_pred_mode_10_flag[Luma4x4BlkIdx] in FIG. 40 denotes a flag representing whether the prediction mode ref_pred_mode in list 0 calculated from a reference block (described later) is the same as a prediction mode intra4x4_pred_mode_10[Luma4x4BlkIdx] in list 0 of a target block.

FIG. 41 shows a method of deriving the prev_intra4x4_pred_mode_10_flag[luma4x4BlkIdx]. In this case, reference symbol ref_blkA_mode_10 in FIG. 41 denotes a prediction mode in list 0 of a nearest encoded block blkA located on the left of a block blkA. Reference symbol ref_blkB_mode_10 denotes a prediction mode in list 0 of a nearest encoded block located on the upper side of a block blkB. The prediction modes ref_blkA_mode_10 and ref_blkB_mode_10 are concretely shown in FIG. 42. Reference symbols blkA and blkB denote decoded blocks which are adjacent to the target block and located on the left of the target block and on the upper side of the target block.

When the prev_intra4x4_pred_mode_10_flag[luma4x4BlkIdx] is TRUE, information of the intra4x4_pred_mode_10 is shown with 1 bit by using correlation between the target block and an adjacent block.

On the other hand, when prev_intra4x4_pred_mode_10_flag[luma4x4BlkIdx] [order] is FALSE, as a prediction mode in list 0 except for the prev_intra4x4_pred_mode_10_flag[luma4x4BlkIdx], rem_intra4x4_pred_mode_10 [luma4x4BlkIdx] is shown. Data representing one prediction mode of the prediction modes rem_intra4x4_pred_mode_10[luma4x4BlkIdx] except for ref_pred_mode is decoded on the basis of the number of states obtained by removing the ref_pred_mode from symbols which can be obtained according to the prediction mode in list 0.

Since syntaxes used in 8x8 pixel prediction are the same as those in the 4x4 pixel prediction shown in FIG. 32, a description thereof will be omitted.

(Third Embodiment: Second Example of Syntax Structure)

FIGS. 29, 30, 31, 32, 33, and 34 show other examples related to syntax structures related to the image decoding apparatus. Since the explanations of the syntaxes are the same as those in the image encoding apparatus, a description thereof will be omitted. The syntaxes are separated from bit streams and decoded to obtain information. Furthermore, the syntaxes may be switched depending on activity information such as correlation or variance of pixels in a decoded adjacent block. In this case, by using the same logic as that on the encoding side, the same information of the syntaxes as that in the encoding is shown. For this reason, separating and decoding processes from an encoding bit stream are not necessary.

According to one embodiment of the present invention, since the number of usable prediction modes can be selected, for example, bidirectional prediction which calculates prediction signals obtained in a plurality of prediction modes in units of pixels is selected to realize high prediction efficiency even to a complex texture. Furthermore, when weights of two prediction modes used in execution of the bidirectional prediction are set in units of pixels depending on distances to reference pixels and used, respectively, filtering of a prediction signal depending on directivities of the prediction modes can be performed.

<Fourth Embodiment: Image Decoding Apparatus>

To an image decoding apparatus according to an embodiment of the present invention shown in FIG. 78, an encoding bit stream 320 transmitted from an image encoding apparatus (not shown; for example, the image encoding apparatus in FIG. 1) and transmitted through a transmission system or an accumulation system is input. The encoding bit stream 320 is temporarily accumulated in an input buffer 901 and separated by an inverse multiplexing unit 302 in units of frames on the basis of a syntax. Thereafter, the separated bit streams are input to a decoding unit 304. The decoding unit 304 includes the entropy decoding unit 305, the inverse quantizing/inverse orthogonal transforming unit 306, the adder 307, the reference image memory 308, and the prediction signal generator 309. The image decoding apparatus in FIG. 78 is realized by hardware such as an LSI chip or by execution of an image decoding program in a computer.

In the decoding unit 304, the encoding bit stream separated by the inverse multiplexing unit 302 is input the entropy decoding unit 303. In the entropy decoding unit 303, according to the syntax structure shown in FIG. 32, code strings are entropy-decoded to a high-level syntax, a slice level syntax, and a macro-block level syntax of the encoding bit stream.

In this manner, from the entropy decoding unit 303, in addition to the quantization transformation coefficient information 321 and the quantization parameter information, information related to prediction modes such as the prediction mode index information 331, the block size switching information 332, prediction order switching information 333, and the prediction mode count switching information 334 (the prediction mode index information, the block size switching information, the prediction order switching information, and the prediction mode count information will be generally called prediction mode information) are output. The quantization transformation coefficient information 321 is information obtained by performing orthogonal transformation and quantization to a prediction residual error signal. The quantization parameter information includes information such as a quantization width (quantization step size) and a quantization matrix.

The quantization transformation coefficient information 321 is inversely quantized by the inverse quantizing/inverse orthogonal transforming unit 306 according to a recovered quantization parameter, and is subjected to inverse orthogonal transformation such as IDCT. In this case, the inverse orthogonal transformation is explained. However, when wavelet transformation or the like is performed on an encoding side, the inverse quantizing/inverse orthogonal transforming unit 306 may perform corresponding inverse quantization/inverse wavelet transformation or the like.

The prediction residual error signal 322 is output from the inverse quantizing/inverse orthogonal transforming unit 306 and input to the adder 307. The adder 307 adds the prediction signal 323 output from the prediction signal generator 309 to the prediction residual error signal 322 to generate a decoded image signal 324. The decoded image signal 324 is input to the reference image memory 308, given to the output buffer 311, and output from the output buffer 311 at a timing managed by the decoding control unit 310.

On the other hand, the prediction mode index information 331, the block size switching information 332, the prediction order switching information 333, and the prediction mode count switching information 334 decoded by the entropy decoding unit 305 are input to the prediction signal generator 309. To the prediction signal generator 309, a reference image signal 325 decoded in advance is further input from the reference image memory 308. The prediction signal generator 309 generates the prediction signal 323 with reference to the reference image signal 325 on the basis of the prediction mode index information 331, the block size switching information 332, the prediction order switching information 333, and the prediction mode count switching information 334. The decoding control unit 310 performs control of all decoding processes of the decoding unit 304, for example, control of an input buffer 301 and the output buffer 311, control of a decoding timing, and the like.

(Prediction Signal Generating Unit 309)

The prediction signal generator 309 will be described below with reference to FIG. 79. The prediction signal generator 309 shown in FIG. 79 is basically the same as the prediction signal generator 1013 in the image encoding apparatus described above. In FIG. 79, in response to the reference image signal 325 from the reference image memory 308, the prediction order switching unit 370 switches prediction orders of a sub-block in a macro-block on the basis of the prediction order switching information 333. Image signals the prediction orders of which are switched by the prediction order switching unit 370 are input to the unidirectional predictor 371 and the bidirectional predictor 372.

The unidirectional predictor 371 selects one prediction mode of a plurality of prepared prediction modes on the basis of the prediction mode index information 331 and generates a prediction signal with reference to the reference image signal 325 according to the selected prediction mode and the block size switching information 332.

On the other hand, the bidirectional predictor 372 selects two prediction modes of the plurality of prepared prediction modes on the basis of the prediction mode index information 331. The bidirectional predictor 372 generates a prediction signal with reference to the reference image signal 325 according to the selected prediction modes, the block size switching information 332, and weighting factor information 335. Prediction signals output from the unidirectional predictor 371 and the bidirectional predictor 372 are input to a prediction mode count switching unit 373.

The prediction mode count switching unit 373 is controlled according to the prediction mode count switching information 344 to select any one of the prediction signal generated by the unidirectional predictor 371 and the prediction signal generated by the bidirectional predictor 372, and outputs the selected prediction signal 323.

The prediction order switching unit 370 is controlled by the prediction order switching information 333. The prediction order switching unit 370 transforms an index: blk serving as the reference with a value of a flag: block_order_flag (described later) representing the prediction order switching information 333 to switch prediction orders of sub-blocks. With respect to an order: idx of the sub-blocks, an index: order (expressing a prediction order) of the sub-block in actual encoding is given by formula (59). A transformation table for transformation of blkConv[][] is as shown in FIG. 52.

When the flag: block_order_flag is 0 (FALSE), an index: order of a sub-block in actual execution of prediction encoding is just an index: idx of an encoding target sub-block, and prediction of blocks and prediction orders of the blocks are not changed (hereinafter, prediction performed in the prediction order will be called sequential prediction). FIGS. 6B and 7B show prediction orders obtained by sequential prediction to FIGS. 6A and 7A, respectively.

On the other hand, when the flag: block_order_flag is 1 (TRUE), an index: order of sub-blocks to which prediction encoding is actually performed shows a prediction order in which one diagonal block of four sub-blocks is predicted by extrapolation first and the three remaining blocks are predicted by extrapolation prediction or interpolation. The prediction in the prediction order is called extrapolation/interpolation block prediction. FIGS. 6C and 7C show a change of a prediction order obtained by extrapolation/interpolation block prediction to FIGS. 6A and 7A.

As described above, the sub-blocks the prediction orders of which are switched by the prediction order switching unit 370 are input to the unidirectional predictor 371 or the bidirectional predictor 372 to generate prediction signals corresponding to the sub-blocks. The prediction mode count switching unit 373 outputs a prediction signal obtained by the unidirectional predictor 371 when the prediction mode count switching information 334 represents prediction mode count "1" and outputs a prediction signal obtained by the bidirectional predictor 372 when the prediction mode count switching information 334 represents prediction mode count "2". The prediction signal output from the prediction mode count switching unit 373 is extracted as the output 323 from the prediction signal generator 309.

The prediction mode count switching unit 373 is controlled according to the prediction mode count switching information 334 given to each of the prediction blocks (4x4 pixel blocks or 8x8 prediction blocks) to output the prediction signal 323. More specifically, in the 4x4 pixel prediction, intra4x4_bi_pred_flag is described in each of the 4x4 pixel blocks.

More specifically, the prediction mode count switching unit 373 selects a prediction signal obtained by the unidirectional predictor 371 when the flag: intra4x4_bi_pred_flag serving as the prediction mode count switching information 334 is FALSE, and selects a prediction signal obtained by the bidirectional predictor 172 when the intra4x4_bi_pred_flag is TRUE.

(Bidirectional Predicting Unit 372)

The bidirectional predictor 372 will be described below with reference to FIG. 77. The bidirectional predictor 372 has the first unidirectional predictor 375, the second unidirectional predictor 376, and the weighted average unit 380. Each of the first unidirectional predictor 375 and the second unidirectional predictor 376 is the same as the unidirectional predictor 371 shown in FIG. 79. Different prediction modes are input to the first unidirectional predictor 375 and the second unidirectional predictor 376 according to the prediction mode index information 331, respectively, to predict an encoding target block.

In the first unidirectional predictor 375 and the second unidirectional predictor 376, the prediction signals 381 and 382 are generated with reference to the reference image signal 325 according to the prediction mode and the block size switching information 332. The prediction signals 381 and 382 generated by the unidirectional predictors of two types are input to the weighted average unit 380. In the weighted average unit 380, a weighted average of the prediction signals 381 and 382 is obtained in units of pixels according to the weighting factor information 335 to output the prediction signal 323. However, the first unidirectional predictor 375 can be omitted when the process of the unidirectional predictor 371 is performed. In this case, the prediction signal output from the unidirectional predictor 371 and the prediction signal 382 output from the second unidirectional predictor 376 are input to the weighted average unit 380.

Since concrete processes of the unidirectional predictor 371 and the weighted average unit 380 are the same as those of the unidirectional predictor 171 and the weighted average unit 180 in the image encoding apparatus, a description thereof will be omitted.

The syntax structure is basically shown in FIG. 32. However, a configuration of a macro-block prediction syntax obtained when 4x4 pixel prediction is selected will be described below with reference to FIG. 64.

Blkconv[block_order_flag][luma4x4BlkIdx] in FIG. 64 has a transformation table which transforms a prediction order as shown in FIG. 52 to output an index of a decoding target block. Reference symbol intra4x4_pred_mode-10 [block_order_flag][order] denotes data of a decoded index.

Reference symbol intra4x4_bi_pred_flag in FIG. 64 denotes a flag which switches whether bidirectional prediction is performed to the 4x4 pixel blocks. More specifically, the flag intra4x4_bi_pred_flag which is FALSE means that unidirectional prediction is performed to the 4x4 pixel blocks. The flag which is TRUE means that bidirectional prediction is performed to the 4x4 pixel blocks.

Reference symbol intra4x4_pred_mode_11 in FIG. 64 denotes data of the decoded index. The data intra4x4_pred_mode_11 is decoded when the intra4x4_bi_pred_flag is TRUE.

(Fourth Embodiment: First Example of Syntax Structure)

Details of syntaxes in the fourth embodiment will be described below.

Transformation is performed to luma4x4Blk for each block_order_flag according to a table expressed by blkConv[block_order_flag][luma4x4BlkIdx], and a block index: order representing an encoding target sub-block is calculated (see FIG. 52).

When 4x4 pixel blocks represented by block index order are to be decoded, the intra4x4_pred_mode_10[block_order_flag][order] is decoded, and as shown in FIG. 51, inversely transformed into intra4x4_pred_mode_10_org[block_order_flag][order]. This is a process which is performed because usable prediction modes change depending on block_order_flag and positions of blocks in a macro-block. More specifically, as shown in FIG. 67, when block_order_flag is 0 (FALSE), intra4x4_pred_mode_10_org is directly assigned to intra4x4_pred_mode_10. At this time, the intra4x4_pred_mode_10_org denotes data representing a prediction mode, which is used in prediction of the 4x4 pixel blocks, in prepared prediction modes of 9 types of the unidirectional prediction.

On the other hand, when the block_order_flag is 1 (TRUE: extrapolation/interpolation block prediction), tables are switched depending on positions of the 4x4 pixel blocks in an encoding target macro-block. More specifically, when intra4x4_pred_mode__10[1][order] decoded to the interpolation block (2) is 13, the prediction mode intra4x4_pred_mode_10_org[1][order] is 15 (inverse-direction vertical-right prediction). When intra4x4_pred_mode_10[1][order] decoded to the interpolation block (3) is 12, the prediction mode intra4x4_pred_ mode_10_org[1][order] is 14 (inverse-direction horizontal-upper prediction).

When the intra-4x4_bi_pred_flag is TRUE, the intra4x4_pred_mode_11[block_order_flag][order] is decoded. The decoded intra4x4_pred_mode_10[block_order_flag][order] is transformed into intra4x4_pred_mode_10_org[block_order_flag][order] as shown in FIG. 67.

In another example, pieces of information of block_order_flag and intra4x4_bi_pred_flag are separated from an encoding bit stream and decoded. However, by the activity information calculated from the decoded block and the pixels, the pieces of information of the block_order_flag and the intra4x4_bi_pred_flag may be shown. In this case, by using the same logic as that on the encoding side, the same information as that in the encoding side is shown as the pieces of information of the block_order_flag and the intra4x4_bi_pred_flag. For this reason, separating and decoding processes from an encoding bit stream are not necessary.

<Fifth Embodiment: Syntax Structure in Image Encoding Apparatus>

An image encoding apparatus according to another embodiment will be described below with a focus on portions different from those in the above explanation. Reference symbol block_order_flag shown in the macro-block layer syntax in FIG. 69 denotes a flag representing whether macro-blocks are switched in a prediction order. When the block_order_flag is TRUE, extrapolation/interpolation block prediction is performed while switching prediction orders. On the other hand, when the block_order_flag is FALSE, sequential block prediction is performed without switching the prediction orders.

When the block_order_flag is TRUE, a concrete method of describing a prediction order is shown by block_order_in_mb_mode. The block_order_in_mb_mode shows a prediction order as follows.

(a) When mode is 0, a prediction order in execution of extrapolation/interpolation block prediction is given.

(b) When mode is 1, a combination of prediction orders is transformed into index information, and the prediction order is shown by the index information. When a prediction order is to be determined for four blocks, one prediction order is determined for each macro-block in 23 prediction orders obtained by removing the sequential block prediction from 4P4 = 24 prediction orders by permutation. More specifically, the block_order_idx in FIG. 69 gives the block combination index.

(c) When mode is 2, an order number is directly shown to each block. With respect to 4x4 pixel blocks, the order is shown by 16 block_order4x4[BLK]. With respect to 8x8 pixel blocks, the order is shown by 4 block_order8x8[BLK].

As another example, when the block_order_in_mb_mode is 1, only one block to be decoded first may be shown. In 4x4 pixel prediction, since the number of indexes of prediction orders is enormous, an order of the 4x4 pixel blocks shown in units of 8x8 pixel blocks may be repeated four times to reduce information of the indexes.

When the block_order_in_mb_mode is 2, block_order4x4[BLK] may be shown by an external table. A difference between the block_order4x4[ELK] and an adjacent block_order4x4[] may be calculated and expressed by a variable code length. Since the final block_order4x4[15] is one remaining order, the block_order4x4[15] need not be shown. The same process is also performed to 8x8 pixel blocks. In the 4x4 pixel prediction, an order of 4x4 pixel blocks shown in units of 8x8 pixel blocks may be repeated four times to reduce the information of block_order4x4.

Values of pieces of information such as the block_order_in_mb_mode, the biock_order_idx, the block_order4x4, and the block order8x8 may be adaptively set in units of sequences, pictures, slices, and macro-blocks.

<Sixth Embodiment: Syntax Structure in Image Decoding Apparatus>

FIGS. 70, 71, 72, 73, and 74 show other examples related to syntax structures related to the image decoding apparatus. Since the explanations of the syntaxes are the same as those in the image encoding apparatus according to the fifth embodiment, a description thereof will be omitted.

<Seventh Embodiment: Image Encoding Apparatus>

In the second embodiment, when blocks to which extrapolation/interpolation block prediction is applied and blocks to which sequential block prediction is applied are mixed, different prediction modes are set in units of positions of sub-blocks. In this case, when a reference prediction mode to predict a prediction mode is to be derived, in a method of deriving a reference block as in the second embodiment, prediction mode sets (described later) of a reference block and an encoding target block are different from each other. For this reason, prediction performance of the prediction modes may be deteriorated. In the third embodiment, this point is improved as described below.

Names of sub-blocks in extrapolation/interpolation block prediction are described as shown in FIGS. 80A and 80B. FIG. 80A shows 8x8 pixel block positions in the 8x8 pixel block prediction and names thereof (A to D), and FIG. 80B shows 4x4 pixel block positions in 4x4 pixel block prediction and names thereof (AA, AB, AC, AD, BA, BB, BC, BD, CA, CB, CC, CD, DA, DB, DC, and DD).

In this case, the blocks AA, AB, AC, and AD belong to upper left 8x8 pixel blocks in the macro-block. Similarly, the blocks BA, BB, BC, and BD belong to upper right 8x8 pixel blocks in the macro-block, the blocks CA, CB, CC, and CD belong to lower left 8x8 pixel blocks in the macro-block, and the blocks DA, DB, DC, and DD belong to lower right 8x8 pixel blocks in the macro-block.

As prediction modes obtained by the bidirectional predictor 172, prediction modes of a maximum of 153 types (unidirectional prediction modes of 17 types + bidirectional prediction modes of 136 types (= 17C2)) are prepared. Therefore, in order to encode pieces of prediction mode information in units of pixel blocks, an amount of code which is equal to or larger than 7 bits/pixel block is necessary. In order to reduce the amount of code, appropriate prediction modes of N types are selected from the prediction modes of 153 types for each pixel block position of the extrapolation/interpolation block prediction, and the selected prediction modes may be defined as prediction mode candidates of an encoding target pixel block. A prediction mode group obtained by selecting prediction modes of 17 types from the plurality of prediction mode candidates is defined as a prediction mode set.

FIGS. 81, 82, and 83 show an example of prediction mode indexes corresponding to names (prediction order and prediction direction) of prediction mode when N = 17 is satisfied in the embodiment, i.e., a prediction mode set. FIG. 81 shows a prediction mode set of sequential block prediction. FIG. 82 shows a prediction mode set when 8x8 pixel prediction is performed by extrapolation/interpolation block prediction and when prediction order is given by D → B → C → A. FIG. 83 shows a prediction mode set when 8x8 pixel prediction is performed by extrapolation/interpolation block prediction and when prediction order is given by D → C → B → A. In FIGS. 81, 82, and 83, hatched regions indicate bidirectional prediction. FIG. 84 shows a correspondence relationship between prediction orders of pixel blocks and prediction mode sets. Indexes 0, 1, and 2 are given to the prediction orders in the prediction mode sets in FIGS. 81, 82, and 83, respectively.

In this case, the prediction modes need not be the prediction orders shown in FIGS. 81, 82, and 83. A prediction mode set may be configured by using prediction modes of another prediction order as shown in FIG. 9, 10, or 62. The prediction mode set may be configured by using only unidirectional prediction, and the prediction mode set may be configured by using only bidirectional prediction. Furthermore, even though a plurality of prediction orders of pixel blocks are present as in extrapolation/interpolation block prediction, a prediction mode set may be configured by prediction modes of different prediction orders, or the same prediction mode set may be configured.

As shown in FIGS. 81, 82, and 83, the prediction orders corresponding to the prediction mode indexes of the embodiment change depending on whether prediction of a sub-block is extrapolation/interpolation block prediction or sequential block prediction or depending on positions of sub-blocks in a macro-block. Therefore, when a prediction mode is to be predicted, in the method of deriving a reference block described in the second embodiment, a prediction mode set of a reference block and a prediction mode set of an encoding target block may be different from each other.

(Example of Syntax Structure: When Prediction Mode Count N = 17)

An outline of a syntax structure used in the image encoder 100 is as shown in FIG. 32. In a macro-block prediction syntax, as shown in FIG. 34, prediction mode information for each of sub-blocks (4x4 pixel blocks or 8x8 pixel blocks) in a macro-block is clearly written.

On the other hand, the configuration of the macro-block layer syntax shown in FIG. 33 is replaced with a configuration in FIG. 85. Reference symbol block_order_flag shown in the macro-block layer syntax in FIG. 85 denotes a flag representing whether prediction orders are switched in the macro-block. When the block_order_flag is TRUE, the prediction orders are switched to perform extrapolation/interpolation block prediction. When the block_order_flag is FALSE, the prediction orders are not switched, and sequential block prediction is performed. A concrete method of describing prediction orders when the block_order_flag is TRUE is shown in block_order_in_mb_mode. Reference symbol mb_bipred_intra_flag denotes unidirectional prediction or bidirectional prediction.

By using FIGS. 86A and 86B, 4x4 pixel prediction will be described below. A case in which an encoding target macro-block is a macro-block (mb_bipred_intra_flag is TRUE) to which bidirectional prediction is performed will be considered. When data representing a prediction mode, used in 4x4 pixel blocks to be encoded, of the plurality of prepared prediction modes is IntrRa4x4PredMode, a prediction mode Intra4x4PredMode[luma4x4BlkIdx] of an index luma4x4BlkIdx of the 4x4 pixel blocks is expressed by two syntaxes prev_intra4x4_bipred_mode_flag[luma4x4BlkIdx] and rem_intra4x4_bipred_mode[luma4x4BlkIdx]. The syntax prev_intra4x4-bipred mode_flag[luma4x4BlkIdx] denotes a flag representing whether a reference prediction mode ref_pred_mode which is a prediction value of a prediction mode derived from an adjacent block (described later) is the same as the prediction mode of the 4x4 pixel blocks to be encoded. When the prev_intra4x4_bipred_mode_flag[luma4x4BlkIdx] is TRUE, the reference prediction mode ref_pred_mode is the prediction mode Intra4x4PredMode[lumadx4BlkIdx] of the 4x4 pixel blocks to be encoded. For this reason, information of the prediction mode can be shown by only the flag prev_intra4x4_bipred_mode_flag[luma4x4BlkIdx].

On the other hand, when the flag prev_intra4x4_bipred_mode_flag[luma4x4BlkIdx] is FALSE, the rem_intra4x4 bipred_mode[luma4x4BlkIdx] which is a prediction residual error signal representing a difference between the prediction value of the prediction mode and the prediction mode is shown. When the flag prev_intra4x4_bipred_mode_flag (luma4x4BlkIdx] is FALSE, the ref_pted_mode is not the prediction mode Intra4x4FredMode[luma4x4BlkIdx] of 4x4 pixel blocks to be encoded, and thus, as shown in FIG. 87, as a prediction mode to be encoded, a value obtained by removing the ref_pred mode from the prediction mode Intra4x4PredMode[luma4x4BlkIdx] is defined as the rem_intra4x4_bipred_mode[luma4x4BlkIdx]. More specifically, as shown in FIG. 87, when the prediction mode Intra4x4PredMode [luma4x4BlkIdx] is a value equal to or larger than the ref_pred_mode, a value obtained by subtracting 1 from the prediction mode Intra4x4PredMode[luma4x4BlkIdx] is set in the rem_intra4x4_bipred_mode[luma4x4BlkIdx].

A method of deriving prediction value ref_pred_mode of a prediction mode will be described below. As the prediction value ref_pred_mode, a smaller one of prediction modes left_ref_pred_mode and upper_ref_pred mode in an encoded pixel block left_ref_blk located on the left of an encoding target pixel block (will be described below) and an encoded pixel block upper_ref_blk located on the upper side of the encoding target pixel block.

[Numerical Formula 75]

$$\text{ref_pred_mode} = \min(\text{left_ref_pred_mode}, \text{upper_ref_pred_mode}) \quad (75)$$

Reference symbol min(M, N) denotes an operator which outputs a small one of the values M and N.

Methods of deriving the prediction modes left_ref_pred_mode and upper_ref_pred_mode change depending on prediction sizes (4x4 pixel prediction or 8x8 pixel prediction) of an encoding target macro-block and an adjacent macro-block, a prediction order (extrapolation/interpolation block prediction or sequential block prediction) of a sub-block, and relative positions of 8x8 pixel blocks to be encoded or 4x4 pixel blocks to be encoded in a macro-block.

(1) When an encoding target pixel block is in the sequential block prediction:

A case in which an encoding target pixel block is in the sequential block prediction (block_order_flag = 0 (False)) will be described below.

When a pixel block adjacent to the left belongs to the same macro-block as that of the encoding target pixel block or when the pixel block does not belong to the same macro-block, but a left adjacent macro-block is in the sequential block prediction, a value of a prediction mode of a pixel block adjacent to the left as in H. 264 is set to the left_ref_pred_mode.

Similarly, when a pixel block adjacent to the upper side belongs to the same macro-block as that of the encoding target pixel block, or when the pixel block does not belong to the same macro-block, but an upper adjacent macro-block is in the sequential block prediction, a value of a prediction mode of a pixel block adjacent to the upper side as in H. 264 is set to the upper_ref_pred_mode.

When the left adjacent macro-block to which the left adjacent pixel block belongs is in not the sequential block prediction, a prediction mode index (2 in this example) of DC prediction is set to the left_ref_pred_mode.

Similarly, when the left adjacent macro-block to which the upper adjacent pixel block belongs is not in sequential block prediction, a prediction mode index (2 in this example) of DC prediction is set to the upper_ref_pred_mode.

(2) When an encoding target pixel block is in extrapolation/interpolation block prediction:

A case in which an encoding target pixel block is in extrapolation/interpolation block prediction (block_order_flag = 0 (TRUE)) will be described while being sorted depending on a pixel prediction size of the encoding target pixel block, a pixel prediction size of an adjacent pixel block, and an encoding order of sub-blocks.

(2-1) When an adjacent block is not in the extrapolation/interpolation block prediction:

When a left adjacent macro-block to which a pixel block adjacent to the left belongs is not in the extrapolation/interpolation block prediction, a prediction mode index (2 in this example) of DC prediction is set to the left_ref_pred_mode.
Similarly, when the left adjacent macro-block to which the upper adjacent pixel block belongs is not in the extrapolation/interpolation block prediction, the prediction mode index (2 in this example) of the DC prediction is set to the upper_ref_pred_mode.

(2-2) When an adjacent block is in the extrapolation/interpolation block prediction:

A case in which a left adjacent pixel block belongs to the same macro-block as that of an encoding target pixel block, a case in which the pixel block does not belong to the same macro-block, but a left adjacent macro-block is in the extrapolation/interpolation block prediction, a case in which an upper adjacent pixel block belongs to the same macro-block as that of an encoding target pixel block, and a case in which the pixel block does not belong to the same macro-block, but an upper adjacent macro-block is in the extrapolation/interpolation block prediction will be described below.

(In 8x8 Pixel Block Prediction: Derivation of left_ref_pred_mode)

A method of deriving left_ref_pred_mode when an encoding target macro-block is in 8x8 pixel block prediction and extrapolation/interpolation block prediction will be described below with reference to FIGS. 88A and 88B, FIGS. 89A and 89B, FIGS. 90A, 90B, 90C and 90D, FIG. 91, FIGS. 92A, 92B, 92C, and 92D, and FIG. 93.

(1-1) When a macro-block adjacent to the left of an encoding target macro-block is in the 8x8 pixel block prediction and the extrapolation/interpolation block prediction:

As shown in FIG. 88A, 8x8 pixel blocks A, B, C, and D in an encoding target block 501 refer to prediction modes of blocks A, B, C, and D in a left adjacent macro-block 502, respectively. For example, the block A sets a value of a prediction mode of the block A in the left adjacent macro-block 502 to the left_ref_pred_mode.

(1-2) When a macro-block adjacent to the left of the encoding target macro-block is in the 4x4 pixel block prediction and the extrapolation/interpolation block prediction:

As shown in FIG. 88B, the 8x8 pixel blocks A, B, C, and D in the encoding target block 501 refer to prediction modes of 4x4 blocks indicated by arrows, respectively. More specifically, the block A sets a value of a prediction mode of a block BA in a left adjacent macro-block 503 to the left_ref_pred_mode. The block B sets a value of a prediction mode of a block BB in the left adjacent macro-block 503 to the left_ref_pred_mode, the block C sets a value of a prediction mode of a block DC in the macro-block 503 to the left_ref_prad_mode, and the block D sets a value of a prediction mode of a block DD in the macro-block 503 to the left_ref_pred_mode.
As another example, the 8x8 pixel blocks in the encoding target block 501 may refer to sub-blocks having the same prediction mode set in the left adjacent macro-block 503. For example, the block A may set the values of the prediction modes of blocks AA, CA, and DA to the left_ref_pred_mode without setting the block BA to the left_ref_pred_mode. The same is also applied to the blocks B, C, and D.

(1-3) Alternatively, when a left adjacent macro-block is not present on a boundary between a screen and a slice:

A value (2 in this example) of a prediction mode index representing DC prediction is set to the left_ref_pred_mode.

(In 8x8 Pixel Block Prediction: Derivation of upper_ref_pred_mode)

A method of deriving upper_ref_pred_mode when an encoding target macro-block is in the 8x8 pixel block prediction and the extrapolation/interpolation block prediction will be described below with reference to FIGS. 89A and 89B.

(2-1) When a macro-block adjacent to the upper side of an encoding target macro-block is in the 8x8 pixel block prediction and the extrapolation/interpolation block prediction:

As shown in FIG. 89A, the 8x8 pixel blocks A, B, C, and D in the encoding target block 501 refer to prediction modes of blocks A, B, C, and D in an upper adjacent macro-block 504, respectively. For example, the block A sets a value of a prediction mode of the block A in the upper adjacent macro-block 504 to the upper_ref_pred_mode.

(2-2) When the macro-block adjacent to the upper side of the encoding target macro-block is in the 4x4 pixel block prediction and the extrapolation/interpolation block prediction:

As shown in FIG. 89B, the 8x8 pixel blocks A, B, C, and D in the encoding target block 501 refer to prediction modes of 4x4 pixel blocks indicated by arrows, respectively. More specifically, the block A sets a value of a prediction mode of a block CA in an upper adjacent macro-block 505 to the upper_ref_pred_mode. The block B sets a value of a prediction mode of a block DB in the upper adjacent macro-block 505 to the upper_ref_pred_mode, the block C sets a value of a prediction mode of a block CC in the macro-block 505 to the upper_ref_pred_mode, and the block D sets a value of a prediction mode of a block DD in the macro-block 505 to the upper_ref_pred_mode.

As another example, the 8x8 pixel blocks in the encoding target block 501 may refer to sub-blocks having the same prediction mode set in the upper adjacent macro-block 505. For example, the block A may set the values of the prediction modes of blocks AA, BA and DA to the upper_ref_pred_mode without setting the block CA in the left adjacent macro-block to the upper_ref_pred_mode. The same is also applied to the blocks B, C, and D.

(2-3) Alternatively, when an upper adjacent macro-block is not present on a boundary between a screen and a slice:

When the 4x4 pixel block prediction and the 8x8 pixel block prediction are not set, a value (2 in this example) of a prediction mode index representing DC prediction is set to the left_ref_pred_mode.

(In 4x4 Pixel Block Prediction: Derivation of left_ref_pred_mode)

A method of deriving left_ref_pred_mode when an encoding target macro-block is in the 4x4 pixel block prediction and the extrapolation/interpolation block prediction will be described below with reference to FIGS. 90A, 90B, 90C, 90D, and 91. In this case, the deriving methods change depending on 4x4 pixel block positions in the macro-block.

(3-1) When a macro-block adjacent to the left of an encoding target macro-block is in the 4x4 pixel block prediction and the extrapolation/interpolation block prediction:

(3-1-1) As shown in FIG. 90A, when a macro-block 512 adjacent to the left of an encoding target macro-block 511 is in the 4x4 pixel block prediction and the extrapolation/interpolation block prediction, 4x4 pixel blocks AA, AB, AC, and AD the block positions of which belong to upper left 8x8 pixel blocks in the encoding target macro-block 511 refer to 8x8 pixel blocks according to arrows shown in FIG. 90A, respectively. More specifically, a block AA sets a prediction mode of the block A in the left adjacent macro-block 512 to the left_ref_pred_mode. Similarly, the block AB sets a prediction mode of a block B in the left adjacent macro-block 512 to the left_ref_pred_mode, the block AC sets a prediction mode of a block C in the macro-block 512 to the left_ref_pred_mode, and the block AD sets a prediction mode of a block D in the macro-block 5112 to the left_ref_pred_mode.
(3-1-2) As shown in FIG. 90B, when a macro-block 522 adjacent to the left of an encoding target macro-block 521 is in the 4x4 pixel block prediction and the extrapolation/interpolation block prediction, 4x4 pixel blocks BA, BB, BC, and BD the block positions of which belong to the upper right 8x8 pixel blocks in the encoding target macro-block 521 refer to 4x4 pixel blocks belonging to upper left 8x8 pixel blocks adjacent to the left in the encoding target macro-block 521 according to arrows shown in FIG. 90B. More specifically, prediction modes of blocks AA, AB, AC, and AD in the same macro-block 521 are set to the left_ref_pred_mode.
(3-1-3) As shown in FIG. 90C, when a macro-block 532 adjacent to the left of an encoding target macro-block 531 is in the 4x4 pixel block prediction and the extrapolation/interpolation block prediction, 4x4 blocks CA, CB, CC, and CD the block positions of which belong to lower left 8x8 pixel blocks in the encoding target macro-block 531 refer to 8x8 pixel blocks in the left adjacent macro-block 532 according to arrows shown in FIG. 90C, respectively. More specifically, with respect to the description in (1-1), AA, AB, AC, and AD are replaced with CA, CB, CC, and CD, respectively.

(3-1-4) As shown in FIG. 90D, when a macro-block 542 adjacent to the left of an encoding target macro-block 541 is in the 4x4 pixel block prediction and the extrapolation/interpolation block prediction, 4x4 blocks DA, DB, DC, and DD the block positions of which belong to lower right 8x8 pixel blocks refer to 4x4 pixel blocks which belong in upper adjacent lower left 8x8 pixel blocks in the encoding target macro-block 541 according to arrows shown in FIG. 90D. More specifically, prediction modes of blocks BA, BB, BC, and BD in the same macro-block 541 are set to the left_ref_pred_mode.

(3-2) When a macro-block adjacent to the left of an encoding target macro-block is in the 4x4 pixel block prediction and the extrapolation/interpolation block prediction:

As shown in FIG. 91, when a macro-block 552 adjacent to the left of an encoding target macro-block 551 is in the 4x4 pixel block prediction and the extrapolation/interpolation block prediction, in any 4x4 pixel blocks in the macro-block 551, 4x4 pixel blocks at corresponding positions in the left adjacent 8x8 pixel block 532 are referred to.

(In 4x4 Pixel Block Prediction: Derivation of upper_ref_pred_mode)

A method of deriving upper_ref_pred_mode when an encoding target macro-block is in the 4x4 pixel block prediction and the extrapolation/interpolation block prediction will be described below with reference to FIGS. 92A, 92B, 92C, and 92D and FIG. 93. In this case, deriving methods change depending on 4x4 pixel block positions in a macro-block.

(4-1) When a macro-block adjacent to the upper side of an encoding target macro-block is in the 8x8 pixel block prediction and the extrapolation/interpolation block prediction:

(4-1-1) As shown in FIG. 92A, when a macro-block 562 adjacent to the upper side of an encoding target macro-block 561 is in the 8x8 pixel block prediction and the extrapolation/interpolation block prediction, 4x4 pixel blocks AA, AB, AC, and AD the block positions of which belong to upper left 8x8 pixel blocks in the macro-block 561 refer to 8x8 pixel blocks in the upper adjacent macro-block 562 according to arrows shown in FIG. 92A, respectively. More specifically, the block AA sets a prediction mode of the block A in the upper adjacent macro-block 562 to the upper_ref_pred_mode. Similarly, the block AB sets a prediction mode of a block B in the upper adjacent macro-block 562 to the upper_ref_pred_mode, the block AC sets a prediction mode of a block C in the macro-block 562 to the upper_ref_pred_mode, and the block AD sets a prediction mode of a block D in the macro-block 562 to the upper_ref_pred_mode.

(4-1-2) As shown in FIG. 92B, when a macro-block 572 adjacent to the upper side of an encoding target macro-block 571 is in the 8x8 pixel block prediction and the extrapolation/interpolation block prediction, 4x4 pixel blocks BA, BB, BC, and BD the block positions of which belong to the upper right 8x8 pixel blocks in the encoding target macro-block 571 refer to 8x8 pixel blocks in the upper adjacent macro-block 572 according to arrows shown in FIG. 92B. More specifically, with respect to the description in (1-1), AA, AB, AC, and AD are replaced with BA, BB, BC, and BD, respectively.

(4-1-3) As shown in FIG. 92C, when a macro-block 582 adjacent to the upper side of an encoding target macro-block 581 is in the 8x8 pixel block prediction and the extrapolation/interpolation block prediction, 4x4 pixel blocks CA, CB, CC, and CD the block positions of which belong to lower left 8x8 pixel blocks in the macro-block 581 refer to 4x4 pixel blocks in the 8x8 pixel blocks in the encoding target macro-block 581. More specifically, prediction modes of blocks AA, AB, AC, and AD in the same macro-block 581 are set to the upper_ref_pred_mode.

(4-1-4) As shown in FIG. 92D, when a macro-block 592 adjacent to the upper side of an encoding target macro-block 591 is in the 8x8 pixel block prediction and the extrapolation/interpolation block prediction, 4x4 pixel blocks DA, DB, DC, and DD the block positions of which belong to lower right 8x8 pixel blocks in the encoding target block 581 refer to 4x4 pixel blocks in upper adjacent 8x8 pixel blocks in the encoding target macro-block 581 according to arrows shown in FIG. 92D. More specifically, prediction modes of blocks BA, BB, BC, and BD in the same macro-block 581 are set to the upper_ref_pred_mode.

(4-2) When a macro-block adjacent to the left of an encoding target macro-block is in the 4x4 pixel block prediction and the extrapolation/interpolation block prediction:

As shown in FIG. 93, a macro-block 602 adjacent to the upper side of an encoding target macro-block 601 is in the 4x4 pixel block prediction and the extrapolation/interpolation block prediction, in any 4x4 pixel blocks in the macro-block 601, 4x4 pixel blocks at corresponding positions in the upper adjacent macro-block 602 are referred to.

As described above, when a prediction value of a prediction mode is calculated, indexes and prediction directions of prediction modes of an encoding target block and a reference block are always completely matched with an index and a prediction direction of the reference block. More specifically, since the prediction mode sets are matched with each other, efficiency of prediction mode encoding is improved.

Predicting and encoding procedures in pixel blocks will be described below with reference to FIG. 94.

When a prediction order (extrapolation/interpolation block prediction or sequential block prediction) in an encoding target macro-block is determined (step S500), prediction mode sets corresponding to prediction orders shown in FIGS. 80A and 80B are determined (step S501).

When the block image signal 121 is input to the predictor 102, a sub-block indicated by blk = 0 is set in the prediction signal generator 113 (step S502). Furthermore, depending on a position of the sub-block, left and upper reference blocks are determined, and a prediction value ref_pred_mode of a prediction mode is derived according to formula (75) (step S503).

A prediction mode and an encoding cost in the mode selector 103 and the internal mode selector 114 are initialized (step S504). For example, a prediction mode: index is set to 0, and a minimum encoding cost: min_cost is set to infinity.

The prediction signal 122 is generated by one mode index which can be selected to the sub-block indicated by blk = 0 by the prediction signal generator 113 (step S505). A difference between the block image signal 121 and the prediction signal 122 is calculated to generate the prediction residual error signal 123, and an encoding cost is calculated according to formula (1) or (2). A prediction mode adds an encoding cost required to encode the prediction mode to the encoding cost by using a prediction value ref_pred_mode of the prediction mode (step S506).

The mode selector 103 determines whether the calculated encoding cost is smaller than the minimum encoding cost: min_cost (step S507). When the encoding cost is smaller then the minimum encoding cost: min_cost (result in S507 is YES), the minimum encoding cost is updated by the calculated encoding cost, and prediction mode information obtained at this time is held as a best_mode index representing optimum prediction mode information (step S508).

When the calculated cost is larger than the minimum encoding cost: min_cost (result in S507 is NO), a mode index: index is incremented, and it is determined whether the incremented index is larger than a final number (MAX) of the mode (step S509). When the index is larger than MAX (result in S509 is YES), the optimum prediction mode information 125 and the prediction residual error signal 126 are given from the mode selector 103 to the orthogonal transformxng/quantizing unit 104, and orthogonal transformation and quantization are performed. The quantization transformation coefficient information 127 obtained by the orthogonal transforming/quantizing unit 104 is entropy-encoded together with the prediction mode index information 141 to which prediction of a prediction mode is performed by the entropy encoder 108 (step S510).

On the other hand, when the index is smaller than MAX (result in S509 is NO), the operation returns to step S305 to generate the prediction signal 122 of the prediction mode indicated by the next index.

When encoding is performed in best_mode, the quantization transformation coefficient information 163 obtained by the internal orthogonal transfoxming/quautizing unit 115 is given to the internal inverse quantizing/inverse orthogonal transforming unit 116, and inverse quantization and inverse transformation are performed. The decoded prediction residual error signal 164 generated by the internal inverse quantizing/inverse orthogonal transforming unit 116 is added to the prediction signal 162 of best_mode input from the internal mode selector 114 by the internal adder 117. The internal decoding signal 165 generated by the internal adder 117 is held in the internal reference image memory 118 (step S510).

The block encoding count: blk is incremented. It is determined whether the incremented value of blk is larger than the total number: BLK_MAX (16 in 4x4 pixel prediction and 4 in 8x8 pixel prediction) of small blocks in a macro-block (step S511). When the incremented value of blk is larger than BLK_MAX (result in S511 is YES), a predicting process in the macro-block is ended. On the other hand, when the incremented blk is smaller than the BLK_MAX (result in S511 is NO), the operation returns to step S503 to perform a predicting process of a small block indicated by the next blk.

A method of calculating an encoding cost of a predicting mode in steps S505 and S510 in FIG. 94 will be described below with reference to FIG. 95. It is determined whether a prediction value ref_pred_mode of a prediction mode determined in step S503 is equal to a prediction mode Intra4x4PredMode of an encoding target block (step S520).

When the prediction value ref_pred_mode of the prediction mode is equal to the prediction mode Intra4x4PredMode of the encoding target block (result in S520 is YES), 1 (TRUE) is set in the prev_4x4_bipred_mode_flag in FIGS. 86A and 86B (step S521). When the prediction value ref_pred_mode of the prediction mode is not equal to the prediction mode Intra4x4PredMode (result in S520 is NO), 0 (FALSE) is set in the prev_4x4_bipred_mode_flag (step S522), and prediction modes remaining in rem_intra4x4_bipred_mode except for the ref_pred_mode are set (step S523).

When a mode count N = 17, and when a prediction value of a prediction mode is equal to a prediction mode of an encoding target pixel block, encoding is performed with 1 bit (1 bin in arithmetic coding). When the prediction value of the prediction mode is not equal to the prediction mode of the encoding target pixel block, encoding is performed with 5 bits (5 bins in arithmetic coding).

In this case, as shown in FIG. 96, a position of an upper-left-end pixel in the encoding target pixel block is indicated by a distance (Ox, Oy) from an upper left end in an encoding target frame. Positions of 4x4 pixel blocks in the encoding target pixel block are indicated by distances (O4x O4y) from upper-left-end 4x4 pixel block positions in the encoding target frame. FIG. 96 shows (a) upper-left-end pixel positions 701, 702, 703, and 704 of sub-blocks AA, BA, CA, D in 4x4 pixel prediction and upper-left-end pixel positions 711, 712, 713, and 714 of sub-blocks A, B, C, and D in 8x8 pixel block prediction. A dotted line in FIG. 96 indicates an example, and the upper-left-end pixel position 703 of the sub-block CA is indicated by (Ox, Oy).

(Derivation by Pixel Position)

As another embodiment, macro-blocks to which an encoding target pixel block and a reference pixel block belong may derive relative positions (pixel units) of a left reference pixel block left_ref_blk and an upper reference pixel block upper_ref_blk in the extrapolation/interpolation block prediction from tables shown in FIGS. 97A, 97B, FIGS. 98A, 98B, 98C, and 98D.

Tables shown in FIGS. 97A and 97B and FIGS. 98A, 98B, 98C, and 98D will be described below. FIG. 97A shows a case in which an encoding target block and a reference block have equal prediction sizes. In the 4x4 pixels, 4 is set in predPartWidth and predPartHeight each. In the 8x8 pixels, 8 is set in predPartwidth and predPartHeight each. FIG. 97B shows a case in which the encoding target pixel block is in the 8x8 pixel block prediction and the reference pixel block is in the 4x4 pixel block prediction.

FIGS. 98A, 98B, 98C, and 98D show a case in which encoding target pixel blocks are in the 8x8 pixel block prediction and reference pixel blocks are in the 4x4 pixel block prediction. FIG. 98A shows a case in which 4x4 sub-blocks to be encoded belong to upper left 8x8 pixel blocks in a macro-block, FIG. 98B shows a case in which 4x4 sub-blocks to be encoded belong to upper right 8x8 pixel blocks in the macro-block, FIG. 98C shows a case in which 4x4 sub-blocks to be encoded belong to lower left 8x8 pixel blocks in the macro-block, FIG. 98D shows a case in which 4x4 sub-blocks to be encoded belong to lower right 8x8 pixel blocks in the macro-block.

The tables shown in FIGS. 97A and 97B and FIGS. 98A, 98B, 98C, and 98D show horizontal and vertical components expressing a pixel position (left_ref_blk pos_x, left_ref_bltt_pos_y) of the left_ref_blk referred to from an absolute position (position from an upper-left-end pixel of a frame) (Ox, Oy) of an upper-left-end pixel in an encoding target block and a pixel position [upper_ref_blk_pos_x, upper_ref_blk_pos_y) of the upper_ref_blk. Values xD and yD corresponding to the positions of the sub-blocks change depending on a prediction size of an adjacent maaxo-bloak. The upper_ref_blk and the left_ref_blk are derived according to the following formula:

[Numerical Formula 76]

pixel position of left_ref_blk:

$$left_ref_blk_pos_x = Ox + xD$$
$$left_ref_blk_pos_y = Oy + yD \qquad (76)$$

[Numerical Formula 77]

pixel position of upper_ref_blk:

$$upper_ref_blk_pos_x = Ox + xD$$
$$upper_ref_blk_pos_y = Oy + yD \qquad (77)$$

However, it is assumed that all pixels in the left_ref_blk hold a prediction mode left_ref_pred_mode held by an encoding target pixel block. It is assumed that all the pixels in the upper_ref_blk hold the prediction mode upper_ref_pred_mode held by the encoding target pixel block. Each of pixel positions represented by left_ref_blk_pos_x, left_ref_blk_pos_y, upper_ref_blk_pos_x, and upper_ref_blk_pos_y indicates a position of a pixel which is closest to an upper-left-end pixel of the encoding target pixel block of pixels in the left_Tef_blk and the upper_ref_blk.

(Derivation by 4x4 Pixel Block Position)

As still another embodiment, relative positions (4 pixel block units) of a left reference pixel block left_ref_blk and an upper reference pixel block upper_ref_blk when both macro-blocks to which the encoding target pixel block and the reference pixel block belong are in the extrapolation/interpolation block prediction may be derived from tables shown in FIGS. 99A and 99B and FIGS. 100A, 100B, 100C, and 100D.

The tables shown in FIGS. 99A and 99B and FIGS. 100A, 100B, 100C, and 100D will be described below. These tables show a case in which an encoding target pixel block is in the 8x8 pixel block prediction and a reference pixel block is in the 4x4 pixel block prediction. FIG. 99A shows a case in which the encoding target block and the reference block have the same prediction sizes. In 4x4 pixels, 1 is set to predPartWidth4x4 and predPartHeight4x4 each. In 8x8 pixels, 2 is set to the predPartWidth4x4 and the predPartHeight4x4 each. FIG. 84B show a case in which an encoding target pixel block is in the 8x8 pixel block prediction and a reference pixel block is in 4x4 pixel block prediction.

FIG. 100A shows a case in which 4x4 sub-blocks to be encoded belong to upper left 8x8 pixel blocks in a macro-block, FIG. 100B shows a case in which the 4x4 sub-blocks to be encoded belong to upper right 8x8 pixel blocks in the macro-block, FIG. 100C shows a case in which the 4x4 sub-blocks to be encoded belong to lower left 8x8 pixel blocks in the macro-block, and FIG. 100D shows a case in which the 4x4 sub-blocks to be encoded belong to lower right 8x8 pixel blocks in the macro-block.

The tables shown in FIGS. 99A and 99B and FIGS. 100A, 100B, 100C, and 100D show horizontal and vertical components expressing 4x4 pixel block positions (left_ref_blk_pos4x4_x, left_ref_blk_pos4x4_y) of the left_ref_blk to be referred to from a position (O4x, O4y) from upper-left-end 4x4 pixel blocks of 4x4 pixel blocks position frame in an encoding target block and 4x4 pixel block position (upper_ref_blk_pos4x4_x, upper_ref_blk_pos4x4_y) of the upper_ref_blk. The upper_ref_blk and the left_ref_blk are derived according to the following formula:

[Numerical Formula 78]

4x4 pixel block position of left_ref_blk:

$$\text{left_ref_blk_pos4x4_x} = \text{O4x} + \text{x4D}$$
$$\text{left_ref_blk_pos4x4_y} = \text{O4y} + \text{y4D} \quad (78)$$

[Numerical Formula 79]

4x4 pixel block position of upper_ref_blk:

$$\text{upper_ref_blk_pos4x4_x} = \text{O4x} + \text{x4D}$$
$$\text{upper_ref_blk_pos4x4_y} = \text{O4y} + \text{y4D} \quad (79)$$

However, when the left_ref_blk is in the 8x8 pixel prediction, it is assumed that all 4x4 pixel blocks in the 8x8 pixel blocks to be encoded hold a prediction mode left_ref_pred_mode. When the upper_ref_blk is in the 8x8 pixel prediction, it is assumed that all 4x4 pixel blocks in the 8x8 pixel blocks to be encoded hold a prediction mode upper_ref_pred_mode. 4x4 pixel block positions represented by left_ref_blk_pos4x4_x, left ref_blk_pos4x4_y, upper_ref_blk_pos4x4_x, and upper_ref blk_pos4x4_y indicate positions of 4x4 pixel blocks which are closest to an upper-left-end 4x4 pixel blocks of the encoding target pixel block of pixels in the left_ref_blk and the upper_ref_blk.

In the embodiment, the upper pixel block and the left pixel block which are closest to the encoding target pixel block and have the same prediction mode set are referred to. However, the closest pixel block is not always referred to, and the upper pixel block and the left pixel block having the same prediction mode may be referred to.

Furthermore, in the embodiment, when a pixel block to which the extrapolation/interpolation block prediction is applied refers to a pixel block to which the sequential block prediction is applied, and when a pixel block to which the sequential block prediction is applied refers to a pixel block to which the extrapolation/interpolation block prediction is applied, an index representing DC prediction is given by left_ref_pred_mode or upper_ref_pred_mode. However, a predicting process may be performed as another embodiment. For example, in the prediction mode set shown in FIG. 81, regardless of a predicting method, indexes 0 to 4 represent the same prediction direction. Therefore, in indexes 0 to 4, as described above, a prediction mode of a reference pixel block may be set as left_ref_pred_mode or upper_ref_pred_mode.

In the embodiment, the explanation has been given on the assumption that N = 17. However, N = 17 is not necessarily set, and another value may be set as N. For example, in the number of types of prediction modes such as N = 9, N = 33, or N =65, the same syntax structure as described above can be used. However, the rem_intra4x4_bipred_mode[luma4x4BlkIdx] requires 3 bits when N = 9, requires 5 bits when N = 33 types, and requires 6 bits when N = 65.

When a variable-length code is used in encoding of the rem_intra4x4_bipred_mode[luma4x4BlkIdx], a value N other than the above values can be applied.

Since syntaxes in the 8x8 pixel prediction are the same as the syntaxes in the 4x4 pixel prediction as shown in FIGS. 86A and 86B, a description thereof will be omitted.

<Eighth Embodiment: Image Decoding Apparatus>

An image decoding apparatus according to an eighth embodiment corresponding to the seventh embodiment will be described below. In this case, the entropy decoding unit 305 and the prediction mode index information 331 in FIG. 75 will be especially described below.

A case in which an encoding target macro-block is a macro-block (mb_bipred_intra_flag is TRUE) to which bidirectional prediction is performed will be considered. When data representing a prediction mode, used in 4x4 pixel blocks to be encoded, of a plurality of prepared prediction modes is Intra4xdPredMode, a prediction mode Intra4x4PredMode[luTna4x4BlkIdx] of an index luma4x4BlkIdx of the 4x4 pixel blocks is expressed by two syntaxes prev_intra4x4_bipred_mode_flag[luma4x4BlkIdx] and rem_intra4x4_bipred_mode[luma4x4Blkldx] .

The index prev_intra4x4_bipred_mode_flag[luma4x4BlkIdx] is a flag representing whether a prediction value ref_pred_mode of a prediction mode derived from the adjacent block is the same as a prediction mode of the 4x4 pixel blocks to be encoded. The flag prev_intra4x4_bipred_mode_flag[luma4x4BlkIdx] is decoded. When the prev_intra4x4_bipred_mode_flag[luma4x4BlkIdx] is TRUE, the ref_pred_mode is the prediction mode of the 4x4 pixel blocks to be encoded. For this reason, information of the prediction mode can be decoded with 1 bit.

On the other hand, when the prev_intra4x4_bipred_mode_flag[luma4x4BlkIdx] is FALSE, the rem_intra4x4_bipred_mode[luma4x4BlkIdx] is further decoded. Since the ref_pred_mode is not the prediction mode of the 4x4 pixel blocks to be encoded, an encoding target prediction mode is decoded from a prediction mode except for the ref_pred_mode.

More specifically, as shown in FIG. 101, when the rem_intra4x4_bipred_mode[luma4x4BlkIdx] is a value which is equal to or larger than the ref_pred_mode, a value obtained by incrementing the value of the rem_intra4x4_bipred_mode[luma4x4BlkIdx] by 1 is a prediction mode Intra4x4PredMode[luma4x4BlkIdx] used in the 4x4 pixel blocks to be encoded.

Furthermore, since calculation of a reference prediction mode is the same as that on the encoding side, a description thereof will be omitted.

As described above, according to the embodiment of the present invention, when a prediction order is made selectable, for example, not only extrapolation prediction using a correlation with a left or upper pixel but also interpolation prediction effectively using a correlation with a right or lower pixel can be performed.

Therefore, image encoding having high encoding efficiency and decoding of an encoded image can be realized.

The present invention is not directly limited to the embodiments, and the constituent elements can be modified and realized in an execution phase without departing from the spirit and scope of the invention. The plurality of constituent elements disclosed in the embodiments are appropriately combined to each other to make it possible to form various inventions. For example, several constituent elements may be omitted from all the constituent elements described in the embodiments. Furthermore, the constituent elements across the different embodiments may be appropriately combined to each other.

Industrial Applicability

The present invention can be used in high-performance compression encoding/decoding technique for a moving image or a still image.

## Claims

**1.** An image encoding method comprising:

predicting a plurality of pixel blocks by using an encoded pixel as a reference pixel according to a plurality of prediction modes having different prediction directions to generate a plurality of first prediction signals corresponding to the pixel blocks obtained by dividing a frame of an input image signal;
setting a weighting factor depending on the prediction directions of the plurality of prediction modes and a spatial distance between a prediction pixel in the pixel block and the reference pixel;
calculating a weighted average of the plurality of prediction signals according to the weighting factor to generate one second prediction signal corresponding to the pixel block; and

encoding a prediction residual error signal representing a difference between an image signal of the pixel block and the second prediction signal to generate encoded data.

**2.** An image encoding apparatus comprising:

a multidirectional predicting unit configured to predict a plurality of pixel blocks by using an encoded pixel as a reference pixel according to a plurality of prediction modes having different prediction directions to generate a plurality of first prediction signals corresponding to the pixel blocks obtained by dividing a frame of an input image signal;
a setting unit configured to set a weighting factor depending on the prediction directions of the plurality of prediction modes and a spatial distance between a prediction pixel in the pixel block and the reference pixel;
a weighted average unit configured to calculate a weighted average of the plurality of first prediction signals according to the weighting factor to generate one second prediction signal corresponding to the pixel block; and
an encoding unit configured to encode a prediction residual error signal representing a difference between an image signal of the pixel block and at least the second prediction signal to generate encoded data.

**3.** The image encoding apparatus according to claim 2, wherein
at least one of the plurality of prediction modes is an intra-frame prediction mode.

**4.** The image encoding apparatus according to claim 2, further comprising:

a unidirectional predicting unit configured to predict the pixel block by using an encoded pixel as a reference pixel according to a single prediction mode to generate one third prediction signal corresponding to each of the pixel blocks;
a selecting unit configured to select any one of the second prediction signal and the third prediction signal; and
a subtracting unit configured to calculate a difference between the image signal of the pixel block and the second prediction signal to generate the prediction residual error signal when the second prediction signal is selected and calculate a difference between the image signal of the pixel block and the third prediction signal to generate the prediction residual error signal when the third prediction signal is selected.

**5.** The image encoding apparatus according to claim 2, wherein
the selecting unit is configured to select any one of the second prediction signal and the third prediction signal according to a prediction mode count selected from a plurality of prediction mode counts, and
the encoding unit is configured to also encode information representing the selected prediction mode count to generate the encoded data.

**6.** The image encoding apparatus according to claim 2, wherein
the setting unit is configured to set the weighting factor by calculating the weighting factor depending on the prediction directions and the spatial distance.

**7.** The image encoding apparatus according to claim 2, wherein
the setting unit is configured to calculate a sum of reliabilities based on the spatial distances of the plurality of prediction modes as a denominator and calculate the reliability as a numerator to set the weighting factor.

**8.** The image encoding apparatus according to claim 7, wherein
the reliability is configured to be monotonously decreased depending on the spatial distance.

**9.** The image encoding apparatus according to claim 7, wherein
the reliability is configured to conform to at least one of (a) an auto-correlation function model including an isotropic correlation model and an elliptic correlation model, (b) a proportion/inverse proportion model, (c) an N-order function ($N \geq 1$) model, (d) a generalized Gaussian distribution model, and (e) a table in which weighting factors depending on the number of prediction modes are described, depending on the prediction direction and the spatial distance.

**10.** The image encoding apparatus according to claim 7, wherein the setting unit is configured to calculate, with respect to a plurality of distance components obtained by separating the spatial distance, reliability components of the distance components according to evaluation rules of the distance components and to calculate the reliability from the reliability components.

**11.** The image encoding apparatus according to claim 7, wherein
the setting unit is configured to calculate, with respect to a horizontal distance component and a vertical distance component obtained by separating the spatial distance, reliability components of the distance components according to evaluation rules of the distance components and to calculate the reliability from the reliability components.

**12.** The image encoding apparatus according to claim 2, wherein
the setting unit prepares a plurality of sets of the weighting factors in units of at least one of sequences, pictures, slices, macro-blocks, and sub-blocks, and
the weighted average unit is configured to selectively use the sets of the weighting factors.

**13.** The image encoding apparatus according to claim 12, wherein
the encoding unit is configured to also encode information representing the set of the weighting factors used by the weighted average unit to generate the encoded data.

**14.** The image encoding apparatus according to claim 12, wherein
the weighted average unit is configured to select the set of the weighting factors depending on activity information including at least one of a correlation and a variance of pixels in an encoded adjacent block.

**15.** The image encoding apparatus according to claim 6 or 7, wherein
the setting unit prepares a plurality of sets of the reliabilities in units of at least one of sequences, pictures, slices, macro-blocks, and sub-blocks, and
the weighted average unit is configured to selectively use the sets of the reliabilities.

**16.** The image encoding apparatus according to claim 15, wherein
the encoding unit is configured to also encode information representing the set of the reliabilities used by the weighted average unit to generate the encoded data.

**17.** The image encoding apparatus according to claim 15, wherein
the weighted average unit is configured to select the set of the reliabilities depending on activity information including at least one of a correlation and a variance of pixels in an encoded adjacent block.

**18.** An image decoding method comprising:

decoding encoded data including the prediction residual error signals to generate prediction residual error signals corresponding to a plurality of pixel blocks obtained by dividing a frame of an image signal;
predicting the pixel blocks by using a decoded pixel as a reference pixel according to a plurality of prediction modes having different prediction directions to generate a plurality of first prediction signals corresponding to the pixel blocks;
setting a weighting factor depending on the prediction directions of the plurality of prediction modes and a spatial distance between a prediction pixel in the pixel block and the reference pixel;
calculating a weighted average of the plurality of first prediction signals according to the weighting factor to generate one second prediction signal corresponding to the pixel block; and
generating the prediction residual error signal and a decoding image signal by using at least the second prediction signal.

**19.** An image decoding apparatus comprising:

a decoding unit configured to decode encoded data including the prediction residual error signals to generate prediction residual error signals corresponding to a plurality of pixel blocks obtained by dividing a frame of an image signal;
a multidirectional predicting unit configured to predict the pixel blocks by using a decoded pixel as a reference pixel according to a plurality of prediction modes having different prediction directions to generate a plurality of first prediction signals corresponding to the pixel blocks;
a setting unit configured to set a weighting factor depending on the prediction directions of the plurality of prediction modes and a spatial distance between a prediction pixel in the pixel block and the reference pixel;
a weighted average unit configured to calculate a weighted average of the plurality of first prediction signals according to the weighting factor to generate one second prediction signal corresponding to the pixel block; and
a generating unit configured to generate the prediction residual error signal and a decoding image signal by using at least the second prediction signal.

**20.** The image decoding apparatus according to claim 19, wherein at least one of the plurality of prediction modes is an intra-frame prediction mode.

**21.** The image decoding apparatus according to claim 19, further comprising:

a unidirectional predicting unit configured to predict the pixel block by using a decoded pixel as a reference pixel according to a single prediction mode to generate one third prediction signal corresponding to each of the pixel blocks; and
a selecting unit which selects any one of the second prediction signal and the third prediction signal,
wherein the decoding unit is configured to generate the decoding image signal by using the prediction residual error signal and the second prediction signal when the second prediction signal is selected and generate the decoding image signal by using the prediction residual error signal and the third prediction signal when the third prediction signal is selected.

**22.** The image decoding apparatus according to claim 21, wherein the selecting unit is configured to select any one of the second prediction signal and the third prediction signal according to a prediction mode count selected from a plurality of prediction mode counts; and the decoding unit is configured to decode the encoded data to generate information representing the selected prediction mode count.

**23.** The image decoding apparatus according to claim 19, wherein the setting unit is configured to set the weighting factor by calculating the weighting factor depending on the prediction directions and the spatial distance.

**24.** The image decoding apparatus according to claim 19, wherein the setting unit is configured to calculate a sum of reliabilities based on the spatial distances of the plurality of prediction modes as a denominator and calculate the reliability as a numerator to set the weighting factor.

**25.** The image decoding apparatus according to claim 24, wherein the reliability is configured to be monotonously decreased depending on the spatial distance.

**26.** The image decoding apparatus according to claim 24, wherein the reliability is configured to conform to at least one of (a) an auto-correlation function model including an isotropic correlation model and an elliptic correlation model, (b) a proportion/inverse proportion model, (c) an N-order function ($N \geq 1$) model, (d) a generalized Gaussian distribution model, and (e) a table in which weighting factors depending on the number of prediction modes are described, depending on the prediction direction and the spatial distance.

**27.** The image decoding apparatus according to claim 19, wherein the setting unit prepares a plurality of sets of the weighting factors in units of at least one of sequences, pictures, slices, macro-blocks, and sub-blocks, and the weighted average unit is configured to selectively use the sets of the weighting factors by the weighted average unit.

**28.** The image decoding apparatus according to claim 27, wherein the encoded data includes information representing a set of the weighting factors used by the weighted average unit to further generate the decoding image signal, and the decoding unit is configured to decode the encoded data to generate the information representing the set of the weighting factors.

**29.** The image decoding apparatus according to claim 27, wherein the weighted average unit is configured to select the set of the weighting factors depending on activity information including at least one of a correlation and a variance of pixels in a decoded adjacent block.

**30.** An image encoding method comprising:

predicting a plurality of pixel blocks according to a plurality of prediction modes to generate prediction signals corresponding to the pixel blocks obtained by dividing a frame of an input image signal;
encoding a prediction residual error signal representing a difference between an image signal of the pixel block and the prediction signal; and
encoding mode indexes representing the plurality of prediction modes in descending order of values.

**31.** An image encoding apparatus comprising:

a predicting unit which, for a plurality of pixel blocks obtained by dividing a frame of an input image signal, predicts the pixel blocks according to a plurality of prediction modes to generate prediction signals corresponding to the pixel blocks; and
an encoding unit which encodes a prediction residual error signal representing a difference between an image signal of the pixel block and the prediction signal and encodes mode indexes representing the plurality of prediction modes in descending order of values.

**32.** The image encoding apparatus according to claim 31, wherein
the encoding unit is configured to predict a second prediction mode having a second mode index to be encoded next from a first prediction mode having a first mode index encoded in advance when the mode index is encoded, predict a maximum value of values obtained by the second mode index, and encode the second mode index with a minimum code length required to express the maximum value.

**33.** An image encoding method comprising:

selecting a prediction order of a plurality of sub-blocks obtained by further dividing each of a plurality of pixel blocks obtained by dividing a frame of an input image signal from a plurality of predetermined prediction orders;
selecting one prediction mode set including a first prediction mode and a second prediction mode from a plurality of prediction mode sets predetermined to correspond to the plurality of prediction orders and including a plurality of prediction modes having different prediction directions according to the selected prediction order;
predicting the pixel blocks in units of the sub-blocks according to the first prediction mode to generate a plurality of prediction signals corresponding to the pixel blocks;
predicting the first prediction mode by using the second prediction mode corresponding to an encoded pixel block predicted according to the second prediction mode to generate a reference prediction mode;
setting a weighting factor to the first prediction signal depending on the prediction directions of the plurality of prediction modes and a spatial distance between a prediction pixel in the pixel block and a reference pixel;
calculating a weighted average of the first prediction signals according to the weighting factor to generate one second prediction signal corresponding to the pixel block; and
encoding a prediction residual error signal representing a difference between an image signal of the pixel block and the second prediction signal, information representing the selected prediction order, and mode information representing the first prediction mode generated on the basis of the reference prediction mode.

**34.** An image encoding apparatus comprising:

a first selecting unit configured to select a prediction order of a plurality of sub-blocks obtained by further dividing each of a plurality of encoding target pixel blocks obtained by dividing a frame of an input image signal from a plurality of predetermined prediction orders;
a second selecting unit configured to select one prediction mode set including a first prediction mode and a second prediction mode from a plurality of prediction mode sets predetermined to correspond to the plurality of prediction orders and including a plurality of prediction modes having different prediction directions according to the selected prediction order;
a first predicting unit configured to predict the i encoding target pixel blocks in units of the sub-blocks according to the first prediction mode to generate a plurality of prediction signals corresponding to the encoding target pixel blocks;
a second predicting unit configured to predict the first prediction mode by using the second prediction mode corresponding to an encoded pixel block predicted according to the second prediction mode to generate a reference prediction mode;
a setting unit configured to set a weighting factor to the first prediction signal depending on the prediction directions of the plurality of prediction modes and a spatial distance between a prediction pixel in the encoding target pixel block and a reference pixel;
a weighted average unit configured to calculate a weighted average according to the weighting factor to generate one second prediction signal corresponding to the encoding target pixel block; and
an encoding unit configured to encode a prediction residual error signal representing a difference between an image signal of the encoding target pixel block and the second prediction signal, information representing the selected prediction order, and mode information representing the first prediction mode generated on the basis of the reference prediction mode.

**35.** The image encoding apparatus according to claim 34, wherein
the mode information includes a flag representing whether the first prediction mode and the reference prediction mode are matched with each other and further includes a difference between the first prediction mode and the reference prediction mode when the first prediction mode and the reference prediction mode are different from each other.

**36.** The image encoding apparatus according to claim 34, wherein
the encoded pixel block includes left and upper pixel blocks which are closest to the encoding target pixel block.

**37.** The image encoding apparatus according to claim 34, wherein
the second predicting unit is configured to generate a predetermined constant as the reference prediction mode when the reference pixel block and the encoding target pixel block are different from each other in the prediction order.

**38.** The image encoding apparatus according to claim 34, wherein
the first selecting unit is configured to select, from 24 prediction orders which are combinations of orders of four sub-blocks obtained by dividing the rectangular encoding target pixel block, a prediction order to the four sub-blocks.

**39.** The image encoding apparatus according to claim 34, wherein
the prediction order selecting unit is configured to select a prediction order to four sub-blocks obtained by dividing the rectangular encoding target pixel block from prediction orders: (a) a prediction order given by a lower right pixel block → an upper right pixel block → a lower left pixel block → an upper left pixel block; (b) a prediction order given by a lower right pixel block → a lower left pixel block → an upper right pixel block → an upper left pixel block; and (c) a prediction order given by an upper left pixel block → an upper right pixel block → a lower left pixel block → a lower right pixel block.

**40.** An image decoding method comprising:

decoding encoded data to generate a prediction residual error signal, information representing a selected prediction order, and mode information representing a first prediction mode for each of a plurality of pixel blocks obtained by dividing a frame of an image signal;
selecting a prediction order to a plurality of sub-blocks obtained by dividing a decoding target pixel block from a plurality of predetermined prediction orders;
selecting one prediction mode set including the first prediction mode and a second prediction mode from a plurality of prediction mode sets predetermined to correspond to the plurality of prediction orders and including a plurality of prediction modes having different prediction directions according to the selected prediction order;
predicting the decoding target pixel blocks in units of the sub-blocks according to the first prediction mode represented by the decoded mode information to generate a plurality of prediction signals corresponding to the decoding target pixel blocks;
setting a weighting factor to the first prediction signal depending on the prediction directions of the plurality of prediction modes and a spatial distance between a prediction pixel in the decoding target pixel block and a reference pixel;
calculating a weighted average of the plurality of second prediction signals according to the weighting factor to generate one second prediction signal corresponding to the decoding target pixel block; and
generating a decoding image signal by using the second prediction signal and the prediction residual error signal.

**41.** An image decoding apparatus comprising:

a decoding unit configured to decode encoded data to generate a prediction residual error signal, information representing a selected prediction order, and mode information representing a first prediction mode for each of a plurality of pixel blocks obtained by dividing a frame of an image signal;
a first selecting unit configured to select a prediction order to a plurality of sub-blocks obtained by dividing a decoding target pixel block from a plurality of predetermined prediction orders;

a second selecting unit configured to select one prediction mode set including the first prediction mode and a second prediction mode from a plurality of prediction mode sets predetermined to correspond to the plurality of prediction orders and including a plurality of prediction modes having different prediction directions according to the selected prediction order;
a predicting unit configured to predict the decoding target pixel blocks in units of the sub-blocks according to the first prediction mode represented by the decoded mode information to generate a plurality of prediction signals corresponding to the decoding target pixel blocks;
a setting unit configured to set a weighting factor to the first prediction signal depending on the prediction directions of the plurality of prediction modes and a spatial distance between a prediction pixel in the decoding target pixel block and a reference pixel;
a weighted average unit configured to calculate a weighted average of the plurality of first prediction signals according to the weighting factor to generate one second prediction signal corresponding to the decoding target pixel block; and
a generating unit configured to generate a decoding image signal by using the second prediction signal and the prediction residual error signal.

**42.** The image decoding apparatus according to claim 41, wherein
the mode information includes a flag representing whether the first prediction mode and the reference prediction mode are matched with each other and further includes a difference between the first prediction mode and the reference prediction mode when the first prediction mode and the reference prediction mode are different from each other.

**43.** The image decoding apparatus according to claim 41, wherein
the decoded pixel block includes left and upper pixel blocks which are closest to the decoding target pixel block.

**44.** The image decoding apparatus according to claim 41, wherein
the first selecting unit is configured to select, from 24 prediction orders which are combinations of orders of four sub-blocks obtained by dividing the rectangular decoding target pixel block, a prediction order to the four sub-blocks.

**45.** The image decoding apparatus according to claim 41, wherein
the first selecting unit selects a prediction order to four sub-blocks obtained by dividing the rectangular encoding target block from prediction orders: (a) a prediction order given by a lower right pixel block → an upper right pixel block → a lower left pixel block → an upper left pixel block; (b) a prediction order given by a lower right pixel block → a lower left pixel block → an upper right pixel block → an upper left pixel block; and (c) a prediction order given by an upper left pixel block → an upper right pixel block → a lower left pixel block → a lower right pixel block.

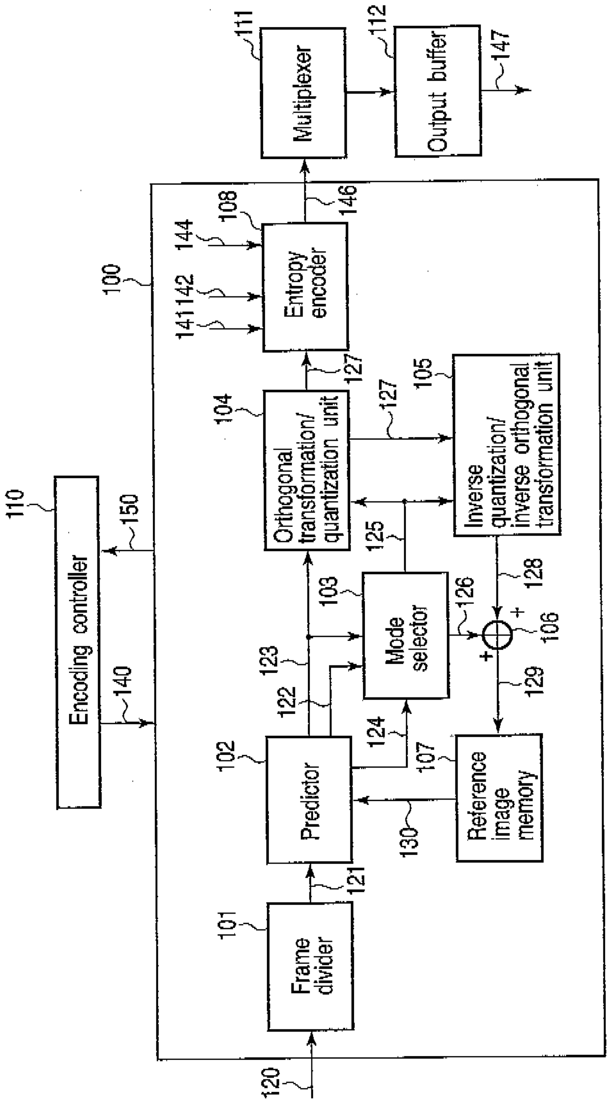
Encoding controller
110
140
150
100
Frame divider
101
120
121
Predictor
102
122
123
124
130
Reference image memory
107
Mode selector
103
125
126
Orthogonal transformation/ quantization unit
104
127
Inverse quantization/ inverse orthogonal transformation unit
105
128
129
106
Entropy encoder
108
141
142
144
146
Multiplexer
111
Output buffer
112
147

F I G. 1

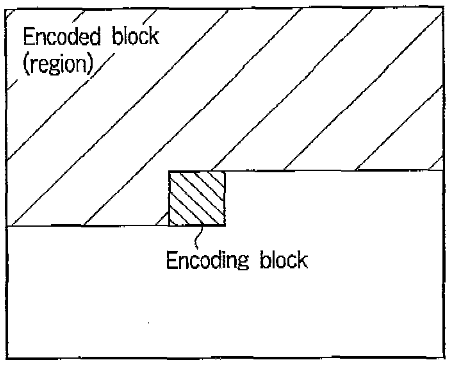


F I G. 2A

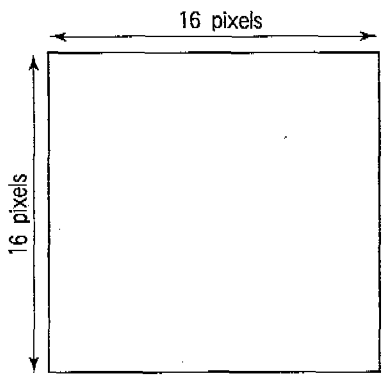


F I G. 2B

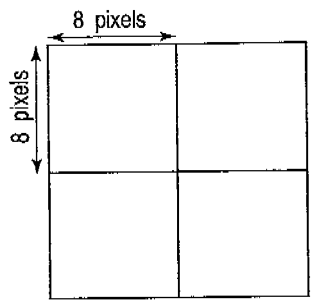


F I G. 3A

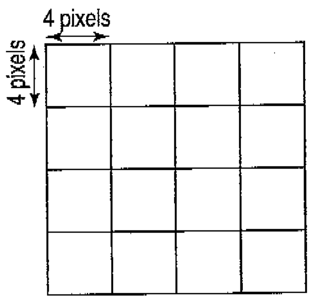


F I G. 3B

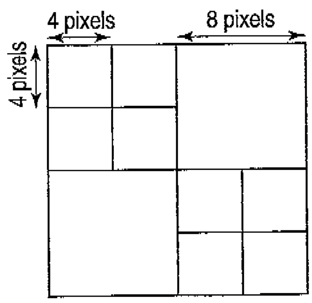


F I G. 3C

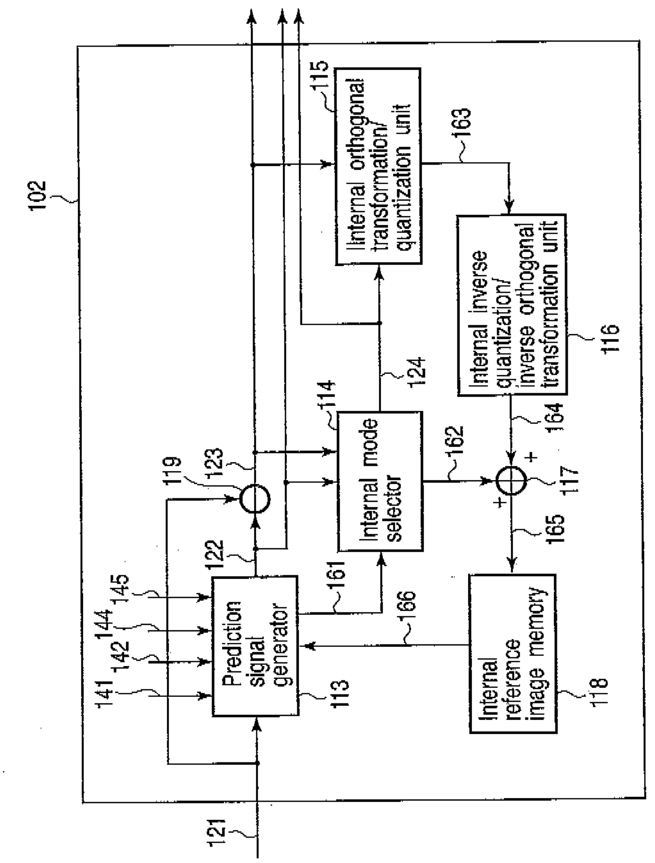
102
121
141
142
144
145
Prediction signal generator
113
166
161
122
119
123
Internal mode selector
114
162
117
165
164
124
Internal reference image memory
118
Internal orthogonal transformation/ quantization unit
115
163
Internal inverse quantization/ inverse orthogonal transformation unit
116

FIG. 4

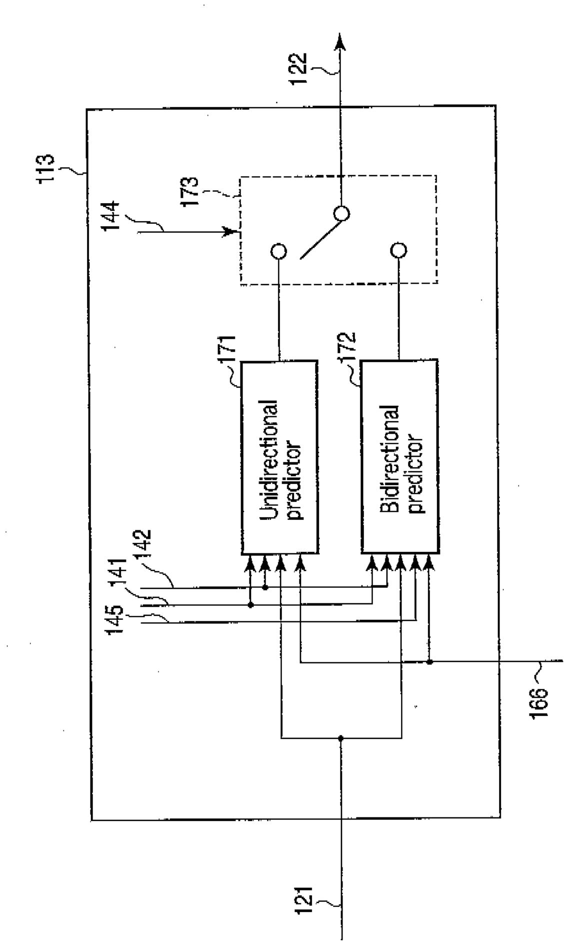
113
122
144
173
171
Unidirectional predictor
172
Bidirectional predictor
142
141
145
166
121

F I G. 5

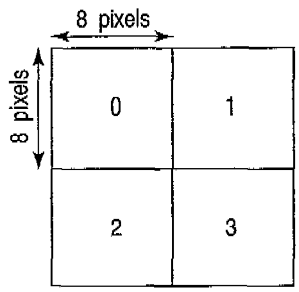


FIG. 6A

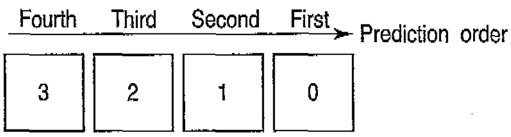


FIG. 6B

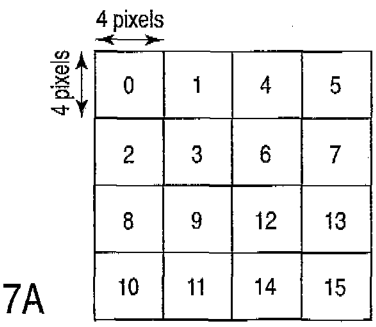


FIG. 7A

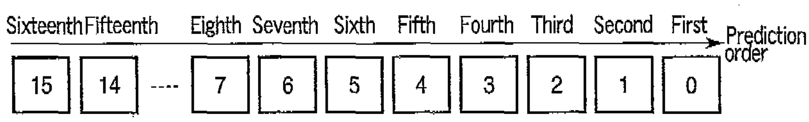


F I G. 7B

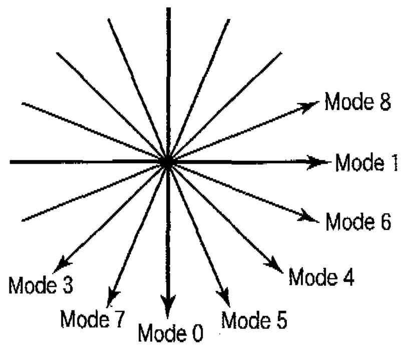


F I G. 8A

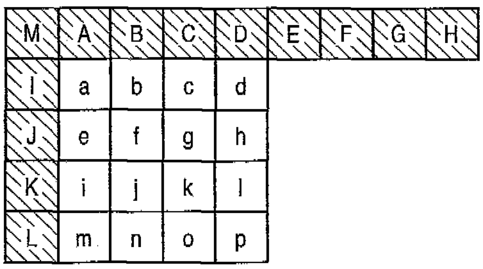


F I G. 8B

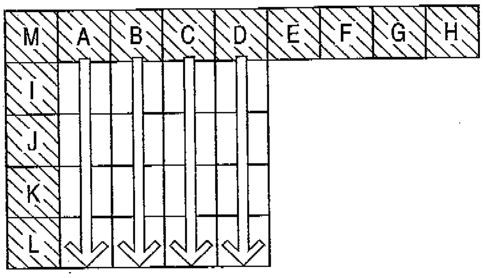


FIG. 8C

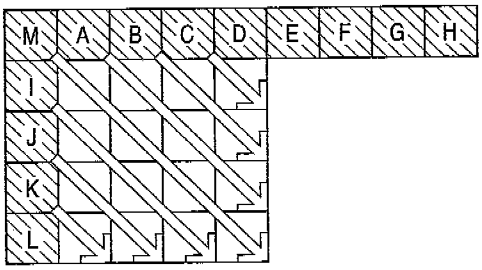


FIG. 8D

| Mode index | Unidirectional prediction name |
|---|---|
| 0 | Vertical prediction |
| 1 | Horizontal prediction |
| 2 | DC prediction |
| 3 | Diagonal-down-left prediction |
| 4 | Diagonal-down-right prediction |
| 5 | Vertical-right prediction |
| 6 | Horizontal-down prediction |
| 7 | Vertical-left prediction |
| 8 | Horizontal-upper prediction |

FIG. 9

| Mode index | Bidirectional prediction name | Mode index | Bidirectional prediction name |
|---|---|---|---|
| 01 | Vertical/horizontal prediction | 26 | DC/horizontal-down prediction |
| 02 | Vertical/DC prediction | 27 | DC/vertical-left prediction |
| 03 | Vertical/diagonal-down-left prediction | 28 | DC/horizontal-upper prediction |
| 04 | Vertical/diagonal-down-right prediction | 34 | Diagonal-down-left/orthogonal lower-right prediction |
| 05 | Vertical/right prediction | 35 | Diagonal-down-left/vertical-down-right prediction |
| 06 | Vertical/horizontal-down prediction | 36 | Diagonal-down-left/horizontal-down prediction |
| 07 | Vertical/vertical-left prediction | 37 | Diagonal-down-left/vertical-left prediction |
| 08 | Vertical/horizontal-upper prediction | 38 | Diagonal-down-left/horizontal-upper prediction |
| 12 | Horizontal/DC prediction | 45 | Diagonal-down-right/vertical-right prediction |
| 13 | Horizontal/diagonal-down-left prediction | 46 | Diagonal-down-right/horizontal-down prediction |
| 14 | Horizontal/diagonal-down-right prediction | 47 | Diagonal-down-right/vertical-left prediction |
| 15 | Horizontal/vertical-right prediction | 48 | Diagonal-down-right/horizontal-upper prediction |
| 16 | Horizontal/horizontal-down prediction | 56 | Vertical-right/horizontal-down prediction |
| 17 | Horizontal/vertical-left prediction | 57 | Vertical-right/vertical-left prediction |
| 18 | Horizontal/horizontal-upper prediction | 58 | Vertical-right/horizontal-upper prediction |
| 23 | DC/diagonal-down-left prediction | 67 | Horizontal-down/vertical left prediction |
| 24 | DC/diagonal-down-right prediction | 68 | Horizontal-down/horizontal-upper prediction |
| 25 | DC/vertical-right prediction | 78 | Vertical-left/horizontal-upper prediction |

FIG. 10

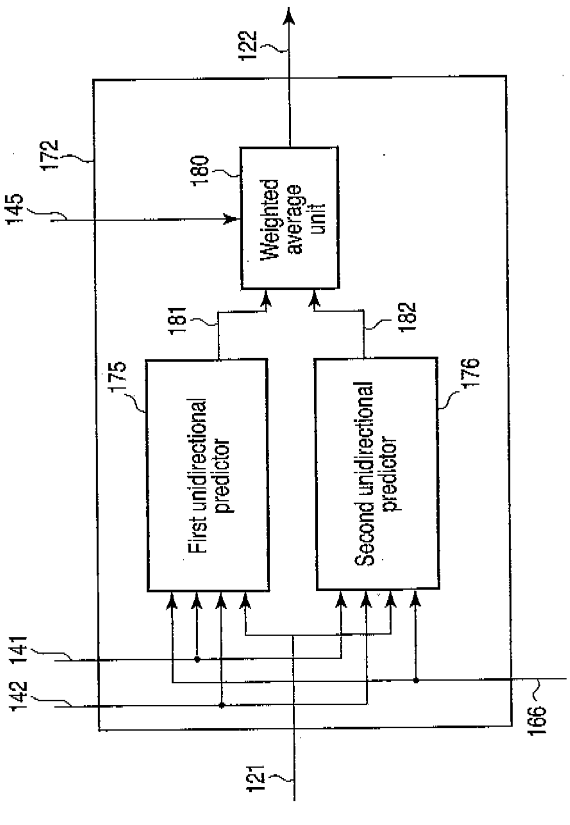

122
172
145
180
Weighted average unit
181
182
175
First unidirectional predictor
Second unidirectional predictor
176
141
142
166
121


F I G. 11

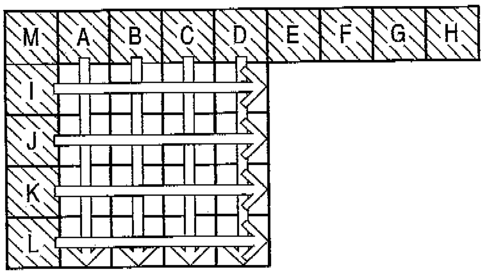


F I G. 12A

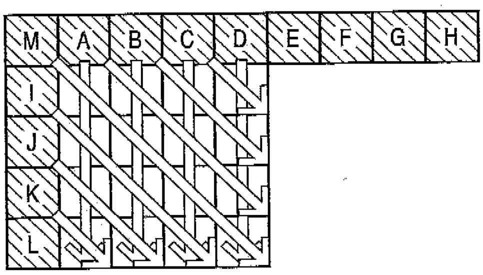


F I G. 12B

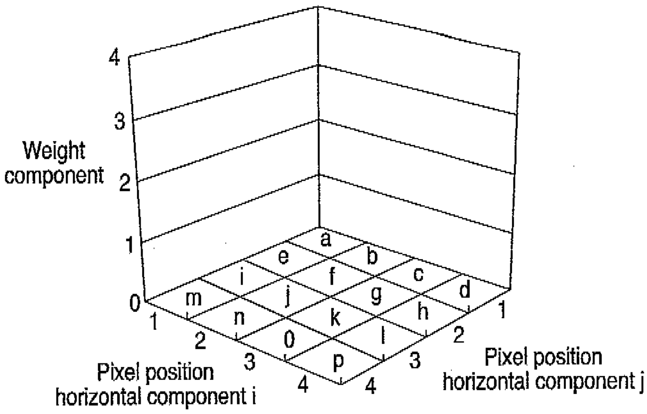
4
3
2
1
0
Weight
component
a
b
c
d
e
f
g
h
i
j
k
l
m
n
0
p
1
2
3
4
1
2
3
4
Pixel position
horizontal component i
Pixel position
horizontal component j

F I G. 13

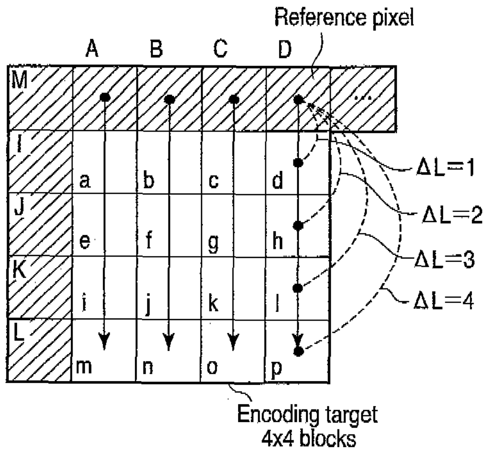


FIG. 14A

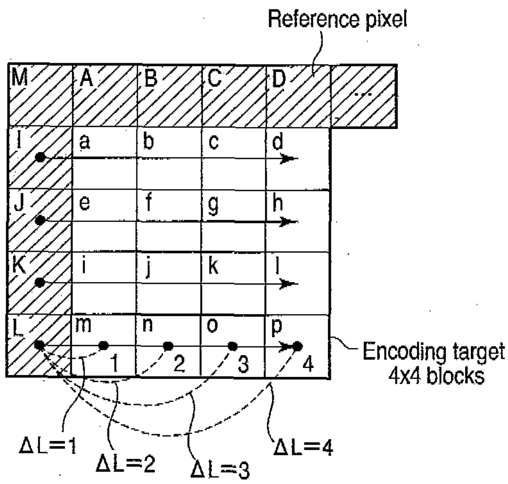


FIG. 14B

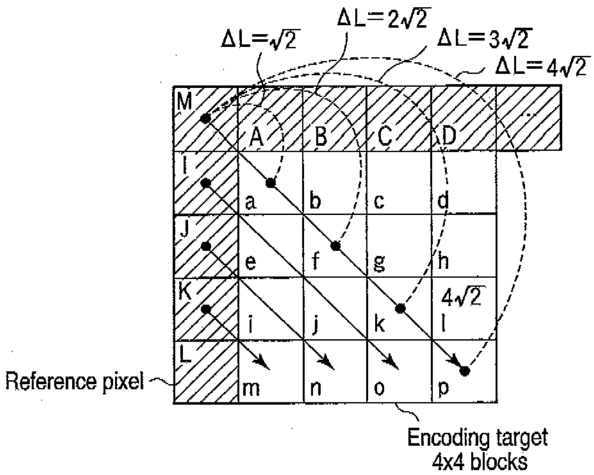


FIG. 14C

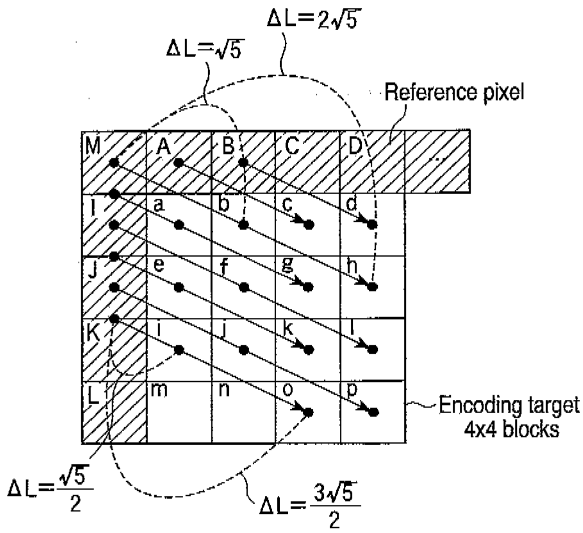


FIG. 14D

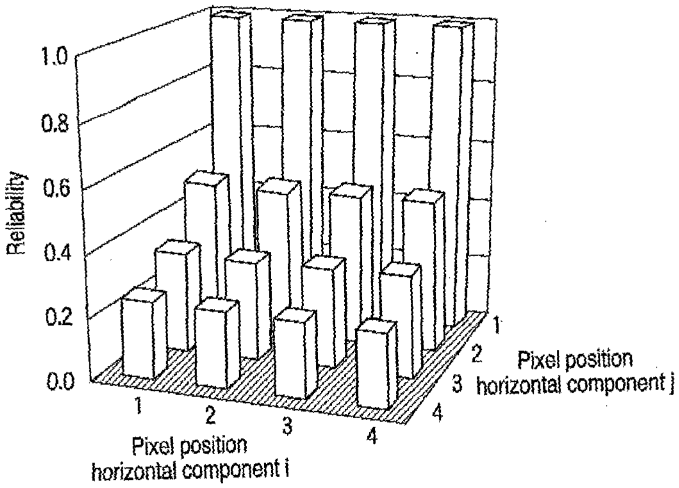


F I G. 15A

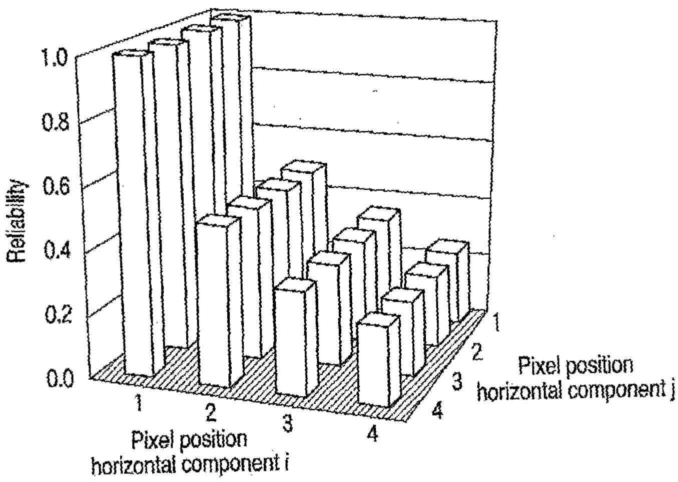


F I G. 15B

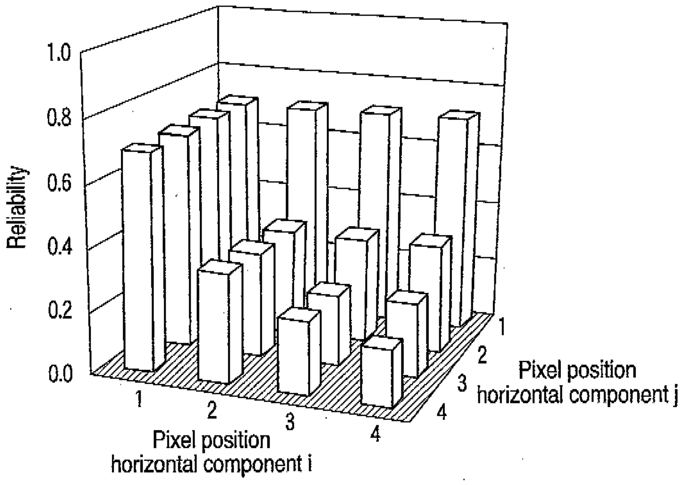


F I G. 15C

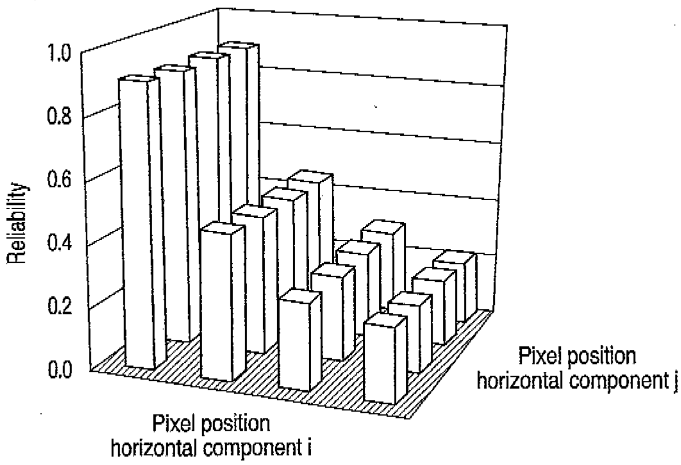


F I G. 15D

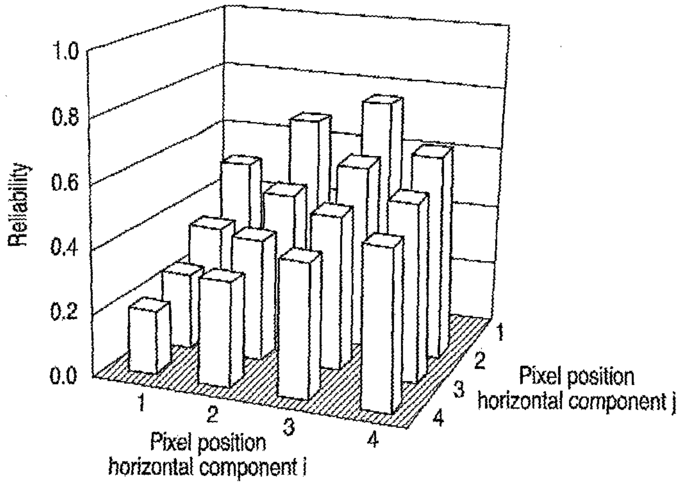


FIG. 16A

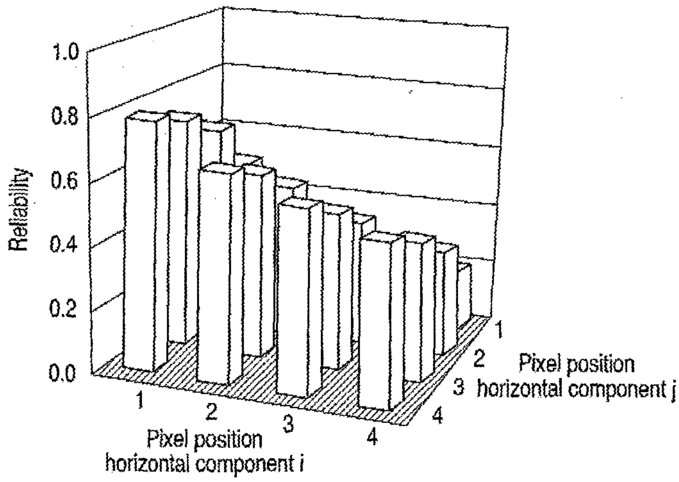


FIG. 16B

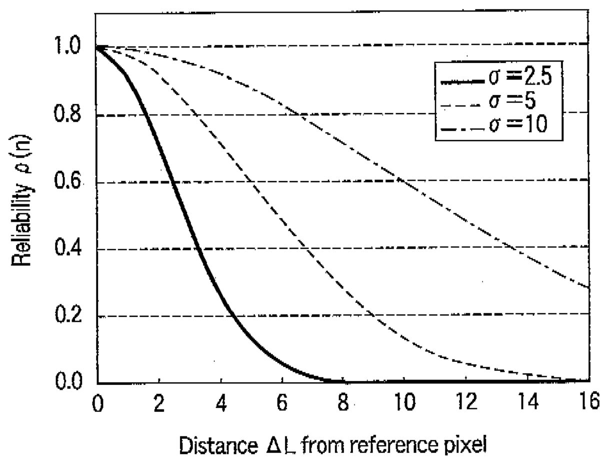


FIG. 17A

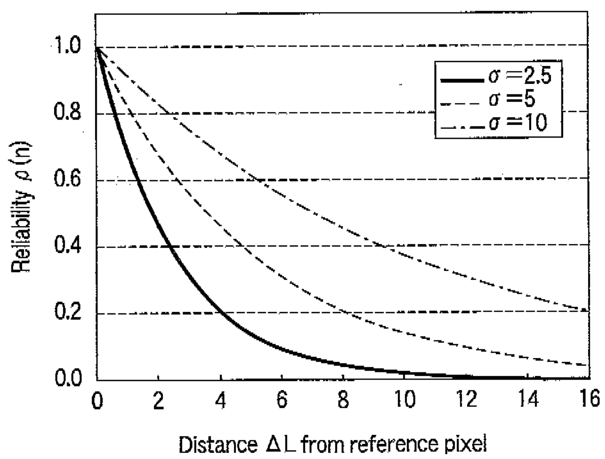


FIG. 17B

| | Euclidean distance $\Delta L$ | Reliability $\rho(\Delta L, n)$ Formula (31) | Reliability $\rho(\Delta L, n)$ (Gaussian distribution) Formula (32) | Reliability $\rho(\Delta L, n)$ (Laplace distribution) Formula (33) |
|---|---|---|---|---|
| Mode 0 Mode 1 | 1 | 64 | 59 | 52 |
| | 2 | 32 | 46 | 43 |
| | 3 | 21 | 31 | 35 |
| | 4 | 16 | 18 | 29 |
| Mode 3 Mode 4 | $\sqrt{2}$ | 45 | 55 | 48 |
| | $2\sqrt{2}$ | 23 | 34 | 36 |
| | $3\sqrt{2}$ | 15 | 15 | 27 |
| | $4\sqrt{2}$ | 11 | 5 | 21 |
| Mode 5 Mode 6 Mode 7 Mode 8 | $5\sqrt{2}$ | 57 | 58 | 51 |
| | $\sqrt{5}$ | 29 | 43 | 41 |
| | $3\sqrt{5}/2$ | 19 | 26 | 33 |
| | $2\sqrt{5}$ | 14 | 13 | 26 |

FIG. 18

Spatial distance ΔLU between reference pixel and encoding target pixel in mode U

Spatial distance ΔLV between reference pixel and encoding target pixel in mode V

| | 1 | 2 | 3 | 4 | 5 | 6 | 7 |
|---|---|---|---|---|---|---|---|
| 1 | 128 | 141 | 153 | 165 | 177 | 187 | 197 |
| 2 | 115 | 128 | 141 | 153 | 165 | 177 | 187 |
| 3 | 103 | 115 | 128 | 141 | 153 | 165 | 177 |
| 4 | 91 | 103 | 115 | 128 | 141 | 153 | 165 |
| 5 | 79 | 91 | 103 | 115 | 128 | 141 | 153 |
| 6 | 69 | 79 | 91 | 103 | 115 | 128 | 141 |
| 7 | 59 | 69 | 79 | 91 | 103 | 115 | 128 |

FIG. 19

dist2weight [7] [7]=

$$\begin{Bmatrix} 128 & 141 & 153 & 165 & 177 & 187 & 197 \\ 115 & 128 & 141 & 153 & 165 & 177 & 187 \\ 103 & 115 & 128 & 141 & 153 & 165 & 177 \\ 91 & 103 & 115 & 128 & 141 & 153 & 165 \\ 79 & 91 & 103 & 115 & 128 & 141 & 153 \\ 69 & 79 & 91 & 103 & 115 & 128 & 141 \\ 59 & 69 & 79 & 91 & 103 & 115 & 128 \end{Bmatrix}$$

FIG. 20

Spatial distance ΔLU between reference pixel and encoding target pixel in mode U (columns); Spatial distance ΔLV between reference pixel and encoding target pixel in mode V (rows)

| | 1 | 2 | 3 | 4 | 5 | 6 | 7 |
|---|---|---|---|---|---|---|---|
| 1 | 128 | 187 | 225 | 244 | 251 | 254 | 255 |
| 2 | 69 | 128 | 187 | 225 | 244 | 251 | 254 |
| 3 | 31 | 69 | 128 | 187 | 225 | 244 | 251 |
| 4 | 12 | 31 | 69 | 128 | 187 | 225 | 244 |
| 5 | 5 | 12 | 31 | 69 | 128 | 187 | 225 |
| 6 | 2 | 5 | 12 | 31 | 69 | 128 | 187 |
| 7 | 1 | 2 | 5 | 12 | 31 | 69 | 128 |

FIG. 21

$$dist2weight[7][7]=\begin{Bmatrix} 128 & 187 & 225 & 244 & 251 & 254 & 255 \\ 69 & 128 & 187 & 225 & 244 & 251 & 254 \\ 31 & 69 & 128 & 187 & 225 & 244 & 251 \\ 12 & 31 & 69 & 128 & 187 & 225 & 244 \\ 5 & 12 & 31 & 69 & 128 & 187 & 225 \\ 2 & 5 & 12 & 31 & 69 & 128 & 187 \\ 1 & 2 & 5 & 12 & 31 & 69 & 128 \end{Bmatrix}$$

FIG. 22

dist2weight 8x8 [15] [15]=

| | | | | | | | | | | | | | | |
|---|---|---|---|---|---|---|---|---|---|---|---|---|---|---|
| 128 | 149 | 169 | 187 | 203 | 215 | 225 | 233 | 239 | 244 | 247 | 250 | 251 | 253 | 254 |
| 107 | 128 | 149 | 169 | 187 | 203 | 215 | 225 | 233 | 239 | 244 | 247 | 250 | 251 | 253 |
| 87 | 107 | 128 | 149 | 169 | 187 | 203 | 215 | 225 | 233 | 239 | 244 | 247 | 250 | 251 |
| 69 | 87 | 107 | 128 | 149 | 169 | 187 | 203 | 215 | 225 | 233 | 239 | 244 | 247 | 250 |
| 53 | 69 | 87 | 107 | 128 | 149 | 169 | 187 | 203 | 215 | 225 | 233 | 239 | 244 | 247 |
| 41 | 53 | 69 | 87 | 107 | 128 | 149 | 169 | 187 | 203 | 215 | 225 | 233 | 239 | 244 |
| 31 | 41 | 53 | 69 | 87 | 107 | 128 | 149 | 169 | 187 | 203 | 215 | 225 | 233 | 239 |
| 23 | 31 | 41 | 53 | 69 | 87 | 107 | 128 | 149 | 169 | 187 | 203 | 215 | 225 | 233 |
| 17 | 23 | 31 | 41 | 53 | 69 | 87 | 107 | 128 | 149 | 169 | 187 | 203 | 215 | 225 |
| 12 | 17 | 23 | 31 | 41 | 53 | 69 | 87 | 107 | 128 | 149 | 169 | 187 | 203 | 215 |
| 9 | 12 | 17 | 23 | 31 | 41 | 53 | 69 | 87 | 107 | 128 | 149 | 169 | 187 | 203 |
| 6 | 9 | 12 | 17 | 23 | 31 | 41 | 53 | 69 | 87 | 107 | 128 | 149 | 169 | 187 |
| 5 | 6 | 9 | 12 | 17 | 23 | 31 | 41 | 53 | 69 | 87 | 107 | 128 | 149 | 169 |
| 3 | 5 | 6 | 9 | 12 | 17 | 23 | 31 | 41 | 53 | 69 | 87 | 107 | 128 | 149 |
| 2 | 3 | 5 | 6 | 9 | 12 | 17 | 23 | 31 | 41 | 53 | 69 | 87 | 107 | 128 |

FIG. 23

Spatial distance ΔLV between reference pixel and encoding target pixel in mode V

Spatial distance ΔLU between reference pixel and encoding target pixel in mode U

| | 1 | 2 | 3 | 4 | √2 | 2√2 | 3√2 | 4√2 | √5/2 | 2√5 | 3√5/2 | 2√5 |
|---|---|---|---|---|---|---|---|---|---|---|---|---|
| 1 | 128 | 141 | 153 | 165 | 133 | 151 | 168 | 227 | 130 | 144 | 158 | 171 |
| 2 | 115 | 128 | 141 | 153 | 121 | 139 | 156 | 222 | 117 | 131 | 145 | 159 |
| 3 | 103 | 115 | 128 | 141 | 108 | 126 | 144 | 215 | 104 | 118 | 133 | 147 |
| 4 | 91 | 103 | 115 | 128 | 96 | 113 | 131 | 208 | 92 | 106 | 120 | 134 |
| √2 | 123 | 135 | 148 | 160 | 128 | 146 | 163 | 225 | 124 | 138 | 153 | 166 |
| 2√2 | 105 | 117 | 130 | 143 | 110 | 128 | 146 | 216 | 106 | 120 | 135 | 149 |
| 3√2 | 88 | 100 | 112 | 125 | 93 | 110 | 128 | 206 | 89 | 103 | 117 | 131 |
| 4√2 | 29 | 34 | 41 | 48 | 31 | 40 | 50 | 128 | 29 | 36 | 43 | 52 |
| √5/2 | 126 | 139 | 152 | 164 | 132 | 150 | 167 | 227 | 128 | 142 | 156 | 169 |
| 2√5 | 112 | 125 | 138 | 150 | 118 | 136 | 153 | 220 | 114 | 128 | 142 | 156 |
| 3√5/2 | 98 | 111 | 123 | 136 | 103 | 121 | 139 | 213 | 100 | 114 | 128 | 142 |
| 2√5 | 85 | 97 | 109 | 122 | 90 | 107 | 125 | 204 | 87 | 100 | 114 | 128 |

F I G. 24

dist2weight'[12][12]=

| | | | | | | | | | | | |
|---|---|---|---|---|---|---|---|---|---|---|---|
| 128 | 141 | 153 | 165 | 133 | 151 | 168 | 227 | 130 | 144 | 158 | 171 |
| 115 | 128 | 141 | 153 | 121 | 139 | 156 | 222 | 117 | 131 | 145 | 159 |
| 103 | 115 | 128 | 141 | 108 | 126 | 144 | 215 | 104 | 118 | 133 | 147 |
| 91 | 103 | 115 | 128 | 96 | 113 | 131 | 208 | 92 | 106 | 120 | 134 |
| 123 | 135 | 148 | 160 | 128 | 146 | 163 | 225 | 124 | 138 | 153 | 166 |
| 105 | 117 | 130 | 143 | 110 | 128 | 146 | 216 | 106 | 120 | 135 | 149 |
| 88 | 100 | 112 | 125 | 93 | 110 | 128 | 206 | 89 | 103 | 117 | 131 |
| 29 | 34 | 41 | 48 | 31 | 40 | 50 | 128 | 29 | 36 | 43 | 52 |
| 126 | 139 | 152 | 164 | 132 | 150 | 167 | 227 | 128 | 142 | 156 | 169 |
| 112 | 125 | 138 | 150 | 118 | 136 | 153 | 220 | 114 | 128 | 142 | 156 |
| 98 | 111 | 123 | 136 | 103 | 121 | 139 | 213 | 100 | 114 | 128 | 142 |
| 85 | 97 | 109 | 122 | 90 | 107 | 125 | 204 | 87 | 100 | 114 | 128 |

F I G. 25

| $\Delta L_U$ $\Delta L_V$ | idx_u idx_v |
|---|---|
| 1 | 0 |
| 2 | 1 |
| 3 | 2 |
| 4 | 3 |
| $\sqrt{2}$ | 4 |
| $2\sqrt{2}$ | 5 |
| $3\sqrt{2}$ | 6 |
| $4\sqrt{2}$ | 7 |
| $\sqrt{5}/2$ | 8 |
| $2\sqrt{5}$ | 9 |
| $3\sqrt{5}/2$ | 10 |
| $2\sqrt{5}$ | 11 |

F I G. 26

$\Delta L_X$

| $\Delta L_Y$ | | 0 | 1 | 2 | 3 |
|---|---|---|---|---|---|
| | 0 | 256 | 131 | 67 | 35 |
| | 1 | 183 | 94 | 48 | 25 |
| | 2 | 131 | 67 | 35 | 18 |
| | 3 | 94 | 48 | 25 | 13 |

F I G. 27

Spatial distance ΔLV between reference pixel and encoding target pixel in mode V

Spatial distance ΔLU between reference pixel and encoding target pixel in mode U

| ΔLU,Y ↓ \ ΔLV,Y → | | 0 | 0 | 0 | 0 | 1 | 1 | 1 | 1 | 2 | 2 | 2 | 2 | 3 | 3 | 3 | 3 |
|---|---|---|---|---|---|---|---|---|---|---|---|---|---|---|---|---|---|
| | ΔLU,X ↓ \ ΔLV,X → | 0 | 1 | 2 | 3 | 0 | 1 | 2 | 3 | 0 | 1 | 2 | 3 | 0 | 1 | 2 | 3 |
| 0 | 0 | 128 | 169 | 203 | 225 | 149 | 187 | 215 | 233 | 169 | 203 | 225 | 239 | 187 | 215 | 233 | 244 |
| 0 | 1 | 87 | 128 | 169 | 203 | 107 | 149 | 187 | 215 | 128 | 169 | 203 | 225 | 149 | 187 | 215 | 233 |
| 0 | 2 | 53 | 87 | 128 | 169 | 69 | 107 | 149 | 187 | 87 | 128 | 169 | 203 | 107 | 149 | 187 | 215 |
| 0 | 3 | 31 | 53 | 87 | 128 | 41 | 69 | 107 | 149 | 53 | 87 | 128 | 169 | 69 | 107 | 149 | 187 |
| 1 | 0 | 107 | 149 | 187 | 215 | 128 | 169 | 203 | 225 | 149 | 187 | 215 | 233 | 169 | 203 | 225 | 239 |
| 1 | 1 | 69 | 107 | 149 | 187 | 87 | 128 | 169 | 203 | 107 | 149 | 187 | 215 | 128 | 169 | 203 | 225 |
| 1 | 2 | 41 | 69 | 107 | 149 | 53 | 87 | 128 | 169 | 69 | 107 | 149 | 187 | 87 | 128 | 169 | 203 |
| 1 | 3 | 23 | 41 | 69 | 107 | 31 | 53 | 87 | 128 | 41 | 69 | 107 | 149 | 53 | 87 | 128 | 169 |
| 2 | 0 | 87 | 128 | 169 | 203 | 107 | 149 | 187 | 215 | 128 | 169 | 203 | 225 | 149 | 187 | 215 | 233 |
| 2 | 1 | 53 | 87 | 128 | 169 | 69 | 107 | 149 | 187 | 87 | 128 | 169 | 203 | 107 | 149 | 187 | 215 |
| 2 | 2 | 31 | 53 | 87 | 128 | 41 | 69 | 107 | 149 | 53 | 87 | 128 | 169 | 69 | 107 | 149 | 187 |
| 2 | 3 | 17 | 31 | 53 | 87 | 23 | 41 | 69 | 107 | 31 | 53 | 87 | 128 | 41 | 69 | 107 | 149 |
| 3 | 0 | 69 | 107 | 149 | 187 | 87 | 128 | 169 | 203 | 107 | 149 | 187 | 215 | 128 | 169 | 203 | 225 |
| 3 | 1 | 41 | 69 | 107 | 149 | 53 | 87 | 128 | 169 | 69 | 107 | 149 | 187 | 87 | 128 | 169 | 203 |
| 3 | 2 | 23 | 41 | 69 | 107 | 31 | 53 | 87 | 128 | 41 | 69 | 107 | 149 | 53 | 87 | 128 | 169 |
| 3 | 3 | 12 | 23 | 41 | 69 | 17 | 31 | 53 | 87 | 23 | 41 | 69 | 107 | 31 | 53 | 87 | 128 |

FIG. 28

dist2weight oval [16] [16]=

| | | | | | | | | | | | | | | | |
|---|---|---|---|---|---|---|---|---|---|---|---|---|---|---|---|
| 128 | 169 | 203 | 225 | 149 | 187 | 215 | 233 | 169 | 203 | 225 | 239 | 187 | 215 | 233 | 244 |
| 87 | 128 | 169 | 203 | 107 | 149 | 187 | 215 | 128 | 169 | 203 | 225 | 149 | 187 | 215 | 233 |
| 53 | 87 | 128 | 169 | 69 | 107 | 149 | 187 | 87 | 128 | 169 | 203 | 107 | 149 | 187 | 215 |
| 31 | 53 | 87 | 128 | 41 | 69 | 107 | 149 | 53 | 87 | 128 | 169 | 69 | 107 | 149 | 187 |
| 107 | 149 | 187 | 215 | 128 | 169 | 203 | 225 | 149 | 187 | 215 | 233 | 169 | 203 | 225 | 239 |
| 69 | 107 | 149 | 187 | 87 | 128 | 169 | 203 | 107 | 149 | 187 | 215 | 128 | 169 | 203 | 225 |
| 41 | 69 | 107 | 149 | 53 | 87 | 128 | 169 | 69 | 107 | 149 | 187 | 87 | 128 | 169 | 203 |
| 23 | 41 | 69 | 107 | 31 | 53 | 87 | 128 | 41 | 69 | 107 | 149 | 53 | 87 | 128 | 169 |
| 87 | 128 | 169 | 203 | 107 | 149 | 187 | 215 | 128 | 169 | 203 | 225 | 149 | 187 | 215 | 233 |
| 53 | 87 | 128 | 169 | 69 | 107 | 149 | 187 | 87 | 128 | 169 | 203 | 107 | 149 | 187 | 215 |
| 31 | 53 | 87 | 128 | 41 | 69 | 107 | 149 | 53 | 87 | 128 | 169 | 69 | 107 | 149 | 187 |
| 17 | 31 | 53 | 87 | 23 | 41 | 69 | 107 | 31 | 53 | 87 | 128 | 41 | 69 | 107 | 149 |
| 69 | 107 | 149 | 187 | 87 | 128 | 169 | 203 | 107 | 149 | 187 | 215 | 128 | 169 | 203 | 225 |
| 41 | 69 | 107 | 149 | 53 | 87 | 128 | 169 | 69 | 107 | 149 | 187 | 87 | 128 | 169 | 203 |
| 23 | 41 | 69 | 107 | 31 | 53 | 87 | 128 | 41 | 69 | 107 | 149 | 53 | 87 | 128 | 169 |
| 12 | 23 | 41 | 69 | 17 | 31 | 53 | 87 | 23 | 41 | 69 | 107 | 31 | 53 | 87 | 128 |

F I G. 29

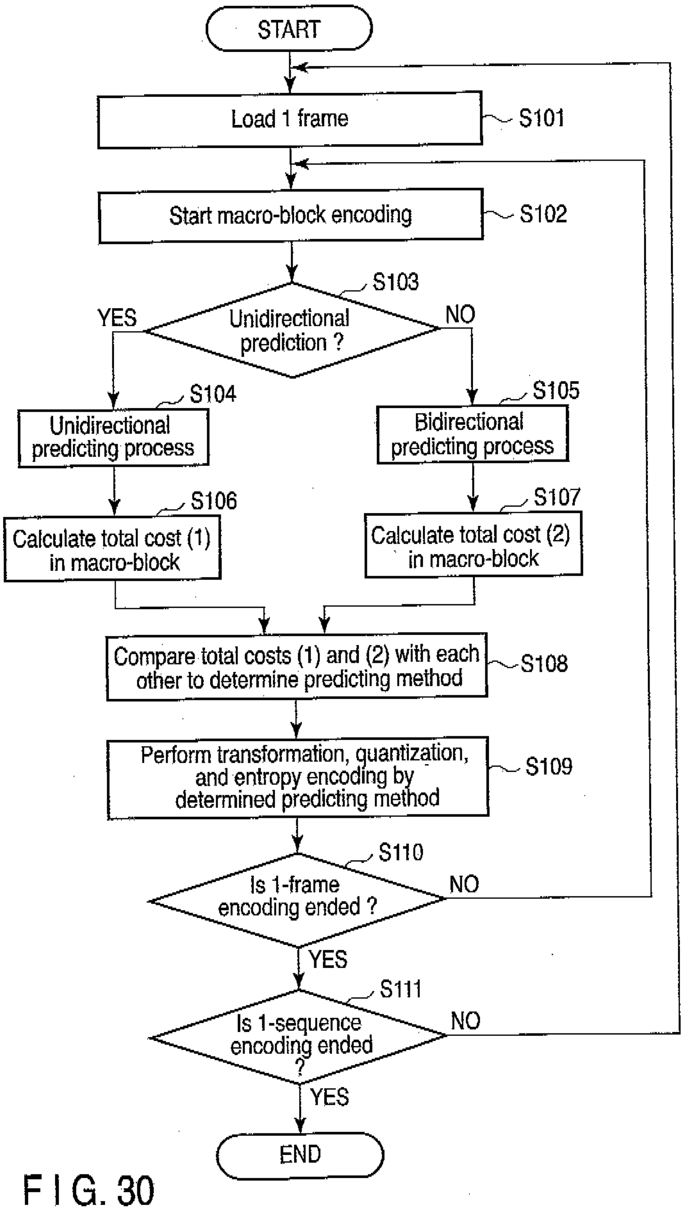
START
Load 1 frame
S101
Start macro-block encoding
S102
S103
Unidirectional prediction ?
YES
NO
S104
Unidirectional predicting process
S105
Bidirectional predicting process
S106
Calculate total cost (1) in macro-block
S107
Calculate total cost (2) in macro-block
Compare total costs (1) and (2) with each other to determine predicting method
S108
Perform transformation, quantization, and entropy encoding by determined predicting method
S109
S110
Is 1-frame encoding ended ?
NO
YES
S111
Is 1-sequence encoding ended ?
NO
YES
END

F I G. 30

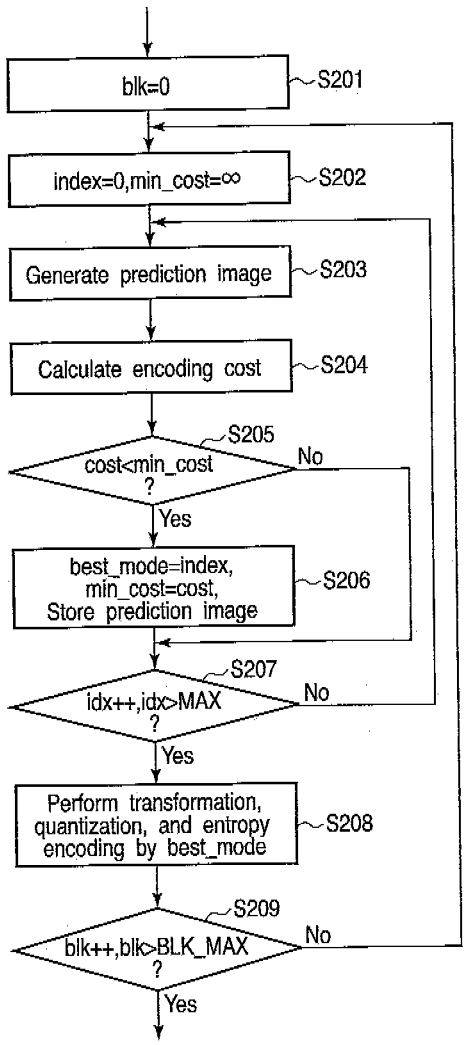

blk=0
S201
index=0,min_cost=∞
S202
Generate prediction image
S203
Calculate encoding cost
S204
cost<min_cost ?
S205
No
Yes
best_mode=index, min_cost=cost, Store prediction image
S206
idx++,idx>MAX ?
S207
No
Yes
Perform transformation, quantization, and entropy encoding by best_mode
S208
blk++,blk>BLK_MAX ?
S209
No
Yes


F I G. 31

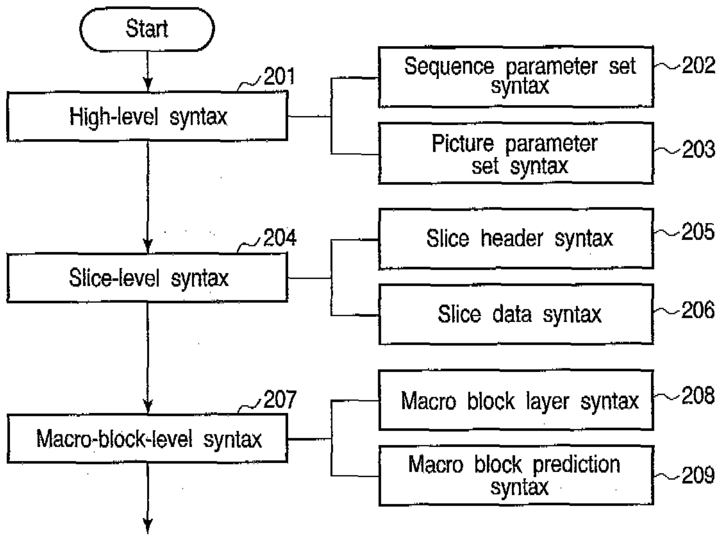


F I G. 32

| |
|---|
| macroblock_layer( ) { |
| ---- |
| mb_type |
| ---- |
| } |
| |

F I G. 33

| |
|---|
| mb_pred (mb_type) { |
| ---- |
| if (MbPartPredMode (mb_type, 0) == Intra_4x4 \|\| MbPartPredMode (mb_type, 0) == Intra_8x8 \|\| MbPartPredMode (mb_type, 0) == Intra_16x16) { |
| if (MbPartPredMode (mb_type, 0) == Intra_4x4) { |
| for (luma4x4BlkIdx=0; luma4x4BlkIdx<16; luma4x4BlkIdx++) { |
| **intra4x4_pred_mode_l0** [ luma4x4BlkIdx] |
| **intra4x4_bi_pred_flag** [ luma4x4BlkIdx] |
| if (intra4x4_bi_pred_frag [ luma4x4BlkIdx]) { |
| **intra4x4_pred_mode_l1** [ luma4x4BlkIdx] |
| } |
| } |
| } |
| if (MbPartPredMode (mb_type, 0) == Intra_8x8) { |
| for (luma8x8BlkIdx=0; luma8x8BlkIdx<4; luma8x8BlkIdx++) { |
| **intra8x8_pred_mode_l0** [luma8x8BlkIdx] |
| **intra8x8_bi_pred_flag** [luma8x8BlkIdx] |
| if (intra8x8_bi_pred_frag [luma8x8BlkIdx] ) { |
| **intra8x8_pred_mode_l1** [luma8x8BlkIdx] |
| } |
| } |
| } |
| } |
| ---- |

FIG. 34

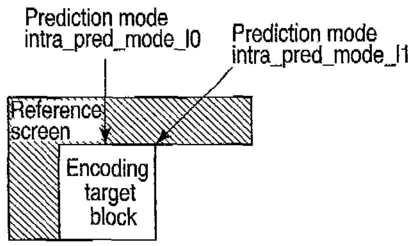
Prediction mode
intra_pred_mode_l0
Prediction mode
intra_pred_mode_l1
Reference screen
Encoding target block

F I G. 35

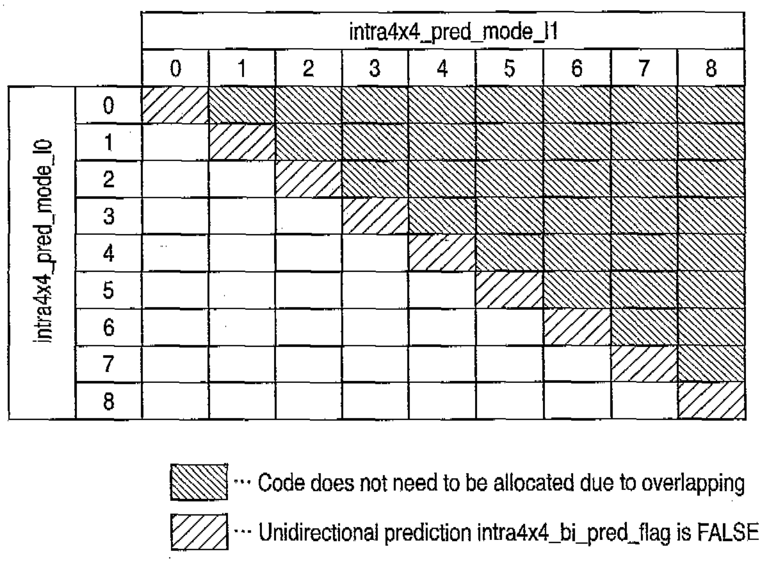
intra4x4_pred_mode_l1
0
1
2
3
4
5
6
7
8
intra4x4_pred_mode_l0
··· Code does not need to be allocated due to overlapping
··· Unidirectional prediction intra4x4_bi_pred_flag is FALSE

F I G. 36

| | | intra4x4_pred_mode_l1 | | | | | | | | |
|---|---|---|---|---|---|---|---|---|---|---|
| | | 0 | 1 | 2 | 3 | 4 | 5 | 6 | 7 | 8 |
| intra4x4_pred_mode_l0 | 0 | | | | | | | | | |
| | 1 | None | | | | | | | | |
| | 2 | 0 | 1 | | | | | | | |
| | 3 | 0 | 10 | 11 | | | | | | |
| | 4 | 00 | 01 | 10 | 11 | | | | | |
| | 5 | 00 | 01 | 10 | 110 | 111 | | | | |
| | 6 | 00 | 01 | 100 | 101 | 110 | 111 | | | |
| | 7 | 00 | 01 | 100 | 101 | 110 | 1110 | 1111 | | |
| | 8 | 000 | 001 | 010 | 011 | 100 | 101 | 110 | 111 | |

F I G. 37

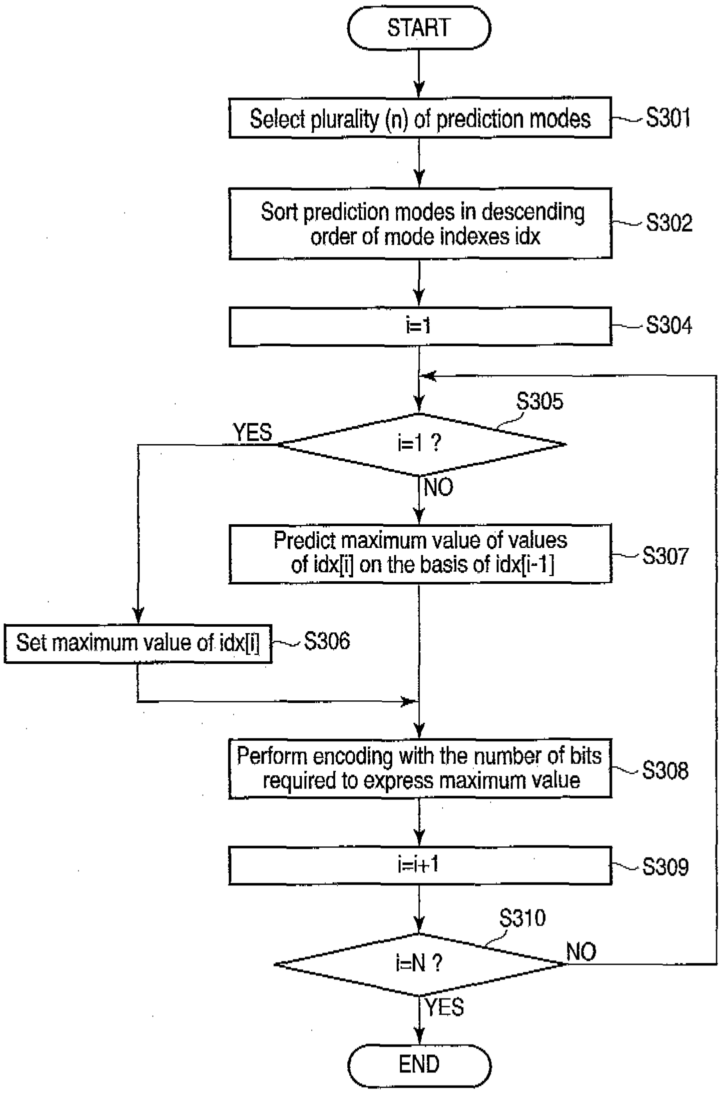
START
Select plurality (n) of prediction modes
S301
Sort prediction modes in descending order of mode indexes idx
S302
i=1
S304
S305
i=1 ?
YES
NO
Predict maximum value of values of idx[i] on the basis of idx[i-1]
S307
Set maximum value of idx[i]
S306
Perform encoding with the number of bits required to express maximum value
S308
i=i+1
S309
S310
i=N ?
NO
YES
END

F I G. 38

```
mb_pred (mb_type) {
  ----
  if (MbPartPredMode (mb_type, 0)  ==  Intra_4x4  | |
    MbPartPredMode (mb_type, 0)  ==  Intra_8x8  | |
    MbPartPredMode (mb_type, 0)  ==  Intra_16x16) {
    if (MbPartPredMode (mb_type, 0)  ==  Intra_4x4) {
      for (luma4x4BlkIdx=0; luma4x4BlkIdx<16; luma4x4BlkIdx++) {
        intra4x4_pred_mode_l0 [ luma4x4BlkIdx]
        intra4x4_pred_mode_l1  [ luma4x4BlkIdx]
      }
    }
    if (MbPartPredMode (mb_type, 0)  ==  Intra_8x8) {
      for (luma8x8BlkIdx=0; luma8x8BlkIdx<4; luma8x8BlkIdx++) {
        intra8x8_pred_mode_l0 [luma8x8BlkIdx]
        intra8x8_pred_mode_l1 [luma8x8BlkIdx]
      }
    }
  }
  ----
```

FIG. 39

```
mb_pred (mb_type, block_order_flag) {
  ----
  if (MbPartPredMode (mb_type, 0)  ==  Intra_4x4  | |
    MbPartPredMode (mb_type, 0)  ==  Intra_8x8  | |
    MbPartPredMode (mb_type, 0)  ==  Intra_16x16) {
    if (MbPartPredMode (mb_type, 0)  ==  Intra_4x4) {
      for (luma4x4BlkIdx=0; luma4x4BlkIdx<16; luma4x4BlkIdx++) {
        prev_intra4x4_pred_mode_l0_flag [ luma4x4BlkIdx]
        if (!prev_intra4x4_pred_mode_l0_frag [ luma4x4BlkIdx])
          rem_intra4x4_pred_mode_l0 [ luma4x4BlkIdx]
        intra4x4_bi_pred_flag [ luma4x4BlkIdx]
        if (intra4x4_bi_pred_frag [ luma4x4BlkIdx]) {
          intra4x4_pred_mode_l1  [ luma4x4BlkIdx]
        }
      }
    }
    if (MbPartPredMode (mb_type, 0)  ==  Intra_8x8) {
      for (luma8x8BlkIdx=0; luma8x8BlkIdx<4; luma8x8BlkIdx++) {
        prev_intra8x8_pred_mode_l0_flag [ luma8x8BlkIdx]
        if (!prev_intra8x8_pred_mode_l0_frag [ luma8x8BlkIdx])
          rem_intra8x8_pred_mode_l0 [ luma8x8BlkIdx]
        intra8x8_bi_pred_flag [luma8x8BlkIdx]
        if (intra8x8_bi_pred_frag [luma8x8BlkIdx] ) {
          intra8x8_pred_mode_l1 [luma8x8BlkIdx]
        }
      }
    }
  }
  ----
```

F I G. 40

| |
|---|
| ref_pred_mode = min (ref_blkA_mode_l0, ref_blkB_mode_l0) |
| if (pred_mode == intra4x4_pred_mode_l0 [ luma4x4Blkldx] ) { |
| prev_intra4x4_pred_mode_l0_flag [ luma4x4Blkldx] = TRUE |
| } else { |
| prev_intra4x4_pred_mode_l0_flag [ luma4x4Blkldx] = FALSE |
| } |

F I G. 41

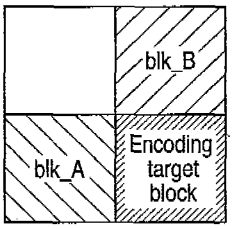


F I G. 42

```
mb_pred (mb_type) {
  ----
  if (MbPartPredMode (mb_type, 0)  ==  Intra_4x4  | |
    MbPartPredMode (mb_type, 0)  ==  Intra_8x8  | |
    MbPartPredMode (mb_type, 0)  ==  Intra_16x16) {
    if (MbPartPredMode (mb_type, 0)  ==  Intra_4x4) {
      for (luma4x4BlkIdx=0; luma4x4BlkIdx<16; luma4x4BlkIdx++) {
        intra4x4_pred_mode_l0 [ luma4x4BlkIdx]
        intra4x4_bi_pred_flag [ luma4x4BlkIdx]
        if (intra4x4_bi_pred_frag [ luma4x4BlkIdx]) {
          intra4x4_bi_pred_weight_mode [ luma4x4BlkIdx]
          intra4x4_pred_mode_l1  [ luma4x4BlkIdx]
        }
      }
    }
    if (MbPartPredMode (mb_type, 0)  ==  Intra_8x8) {
      for (luma8x8BlkIdx=0; luma8x8BlkIdx<4; luma8x8BlkIdx++) {
        intra8x8_pred_mode_l0 [ luma8x8BlkIdx]
        intra8x8_bi_pred_flag [luma8x8BlkIdx]
        if (intra8x8_bi_pred_frag [luma8x8BlkIdx] ) {
          intra8x8_bi_pred_weight_mode [ luma8x8BlkIdx]
          intra8x8_pred_mode_l1 [luma8x8BlkIdx]
        }
      }
    }
  }
  ----
```

FIG. 43

| |
|---|
| seq_parameter_set_rbsp ( ) { |
| ---- |
| **intra_bi_pred_weight_in_seq_flag** |
| if (intra_bipred_weight_in_seq_flag) |
| **intra_bi_pred_weight_in_seq_mode** |
| ---- |
| } |

F I G. 44

| |
|---|
| pic_parameter_set_rbsp (intra_bipred_weight_in_seq_flag) { |
| ---- |
| if (!intra_bipred_weight_in_seq_flag) { |
| **intra_bi_pred_weight_in_pic_flag** |
| if (intra_bipred_weight_in_pic_flag) |
| **intra_bi_pred_weight_in_pic_mode** |
| } |
| ---- |
| } |

F I G. 45

| |
|---|
| slice_header(intra_bipred_weight_in_pic_flag ) { |
|   ---- |
|   if (!intra_bipred_weight_in_pic_flag) { |
|     **intra_bi_pred_weight_in_slice_flag** |
|     if (intra_bipred_weight_in_slice_flag) |
|       **intra_bi_pred_weight_in_slice_mode** |
|   } |
|   ---- |
| } |

FIG. 46

| |
|---|
| macroblock_layer(intra_bipred_weight_in_slice_flag ) { |
|   ---- |
|   if (!intra_bipred_weight_in_slice_flag) { |
|     **intra_bi_pred_weight_in_mb_flag** |
|     if (intra_bipred_weight_in_mb_flag) |
|       **intra_bi_pred_weight_in_mb_mode** |
|   } |
|   ---- |
| } |

FIG. 47

| |
|---|
| mb_pred (mb_type) { |
| ---- |
| if (MbPartPredMode (mb_type, 0) == Intra_4x4 \|\| MbPartPredMode (mb_type, 0) == Intra_8x8 \|\| MbPartPredMode (mb_type, 0) == Intra_16x16) { |
| if (MbPartPredMode (mb_type, 0) == Intra_4x4) { |
| for (luma4x4BlkIdx=0; luma4x4BlkIdx<16; luma4x4BlkIdx++) { |
| **intra4x4_pred_mode_l0** [ luma4x4BlkIdx] |
| **intra4x4_bi_pred_flag** [ luma4x4BlkIdx] |
| if (intra4x4_bi_pred_frag [ luma4x4BlkIdx]) { |
| if (!intra4x4_bi_pred_in_mb_frag) |
| **intra4x4_bi_pred_weight_mode** [ luma4x4BlkIdx] |
| **intra4x4_pred_mode_l1** [ luma4x4BlkIdx] |
| } |
| } |
| } |
| if (MbPartPredMode (mb_type, 0) == Intra_8x8) { |
| for (luma8x8BlkIdx=0; luma8x8BlkIdx<4; luma8x8BlkIdx++) { |
| **intra8x8_pred_mode_l0** [ luma8x8BlkIdx] |
| **intra8x8_bi_pred_flag** [luma8x8BlkIdx] |
| if (intra8x8_bi_pred_frag [luma8x8BlkIdx] ) { |
| if (!intra8x8_bi_pred_in_mb_frag) |
| **intra8x8_bi_pred_weight_mode** [ luma8x8BlkIdx] |
| **intra8x8_pred_mode_l1** [luma8x8BlkIdx] |
| } |
| } |
| } |
| } |
| ---- |

FIG. 48

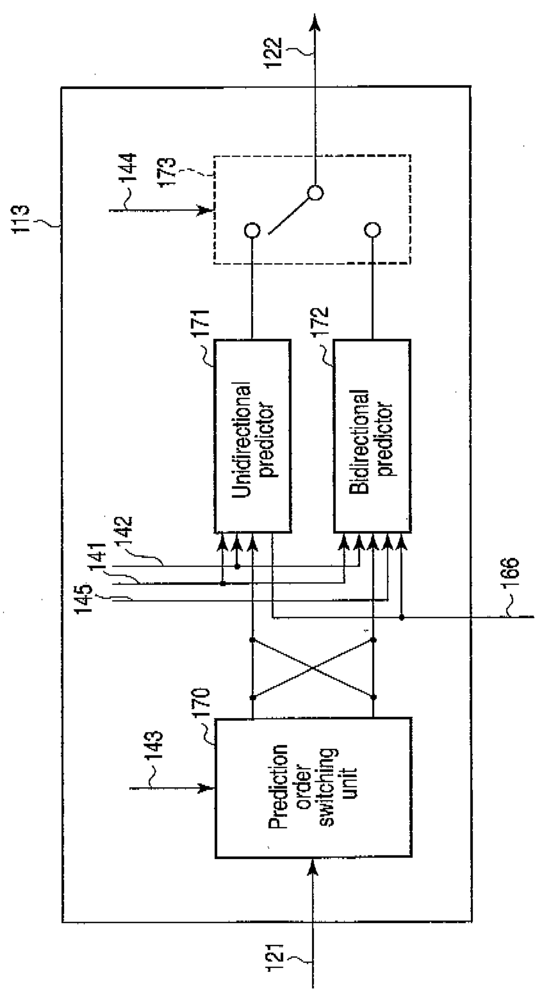
113
122
144
173
171
Unidirectional predictor
172
Bidirectional predictor
145
141
142
166
170
143
Prediction order switching unit
121

F I G. 49

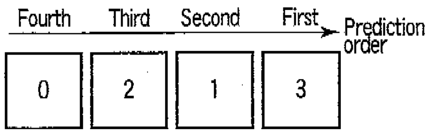


FIG. 50A

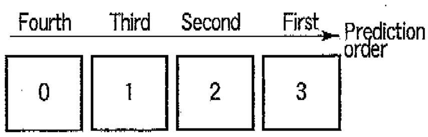


FIG. 50B

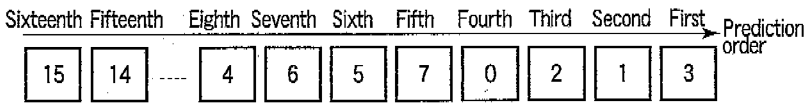


FIG. 51A

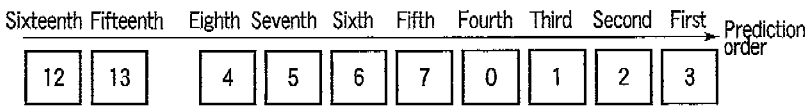


FIG. 51B

| idx | blkConv[0] [idx] | blkConv[1] [idx] |
|---|---|---|
| 0 | 0 | 3 |
| 1 | 1 | 1 |
| 2 | 2 | 2 |
| 3 | 3 | 0 |
| 4 | 4 | 7 |
| 5 | 5 | 5 |
| 6 | 6 | 6 |
| 7 | 7 | 4 |
| 8 | 8 | 11 |
| 9 | 9 | 9 |
| 10 | 10 | 10 |
| 11 | 11 | 8 |
| 12 | 12 | 15 |
| 13 | 13 | 13 |
| 14 | 14 | 14 |
| 15 | 15 | 12 |

FIG. 52

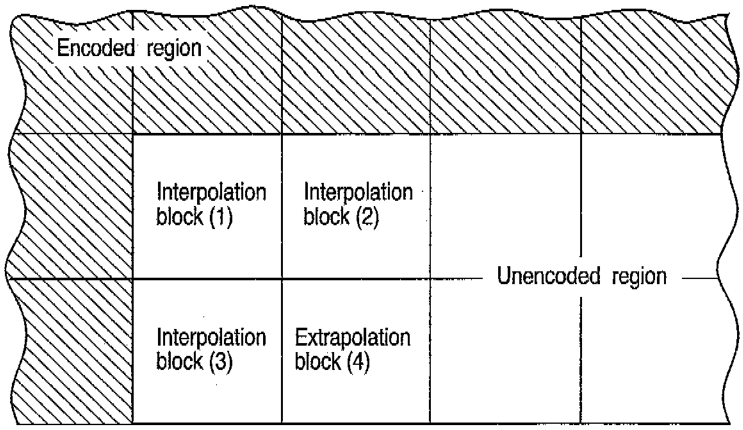


F I G. 53A

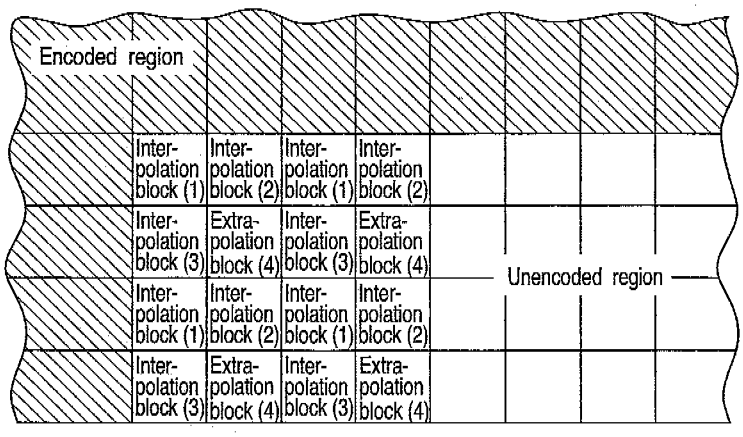


F I G. 53B

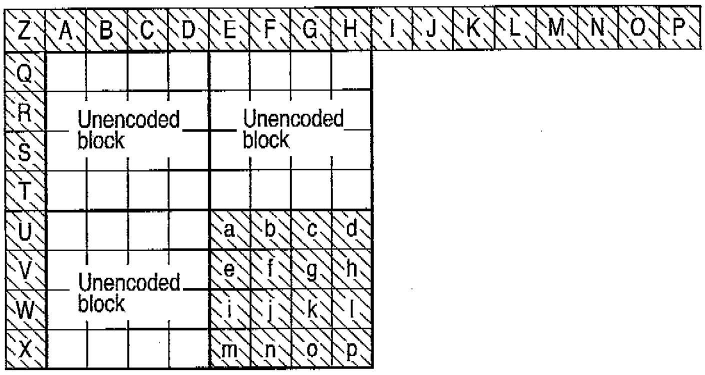


F I G. 54A

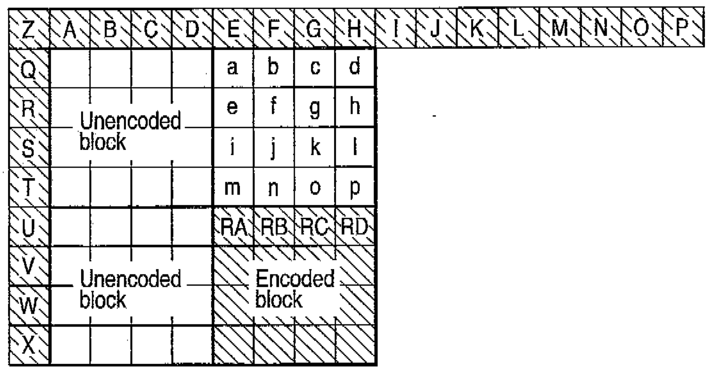


F I G. 54B

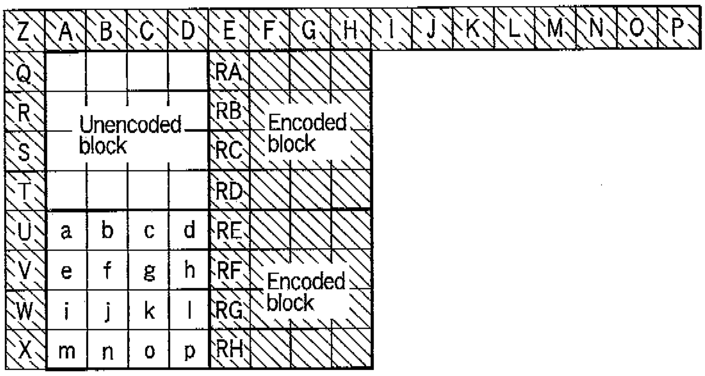


FIG. 54C

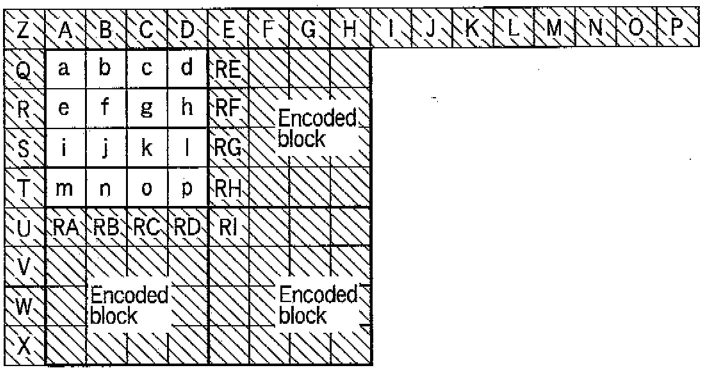


FIG. 54D

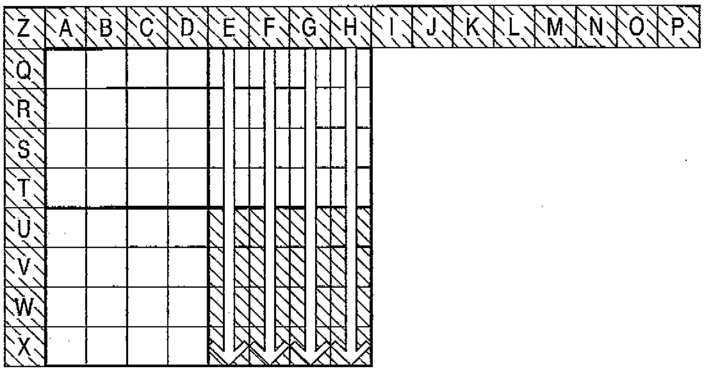


F I G. 55A

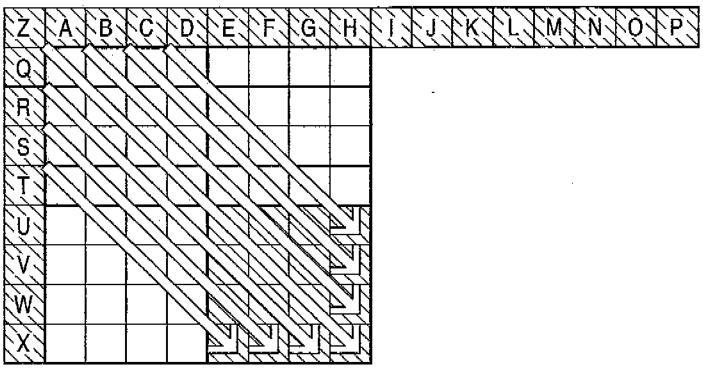


F I G. 55B

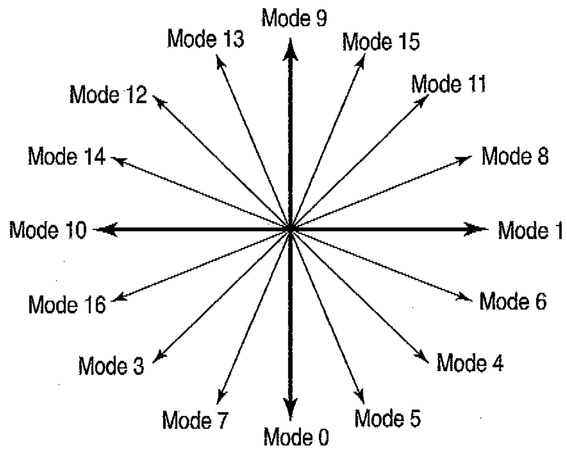
Mode 9
Mode 13
Mode 15
Mode 11
Mode 12
Mode 8
Mode 14
Mode 10
Mode 1
Mode 16
Mode 6
Mode 3
Mode 4
Mode 7
Mode 5
Mode 0

F I G. 56

| Mode index | Unidirectional prediction name |
|---|---|
| 00 | Vertical prediction |
| 01 | Horizontal prediction |
| 02 | DC prediction |
| 03 | Diagonal-down-left prediction |
| 04 | Diagonal-down-right prediction |
| 05 | Vertical-right prediction |
| 06 | Horizontal-down prediction |
| 07 | Vertical-left prediction |
| 08 | Horizontal-upper prediction |
| 09 | Inverse-vertical prediction |
| 10 | Inverse-horizontal prediction |
| 11 | Diagonal-upper-right prediction |
| 12 | Diagonal-upper-left prediction |
| 13 | Inverse-vertical-left prediction |
| 14 | Inverse-horizontal-upper prediction |
| 15 | Inverse-vertical-right prediction |
| 16 | Inverse-horizontal-down prediction |

F I G. 57

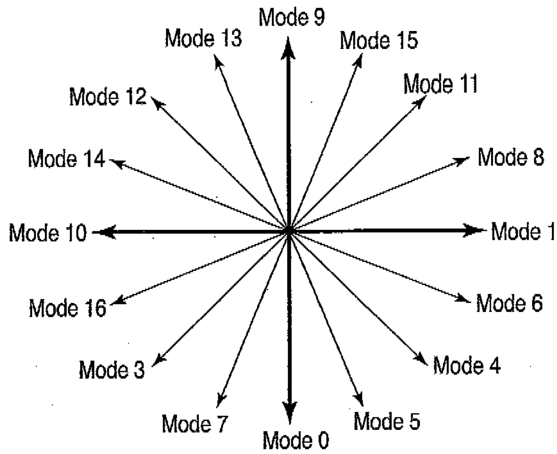


F I G. 58A

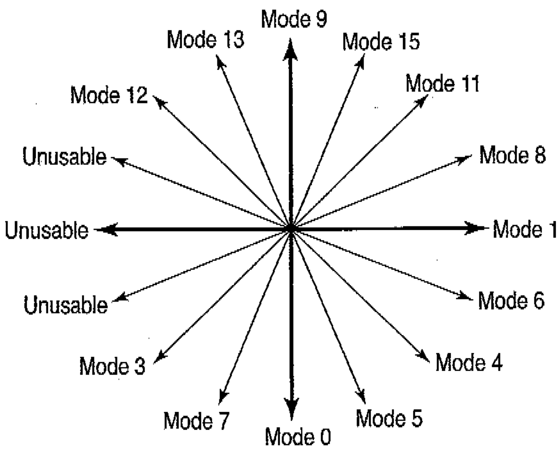


F I G. 58B

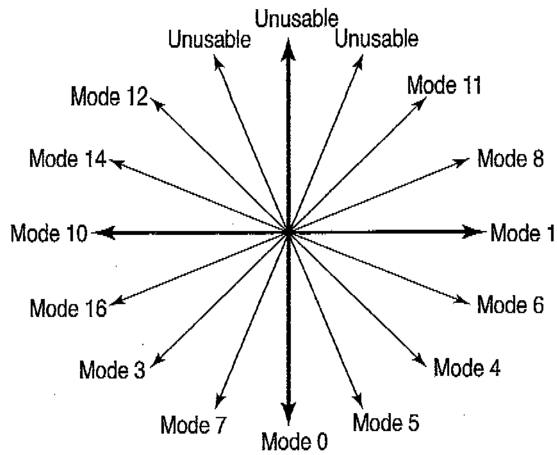


F I G. 58C

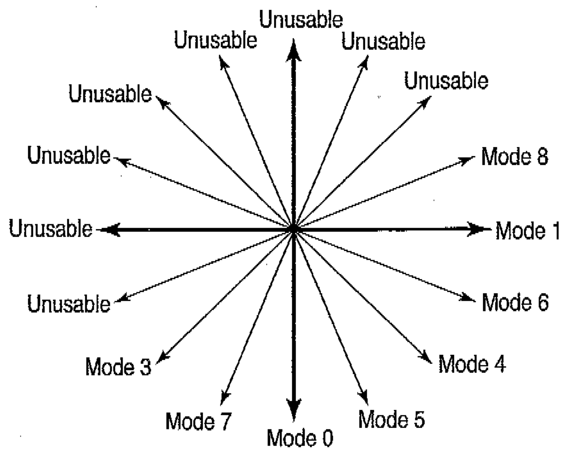


F I G. 58D

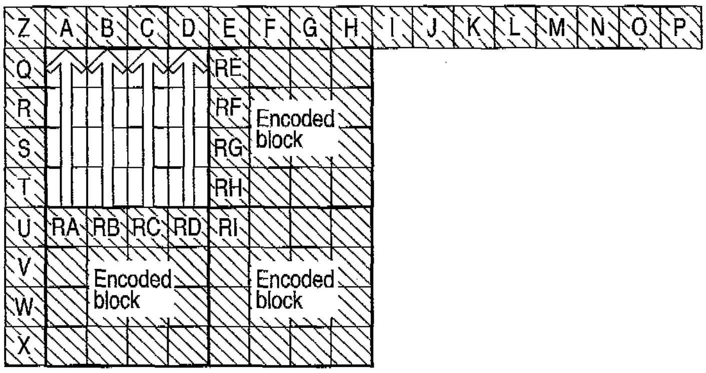


FIG. 59A

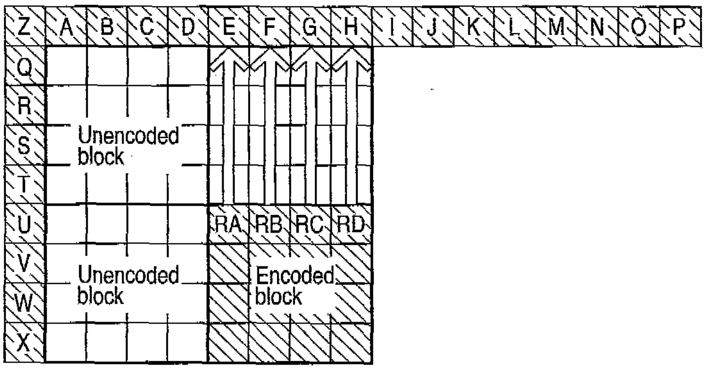


FIG. 59B

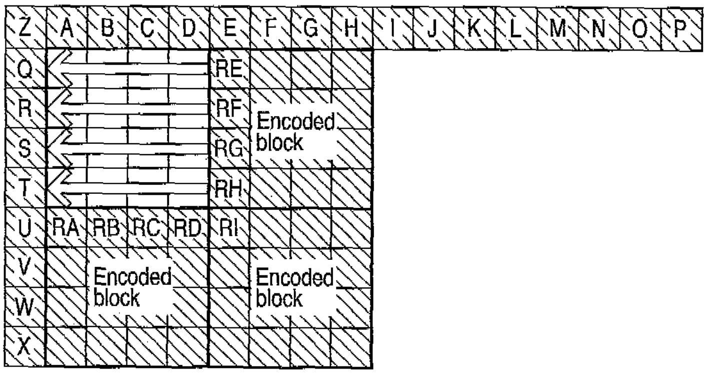


F I G. 60A

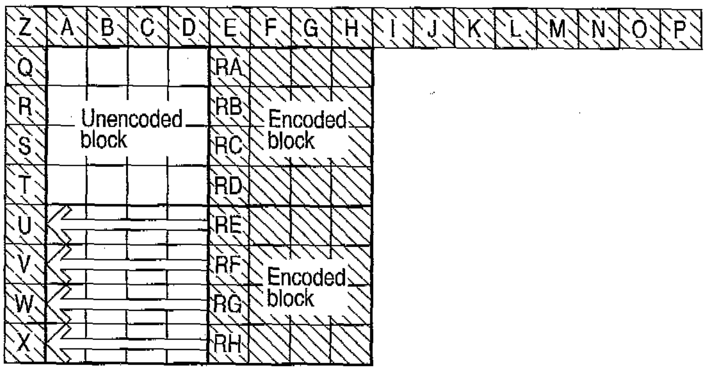


F I G. 60B

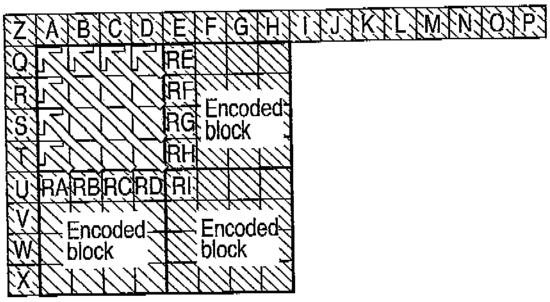


F I G. 61A

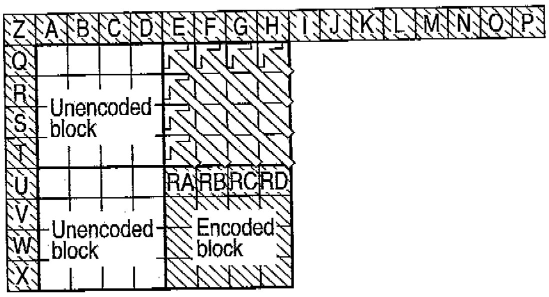


F I G. 61B

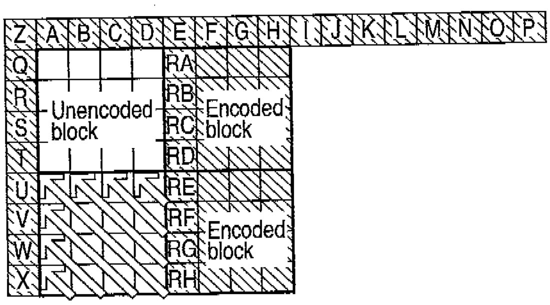


F I G. 61C

| Mode index | Bidirectional prediction name | Mode index | Bidirectional prediction name |
|---|---|---|---|
| 0001 | Vertical/horizontal prediction | ----- | -------- |
| 0002 | Vertical/DC prediction | 1015 | Inverse-horizontal/inverse-vertical-right prediction |
| 0003 | Vertical/diagonal-down-left prediction | 1016 | Inverse-horizontal/inverse-horizontal-down prediction |
| 0004 | Vertical/diagonal-down-right prediction | 1112 | Diagonal-upper-right/diagonal-upper-left prediction |
| 0005 | Vertical/right prediction | 1113 | Diagonal-upper-right/inverse-vertical left prediction |
| 0006 | Vertical/horizontal-down prediction | 1114 | Diagonal-upper-right/inverse-horizontal-upper prediction |
| 0007 | Vertical/vertical-left prediction | 1115 | Diagonal-upper-right/inverse-vertical-right prediction |
| 0008 | Vertical/horizontal-upper prediction | 1116 | Diagonal-upper-right/inverse-horizontal-down prediction |
| 0009 | Vertical/inverse-vertical prediction | 1213 | Diagonal-upper-left/inverse-vertical-left prediction |
| 0010 | Vertical/inverse-horizontal prediction | 1214 | Diagonal-upper-left/inverse-horizontal-upper prediction |
| 0011 | Vertical/diagonal-upper-right prediction | 1215 | Diagonal-upper-left/inverse-vertical-right prediction |
| 0012 | Vertical/diagonal-upper-left prediction | 1216 | Diagonal-upper-left/inverse-horizontal-down prediction |
| 0013 | Vertical/inverse-vertical-left prediction | 1314 | Inverse-vertical-left/inverse-horizontal-upper prediction |
| 0014 | Vertical/inverse-horizontal-upper prediction | 1315 | Inverse-vertical-left/inverse-vertical-right prediction |
| 0015 | Vertical/inverse-vertical-right prediction | 1316 | Inverse-vertical-left/inverse-horizontal-down prediction |
| 0016 | Vertical/ inverse-horizontal-down prediction | 1415 | Inverse-horizontal-upper/inverse-vertical-right prediction |
| 0102 | Horizontal/DC prediction | 1416 | Inverse-horizontal-upper/inverse-horizontal down prediction |
| ----- | ------------------- | 1516 | Inverse-horizontal-down/inverse-horizontal down prediction |

FIG. 62

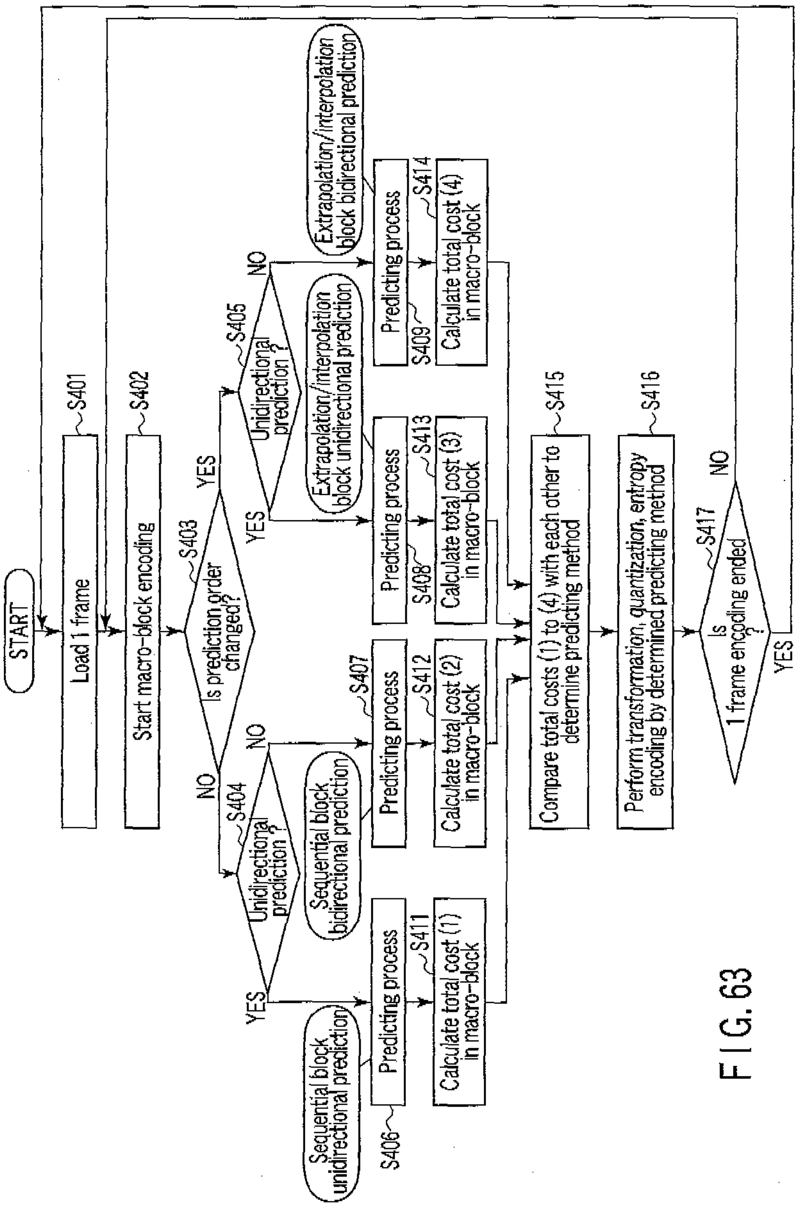
START
Load 1 frame
S401
Start macro-block encoding
S402
Is prediction order changed?
S403
YES
NO
Unidirectional prediction?
S404
Unidirectional prediction?
S405
YES
NO
YES
NO
Sequential block unidirectional prediction
Sequential block bidirectional prediction
Extrapolation/interpolation block unidirectional prediction
Extrapolation/interpolation block bidirectional prediction
S406
Predicting process
S407
Predicting process
S408
Predicting process
S409
Predicting process
S411
Calculate total cost (1) in macro-block
S412
Calculate total cost (2) in macro-block
S413
Calculate total cost (3) in macro-block
S414
Calculate total cost (4) in macro-block
Compare total costs (1) to (4) with each other to determine predicting method
S415
Perform transformation, quantization, entropy encoding by determined predicting method
S416
Is 1 frame encoding ended?
S417
NO
YES

F I G. 63

```
mb_pred (mb_type, block_order_flag) {
  ....
  if (MbPartPredMode (mb_type, 0)  ==  Intra_4x4  ||
    MbPartPredMode (mb_type, 0)  ==  Intra_8x8  ||
    MbPartPredMode (mb_type, 0)  ==  Intra_16x16) {
    if (MbPartPredMode (mb_type, 0)  ==  Intra_4x4) {
      for (luma4x4BlkIdx=0; luma4x4BlkIdx<16; luma4x4BlkIdx++) {
        order=blkConv [block_order_flag] [luma4x4BlkIdx]
        intra4x4_pred_mode_l0 [block_order_flag] [order]
        intra4x4_bi_pred_flag [order]
        if (intra4x4_bi_pred_frag [order]) {
          intra4x4_pred_mode_l1 [ block_order_flag] [order]
        }
      }
    }
    if (MbPartPredMode (mb_type, 0)  ==  Intra_8x8) {
      for (luma8x8BlkIdx=0; luma8x8BlkIdx<4; luma8x8BlkIdx++) {
        order=blkConv [block_order_flag] [luma8x8BlkIdx]
        intra8x8_pred_mode_l0 [block_order_flag] [order]
        intra8x8_bi_pred_flag [order]
        if (intra8x8_bi_pred_frag [order]) {
          intra8x8_pred_mode_l1[block_order_flag] [order]
        }
      }
    }
  }
  ....
```

FIG. 64

```
intra4x4_pred_mode_l0_org [block_order_flag] [order]
   = modeConv [intra4x4_pred_mode_l0_org [block_order_flag] [order%4] ]
```

FIG. 65

```
intra4x4_pred_mode_l0_org [block_order_flag] [order]
   = modeInv [intra4x4_pred_mode_l0 [block_order_flag] [order%4] ]
```

FIG. 66

| intra4x4_pred_mode_l0(l1)_org/ intra8x8_pred_mode_l0(l1)_org | | | | |
|---|---|---|---|---|
| modeConv [1][0] | modeConv [1][1] | modeConv [1][2] | modeConv [1][2] | modeConv [0][order] |
| Interpolation block (1) | Interpolation block (2) | Interpolation block (3) | Interpolation block (4) | |
| 0 | 0 | 0 | 0 | 0 |
| 1 | 1 | 1 | 1 | 1 |
| 2 | 2 | 2 | 2 | 2 |
| 3 | 3 | 3 | 3 | 3 |
| 4 | 4 | 4 | 4 | 4 |
| 5 | 5 | 5 | 5 | 5 |
| 6 | 6 | 6 | 6 | 6 |
| 7 | 7 | 7 | 7 | 7 |
| 8 | 8 | 8 | 8 | 8 |
| 9 | 9 | 10 | ---- | ---- |
| 10 | 11 | 11 | ---- | ---- |
| 11 | 12 | 12 | ---- | ---- |
| 12 | 13 | 14 | ---- | ---- |
| 13 | 15 | 16 | ---- | ---- |
| 14 | ---- | ---- | ---- | ---- |
| 15 | ---- | ---- | ---- | ---- |
| 16 | ---- | ---- | ---- | ---- |
| 17 | 14 | 14 | 9 | 9 |

Transformation →

| intra4x4_pred_mode_l0(l1)/ intra8x8_pred_mode_l0(l1) |
|---|
| 0 |
| 1 |
| 2 |
| 3 |
| 4 |
| 5 |
| 6 |
| 7 |
| 8 |
| 9 |
| 10 |
| 11 |
| 12 |
| 13 |
| 14 |
| 15 |
| 16 |

FIG. 67

| Mode | Mode name | Interpolation block (1) | Interpolation block (2) | Interpolation block (3) | Interpolation block (4) |
|---|---|---|---|---|---|
| 0 | Vertical lower prediction | ○ | ○ | ○ | ○ |
| 1 | Horizontal right prediction | ○ | ○ | ○ | ○ |
| 2 | DC prediction | ○ | ○ | ○ | ○ |
| 3 | Diagonal lower left prediction | ○ | ○ | ○ | ○ |
| 4 | Diagonal lower right prediction | ○ | ○ | ○ | ○ |
| 5 | Vertical lower right prediction | ○ | ○ | ○ | ○ |
| 6 | Horizontal lower right prediction | ○ | ○ | ○ | ○ |
| 7 | Vertical lower left prediction | ○ | ○ | ○ | ○ |
| 8 | Horizontal upper right prediction | ○ | ○ | ○ | ○ |
| 9 | Vertical upper prediction | ○ | ○ | × | × |
| 10 | Horizontal left prediction | ○ | × | ○ | × |
| 11 | Diagonal upper right prediction | ○ | ○ | ○ | × |
| 12 | Diagonal upper left prediction | ○ | ○ | ○ | × |
| 13 | Vertical upper left prediction | ○ | ○ | × | × |
| 14 | Horizontal upper left prediction | ○ | × | ○ | × |
| 15 | Vertical upper right prediction | ○ | ○ | × | × |
| 16 | Horizontal lower left prediction | ○ | × | ○ | × |

(o mode means that corresponding mode is usable, and x mode means that corresponding mode is unusable)

F I G. 68

```
macroblock_layer ( ) {
  ----
  mb_type
  block_order_flag
  if (block_order_flag) {
    block_order_in_mb_mode
    if (block_order_in_mb_mode == 1)
        block_order_idx
    if (block_order_in_mb_mode == 2) {
      if (MbPartPredMode (mb_type, 0)  ==  Intra_4x4) {
        for (luma4x4BlkIdx=0; luma4x4BlkIdx<16; luma4x4BlkIdx++) {
          block_order4x4 [luma4x4BlkIdx]
        }
      }
      if (MbPartPredMode (mb_type, 0)  ==  Intra_8x8) {
        for (luma8x8BlkIdx=0; luma8x8BlkIdx<4; luma8x8BlkIdx++) {
          block_order8x8 [luma8x8BlkIdx]
        }
      }
    }
  }
  ----
}
```

FIG. 69

```
seq_parameter_set_rbsp ( ) {
  ----
  block_order_in_seq_flag
  intra_bi_pred_in_seq_flag
  ----
}
```

FIG. 70

| |
|---|
| pic_parameter_set_rbsp (block_order_in_seq_flag, intra_bi_pred_in_seq_flag) { |
| ---- |
| if (block_order_change_in_seq_flag) |
| **block_order_in_pic_flag** |
| ---- |
| if (intra_bi_pred_in_seq_flag) |
| **intra_bi_in_pred_in_pic_flag** |
| ---- |
| } |

FIG. 71

| |
|---|
| slice_header (block_order_in_pic_flag, intra_bi_pred_in_pic_flag) { |
| ---- |
| if (block_order_change_in_pic_flag) |
| **block_order_in_slice_flag** |
| ---- |
| if (intra_bi_pred_in_pic_flag) |
| **intra_bi_pred_in_slice_flag** |
| ---- |
| } |

FIG. 72

| |
|---|
| macroblock_layer (block_order_in_slice_flag, intra_bi_pred_in_slice_flag) { |
| .... |
| if (mb_type = = I_NxN) { |
| if (block_order _change_in_slice_flag) { |
| **block_order_flag** |
| } |
| .... |
| if (intra_bi_pred_in_seq_flag) { |
| **intra_bi_pred_in_seq_in_mb_flag** |
| } |
| .... |
| } |
| .... |
| } |

F I G. 73

| |
|---|
| mb_pred (mb_type,block_order_flag, intra_bi_pred_in_mb_flag) { |
| ---- |
| if (MbPartPredMode (mb_type,0) == Intra_4x4 \|\|<br>MbPartPredMode (mb_type,0) == Intra_8x8 \|\|<br>MbPartPredMode (mb_type,0) == Intra_16x16) { |
| if (MbPartPredMode (mb_type,0) = Intra_4x4) { |
| for (luma4x4BlkIdx=0; luma4x4BlkIdx<16; luma4x4BlkIdx++){ |
| order=blkConv[block_order_flag] [luma4x4BlkIdx] |
| **intra4x4_pred_mode_l0** [block_order_flag] [order] |
| if (intra_bi_pred_in_mb_flag) { |
| **intra4x4_bi_pred_flag** [order] |
| if (intra4x4_bi_pred_flag [order]) { |
| **intra4x4_pred_mode_l1** [block_order_flag] [order] |
| } |
| } |
| } |
| } |
| if (MbPartPredMode (mb_type,0) == Intra_8x8) { |
| for (luma8x8BlkIdx=0; luma8x8BlkIdx<4; luma8x8BlkIdx++) { |
| order=blkConv [block_order_flag] [luma8x8BlkIdx] |
| **intra8x8_pred_mode_l0** [block_order_flag] [order] |
| if (intra_bi_pred_in_mb_flag) { |
| **intra8x8_bi_pred_flag** [order] |
| if (intra8x8_bi_pred_flag [order] ) { |
| **intra8x8_pred_mode_l1** [block_order_flag] [order] |
| } |
| } |
| } |
| } |
| } |
| ---- |

FIG. 74

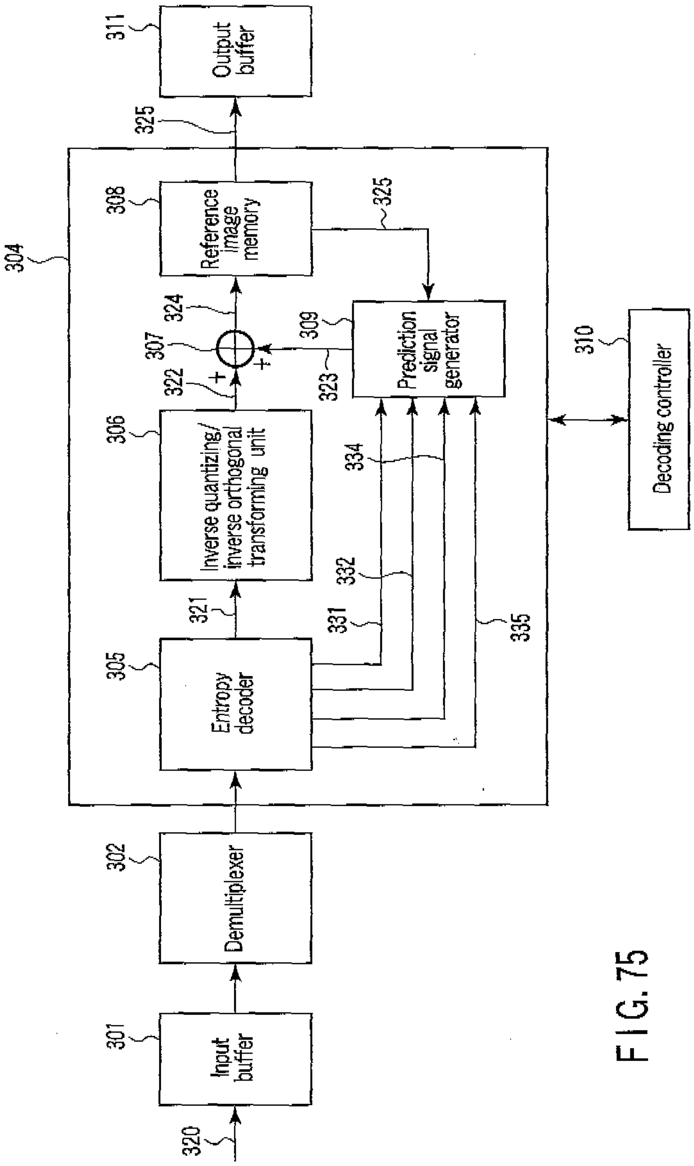
320
301
Input buffer
302
Demultiplexer
304
305
Entropy decoder
321
306
Inverse quantizing/ inverse orthogonal transforming unit
322
+
307
+
324
308
Reference image memory
325
311
Output buffer
325
309
323
Prediction signal generator
331
332
334
335
310
Decoding controller

FIG. 75

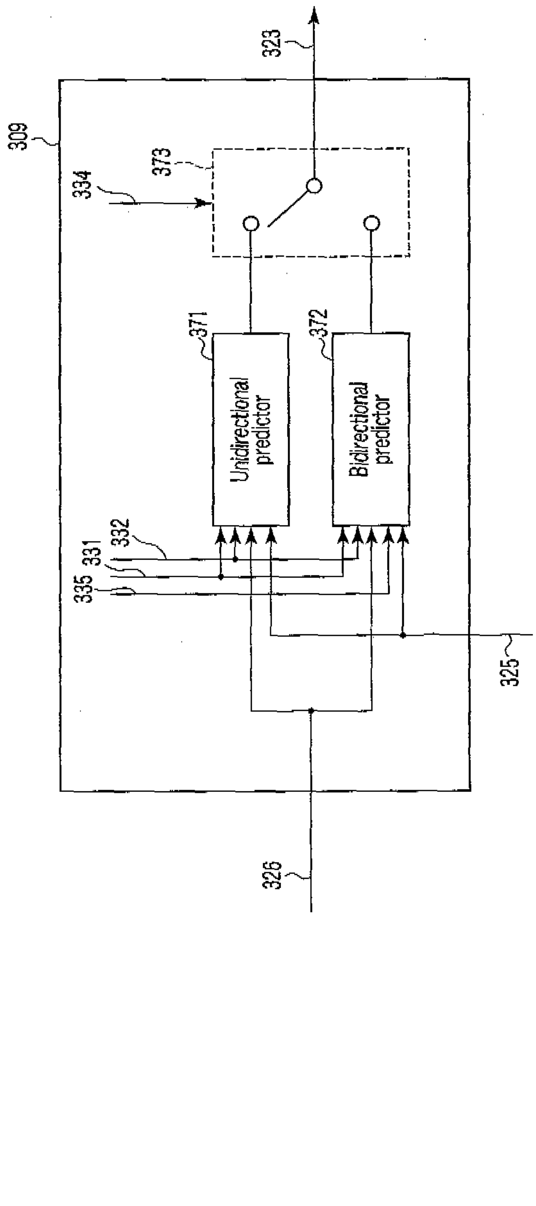
309
334
373
323
371
Unidirectional predictor
372
Bidirectional predictor
332
331
335
325
326

F I G. 76

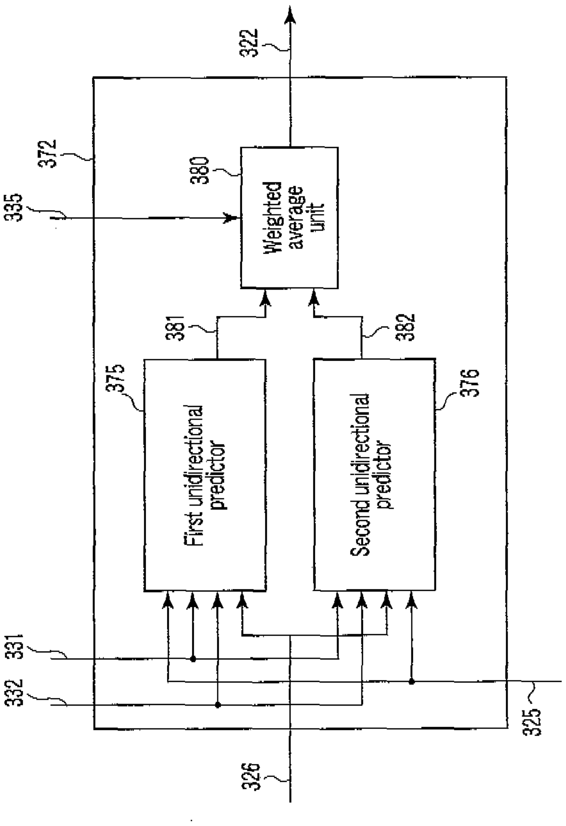
322
372
335
380
Weighted average unit
381
382
375
First unidirectional predictor
Second unidirectional predictor
376
331
332
325
326

F I G. 77

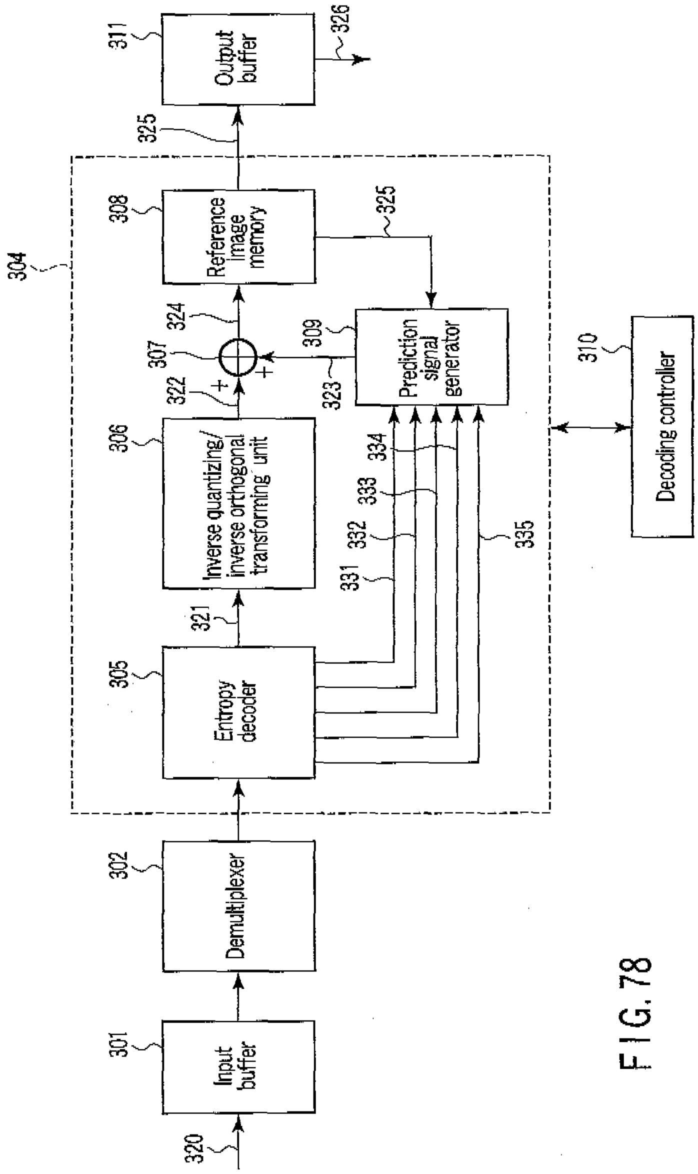
320
Input buffer
301
Demultiplexer
302
304
Entropy decoder
305
321
Inverse quantizing/ inverse orthogonal transforming unit
306
322
+
307
+
324
Reference image memory
308
325
Output buffer
311
326
325
Prediction signal generator
309
323
331
332
333
334
335
Decoding controller
310

F I G. 78

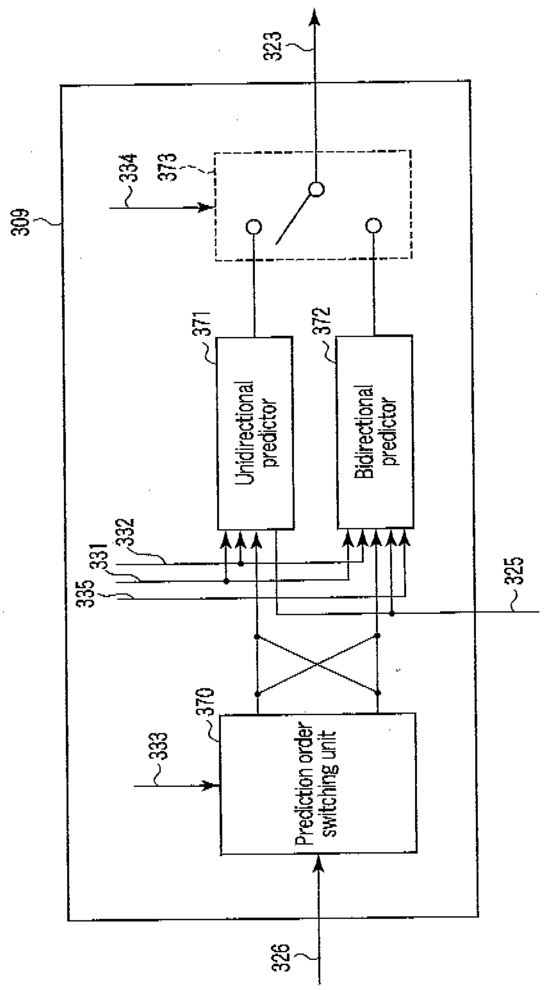
309
334
373
323
371
Unidirectional predictor
372
Bidirectional predictor
332
331
335
325
370
333
Prediction order switching unit
326

FIG. 79

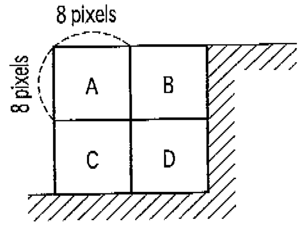


F I G. 80A

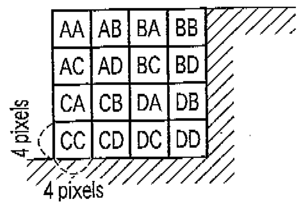


F I G. 80B

| | Prediction mode direction |
|---|---|
| | Sequential block prediction |
| Prediction mode index | All sub-blocks |
| 0 | Vertical prediction |
| 1 | Horizontal prediction |
| 2 | DC prediction |
| 3 | Diagonal-down-left prediction |
| 4 | Diagonal-down-right prediction |
| 5 | Vertical-right prediction |
| 6 | Horizontal-down prediction |
| 7 | Vertical-left prediction |
| 8 | Horizontal-upper prediction |
| 9 | Vertical/horizontal prediction |
| 10 | Horizontal down/DC prediction |
| 11 | Horizontal/DC prediction |
| 12 | Vertical/diagonal-down-left prediction |
| 13 | Vertical/diagonal-down-right prediction |
| 14 | Horizontal/diagonal-down-left prediction |
| 15 | Horizontal/diagonal-down-right prediction |

FIG. 81

| Prediction mode index | Prediction mode direction | | | |
|---|---|---|---|---|
| | Extrapolation/interpolation prediction (in case of D→B→C→A) | | | |
| | A (AA,BA,CA,DA) | B (AB,BB,CB,DB) | C (AC,BC,CC,DC) | D (AD,BD,CD,DD) |
| 0 | Vertical-down prediction | Vertical prediction | Vertical prediction | Vertical prediction |
| 1 | Horizontal prediction | Horizontal prediction | Horizontal prediction | Horizontal prediction |
| 2 | DC prediction | DC prediction | DC prediction | DC prediction |
| 3 | Diagonal-down-left prediction | Diagonal-down-left prediction | Diagonal-down-left prediction | Diagonal-down-left prediction |
| 4 | Diagonal-down-right prediction | Diagonal-down-right prediction | Diagonal-down-right prediction | Diagonal-down-right prediction |
| 5 | Vertical-upper prediction | Vertical-upper prediction | Horizontal-left prediction | Vertical-upper prediction |
| 6 | Horizontal-left prediction | Diagonal-upper-right prediction | Horizontal-upper prediction | Vertical / horizontal prediction |
| 7 | Diagonal-upper-left prediction | Vertical / vertical-upper prediction | Vertical/ horizontal-left prediction | Vertical/DC prediction |
| 8 | Diagonal-upper-right prediction | Horizontal/ vertical-upper prediction | Horizontal/ horizontal-left prediction | Horizontal/DC prediction |
| 9 | Vertical/ vertical-upper prediction | DC/vertical-upper prediction | DC/horizontal-left prediction | DC/diagonal-down-left prediction |
| 10 | Horizontal/ horizontal-left prediction | Diagonal-down-left/ vertical-upper prediction | Diagonal-down-left/ horizontal-left prediction | DC/diagonal-down-right prediction |
| 11 | Vertical/ horizontal prediction | Diagonal-down-right/ vertical-upper prediction | Diagonal-down-right/ horizontal-left prediction | Vertical / diagonal-down-left prediction |
| 12 | Vertical/ horizontal-left prediction | Diagonal-upper-right/ vertical-upper prediction | Diagonal-upper-right/ horizontal-left prediction | Vertical / diagonal-down-right prediction |
| 13 | Vertical-upper/ horizontal prediction | Vertical/ horizontal prediction | Vertical/ horizontal prediction | Horizontal/ diagonal-down-left prediction |
| 14 | Vertical-upper/ horizontal-left prediction | Vertical/DC prediction | Vertical/DC prediction | Horizontal/ diagonal-down-right prediction |
| 15 | Diagonal-down-right/ diagonal-upper-left prediction | Horizontal/DC prediction | Horizontal /DC prediction | Diagonal-down-left/ diagonal-down-right prediction |
| 16 | Diagonal-down-left/ diagonal-upper-right prediction | Diagonal-down-left/ diagonal-upper-right prediction | Diagonal-down-left/ horizontal-upper prediction | Diagonal-down-left/ horizontal-upper prediction |

FIG. 82

| Prediction mode index | Prediction mode direction | | | |
|---|---|---|---|---|
| | Extrapolation/interpolation prediction (in case of D→B→C→A) | | | |
| | A (AA,BA,CA,DA) | B (AB,BB,CB,DB) | C (AC,BC,CC,DC) | D (AD,BD,CD,DD) |
| 0 | Vertical prediction | Vertical prediction | Vertical prediction | Vertical prediction |
| 1 | Horizontal prediction | Horizontal prediction | Horizontal prediction | Horizontal prediction |
| 2 | DC prediction | DC prediction | DC prediction | DC prediction |
| 3 | Diagonal-down-left prediction | Diagonal-down-left prediction | Diagonal-down-left prediction | Diagonal-down-left prediction |
| 4 | Diagonal-down-right prediction | Diagonal-down-right prediction | Diagonal-down-right prediction | Diagonal-down-right prediction |
| 5 | Vertical-upper prediction | Vertical-upper prediction | Horizontal-left prediction | Horizontal-upper prediction |
| 6 | Horizontal-left prediction | Diagonal-upper-right prediction | Horizontal-upper prediction | Vertical/ horizontal prediction |
| 7 | Diagonal-upper-left prediction | Vertical-upper-left prediction | Horizontal-left prediction | Vertical/DC prediction |
| 8 | Diagonal-upper-right prediction | Vertical/ vertical-upper prediction | Vertical/ horizontal-left prediction | Horizontal/DC prediction |
| 9 | Vertical/ vertical-upper prediction | Horizontal/ vertical-upper prediction | Horizontal/ horizontal-left prediction | DC/diagonal-down-left prediction |
| 10 | Horizontal/ horizontal-left prediction | DC/vertical-upper prediction | DC/horizontal-left prediction | DC/diagonal-down-right prediction |
| 11 | Vertical/ horizontal prediction | Diagonal-down-left/ vertical-upper prediction | Diagonal-down-left/ horizontal-left prediction | Vertical/ diagonal-down-left prediction |
| 12 | Vertical/ horizontal-left prediction | Diagonal-down-right/ vertical-upper prediction | Diagonal-down-right/ horizontal-left prediction | Vertical/ diagonal-down-right prediction |
| 13 | Vertical-upper/ horizontal prediction | Diagonal-upper-right/ vertical-upper prediction | Vertical-upper right/ horizontal-left prediction | Horizontal/ diagonal-down-left prediction |
| 14 | Vertical-upper/ horizontal-left prediction | Vertical/ horizontal prediction | Vertical/ horizontal prediction | Horizontal/ diagonal-down-right prediction |
| 15 | Diagonal-down-right/ diagonal-upper-left prediction | Vertical/DC prediction | Vertical/DC prediction | Diagonal-down-left/ diagonal-down-right prediction |
| 16 | Diagonal-down-left/ diagonal-upper-right prediction | Horizontal /DC prediction | Horizontal /DC prediction | Diagonal-down-left/ horizontal-upper prediction |

F I G. 83

| Prediction order of pixel blocks | | Prediction mode set |
|---|---|---|
| 0 (Sequential block prediction) | A→B→C→D | See FIG. 66 |
| 1 (Extrapolation/ interpolation block prediction) | D→C→B→A | See FIG. 67 |
| 2 (Extrapolation/ interpolation block prediction) | D→B→C→A | See FIG. 68 |
| ... | ... | ... |

FIG. 84

| |
|---|
| macroblock_layer( ) { |
| ---- |
| **mb_type** |
| block_order_flag |
| mb_bipred_intra_flag |
| ---- |
| } |

FIG. 85

| mb_pred (mb_type,mb_bipred_intra_flag) { | Descriptor |
|---|---|
| if(MbPartPredMode (mb_type, 0) == Intra_4x4 \| \|<br>MbPartPredMode (mb_type, 0) == Intra_8x8 \| \|<br>MbPartPredMode (mb_type, 0) == Intra_16x16) { | |
| if (MbPartPredMode (mb_type, 0) == Intra_4x4) { | |
| if(mb_bipred_intra_flag) { | |
| for( luma4x4BlkIdx=0; luma4x4BlkIdx<16; luma4x4BlkIdx++) { | |
| **prev_4x4_bipred_mode_flag**[ luma4x4BlkIdx] | 1 bit |
| if (intra4x4_pred_mode_frag [ luma4x4BlkIdx]) | |
| **rem_intra4x4_bipred_mode**[ luma4x4BlkIdx] | 4 bit |
| } | |
| } else { | |
| for( luma4x4BlkIdx=0; luma4x4BlkIdx<16; luma4x4BlkIdx++) { | |
| **prev_intra4x4_pred_mode_flag**[ luma4x4BlkIdx] | 1 bit |
| if (!prev_intra4x4_pred_mode_frag [ luma4x4BlkIdx]) | |
| **rem_intra4x4_pred_mode**[ luma4x4BlkIdx] | 3 bit |
| } | |
| } | |
| } | |
| if (MbPartPredMode (mb_type, 0) == Intra_8x8) { | |
| if(mb_bipred_intra_flag) { | |
| for(luma8x8BlkIdx=0; luma8x8BlkIdx<4; luma8x8BlkIdx++) { | |
| **prev_8x8_bipred_mode_flag**[ luma8x8BlkIdx] | 1 bit |
| if (intra8x8_pred_mode_frag [ luma8x8BlkIdx]) | |
| **rem_intra8x8_bipred_mode**[ luma8x8BlkIdx] | 4 bit |
| } | |
| } else { | |
| for( luma8x8BlkIdx=0; luma8x8BlkIdx<4; luma8x8BlkIdx++) { | |
| **prev_intra8x8_pred_mode_flag**[ luma8x8BlkIdx] | 1 bit |
| if (!prev_intra8x8_pred_mode_frag [ luma8x8BlkIdx]) | |
| **rem_intra8x8_pred_mode**[ luma8x8BlkIdx] | 3 bit |

FIG. 86A

| | |
|---|---|
| } | |
| } | |
| } | |
| ... | |
| } else if( MbPartPredMode( mb_type, 0 ) != Direct ) { | |
| ... | |
| } | |
| } | |

FIG. 86B

| |
|---|
| if (Intra4x4PredMode[ luma4x4BlkIdx] = ref_pred_mode) |
| **prev_4x4_bipred_mode_flag**[ luma4x4BlkIdx] = 1 (TRUE) |
| else { |
| **prev_4x4_bipred_mode_flag**[ luma4x4BlkIdx] = 0 (FALSE) |
| if (rem_intra4x4_bipred_mode[ luma4x4BlkIdx] <ref_pred_mode) |
| **rem_intra4x4_bipred_mode**[ luma4x4BlkIdx] = Intra4x4PredMode[ luma4x4BlkIdx ] |
| else |
| **rem_intra4x4_bipred_mode**[ luma4x4BlkIdx] = Intra4x4PredMode[ luma4x4BlkIdx ] - 1 |
| } |

FIG. 87

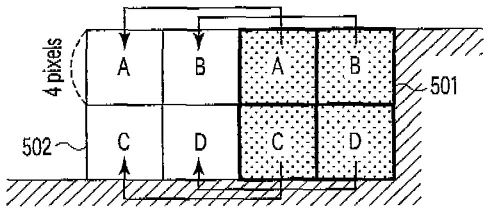


FIG. 88A

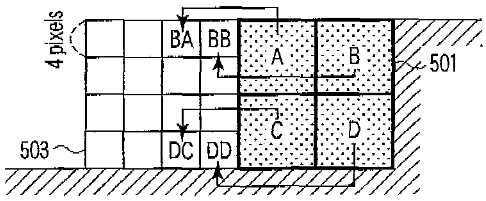


FIG. 88B

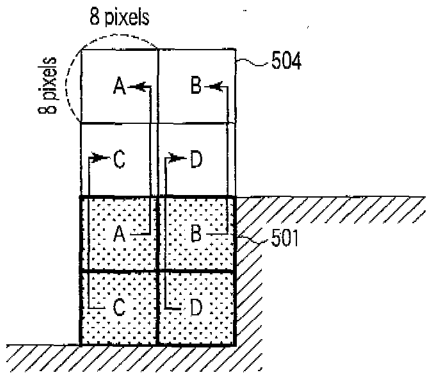


FIG. 89A

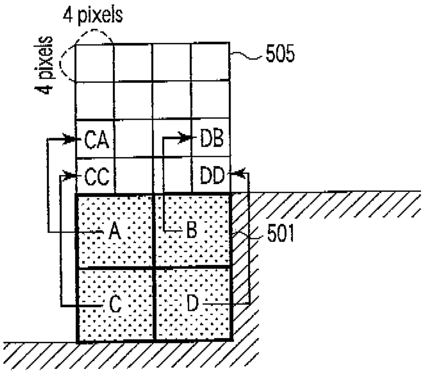


F I G. 89B

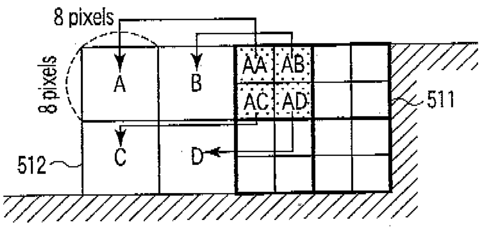


F I G. 90A

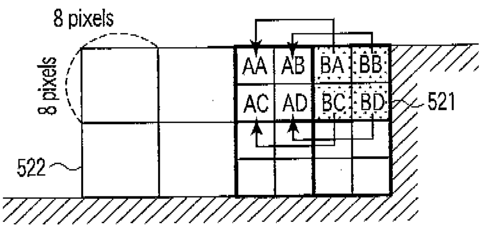


F I G. 90B

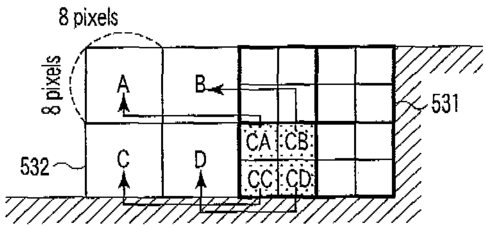


FIG. 90C

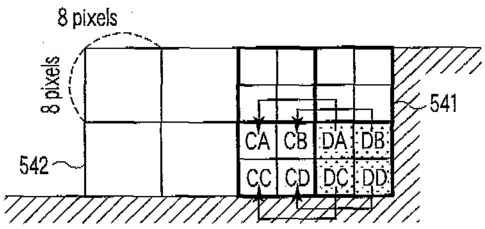


FIG. 90D

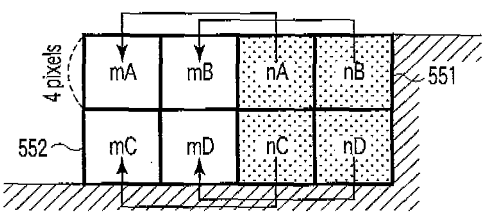


FIG. 91

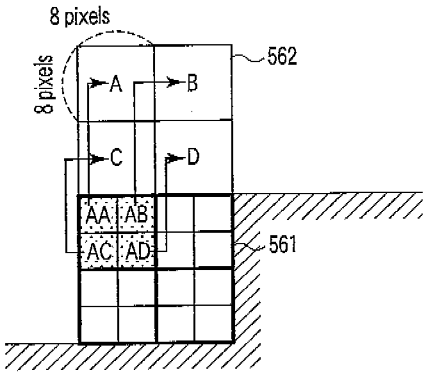


F I G. 92A

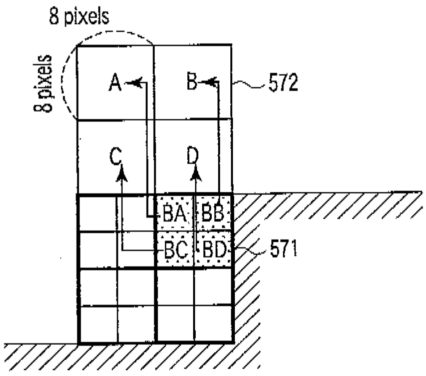


F I G. 92B

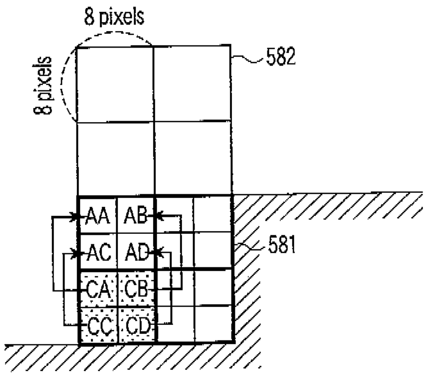


F I G. 92C

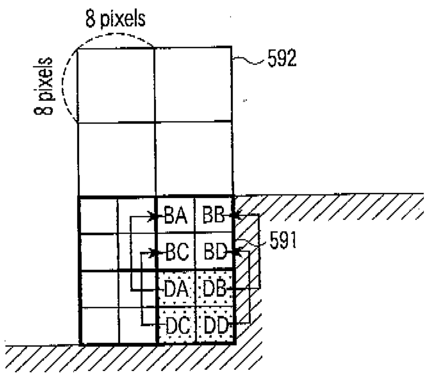


F I G. 92D

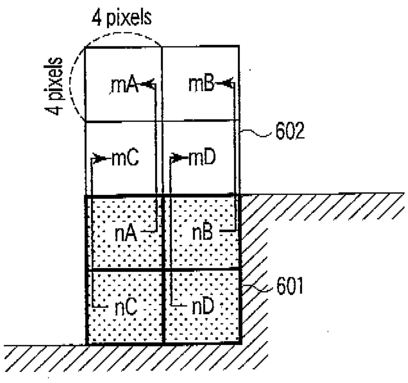


F I G. 93

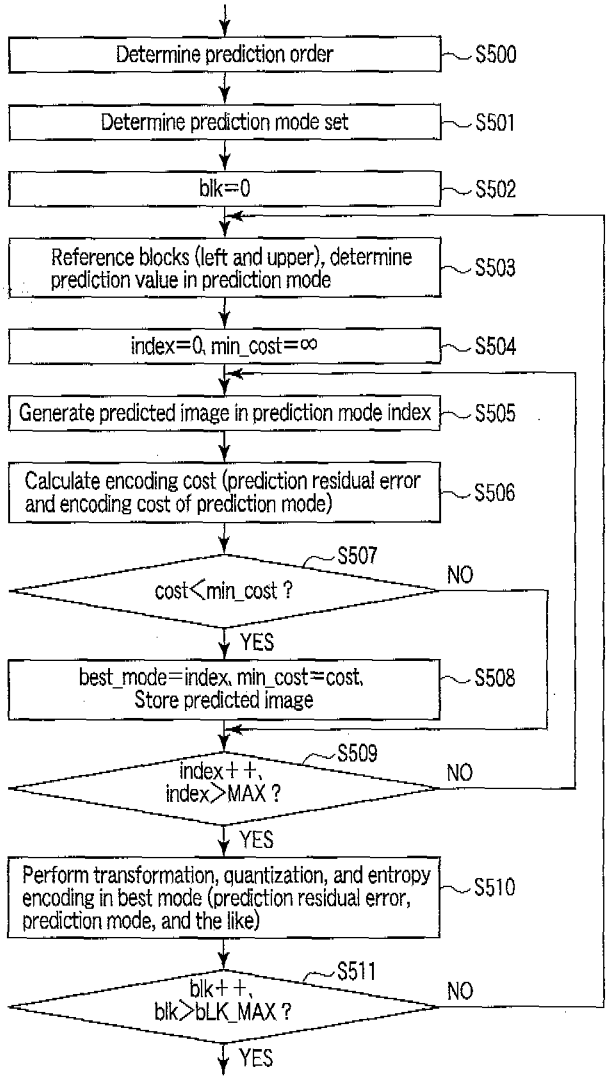
Determine prediction order
S500
Determine prediction mode set
S501
blk=0
S502
Reference blocks (left and upper), determine prediction value in prediction mode
S503
index=0, min_cost=∞
S504
Generate predicted image in prediction mode index
S505
Calculate encoding cost (prediction residual error and encoding cost of prediction mode)
S506
cost<min_cost ?
S507
NO
YES
best_mode=index, min_cost=cost, Store predicted image
S508
index++, index>MAX ?
S509
NO
YES
Perform transformation, quantization, and entropy encoding in best mode (prediction residual error, prediction mode, and the like)
S510
blk++, blk>bLK_MAX ?
S511
NO
YES

FIG. 94

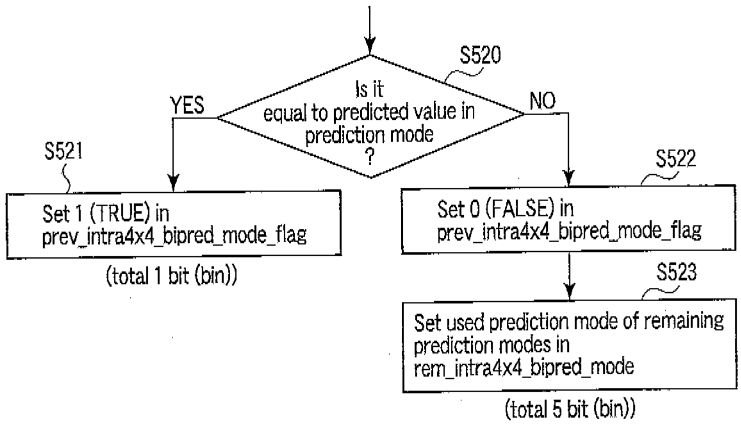
S520
Is it
equal to predicted value in
prediction mode
?
YES
NO
S521
Set 1 (TRUE) in
prev_intra4x4_bipred_mode_flag
(total 1 bit (bin))
S522
Set 0 (FALSE) in
prev_intra4x4_bipred_mode_flag
S523
Set used prediction mode of remaining
prediction modes in
rem_intra4x4_bipred_mode
(total 5 bit (bin))

F I G. 95

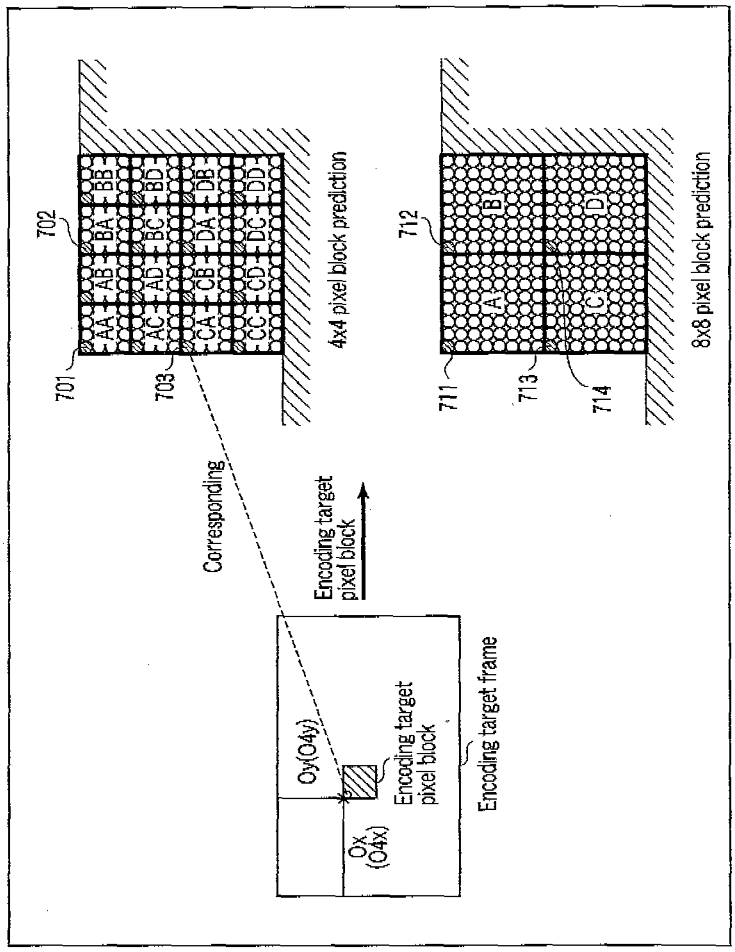
701
702
703
AA
AB
BA
BB
AC
AD
BC
BD
CA
CB
DA
DB
CC
CD
DC
DD
4x4 pixel block prediction
711
712
713
714
A
B
C
D
8x8 pixel block prediction
Corresponding
Encoding target pixel block
Oy(O4y)
Ox (O4x)
Encoding target pixel block
Encoding target frame

FIG. 96

| | A,B,C,D,(AA,AB,AC,AD,...,DC,DD) | |
|---|---|---|
| | xD | yD |
| left_ref_blk | -(predPartWidth+1) | 0 |
| upper_ref_blk | 0 | -(predPartHeight+1) |

FIG. 97A

| | A | | B | | C | | D | |
|---|---|---|---|---|---|---|---|---|
| | xD | yD | xD | yD | xD | yD | xD | yD |
| left_ref_blk | -5 | 0 | -9 | 0 | -5 | 4 | -9 | 4 |
| upper_ref_blk | 0 | -5 | 4 | -5 | 0 | -9 | 4 | -9 |

FIG. 97B

| | AA | | AB | | AC | | AD | |
|---|---|---|---|---|---|---|---|---|
| | xD | yD | xD | yD | xD | yD | xD | yD |
| left_ref_blk | -9 | 0 | -5 | 0 | -9 | 4 | -5 | 4 |
| upper_ref_blk | 0 | -9 | 4 | -9 | 0 | -5 | 0 | -5 |

FIG. 98A

| | BA | | BB | | BC | | BD | |
|---|---|---|---|---|---|---|---|---|
| | xD | yD | xD | yD | xD | yD | xD | yD |
| left_ref_blk | -5 | 0 | -5 | 0 | -5 | 0 | -5 | 0 |
| upper_ref_blk | -1 | -9 | 0 | -9 | -1 | -5 | 0 | -5 |

FIG. 98B

| | CA | | CB | | CC | | CD | |
|---|---|---|---|---|---|---|---|---|
| | xD | yD | xD | yD | xD | yD | xD | yD |
| left_ref_blk | -9 | -1 | -5 | -1 | -9 | 0 | -5 | 0 |
| upper_ref_blk | 0 | -5 | 0 | -5 | 0 | -5 | 0 | -5 |

FIG. 98C

| N | DA,DB,DC,DD | |
|---|---|---|
| | xD | yD |
| PA | -5 | 0 |
| PB | 0 | -5 |

FIG. 98D

| | A,B,C,D,(AA,AB,AC,AD,...,DC,DD) | |
|---|---|---|
| | xD | yD |
| left_ref_blk | -(predPartWidth4x4+1) | 0 |
| upper_ref_blk | 0 | -(predPartHeight4x4+1) |

FIG. 99A

| | A | | B | | C | | D | |
|---|---|---|---|---|---|---|---|---|
| | xD | yD | xD | yD | xD | yD | xD | yD |
| left_ref_blk | -2 | 0 | -3 | 0 | -2 | 1 | -3 | 1 |
| upper_ref_blk | 0 | -2 | 1 | -2 | 0 | -3 | 1 | -3 |

FIG. 99B

| | AA | | AB | | AC | | AD | |
|---|---|---|---|---|---|---|---|---|
| | xD | yD | xD | yD | xD | yD | xD | yD |
| left_ref_blk | -3 | 0 | -2 | 0 | -3 | 1 | -2 | 1 |
| upper_ref_blk | 0 | -3 | 1 | -3 | 0 | -2 | 1 | -2 |

FIG. 100A

| | BA | | BB | | BC | | BD | |
|---|---|---|---|---|---|---|---|---|
| | xD | yD | xD | yD | xD | yD | xD | yD |
| left_ref_blk | -2 | 0 | -2 | 0 | -2 | 0 | -2 | 0 |
| upper_ref_blk | -1 | -3 | 0 | -3 | -1 | -2 | 0 | -2 |

FIG. 100B

| | CA | | CB | | CC | | CD | |
|---|---|---|---|---|---|---|---|---|
| | xD | yD | xD | yD | xD | yD | xD | yD |
| left_ref_blk | -3 | -1 | -2 | -1 | -3 | 0 | -2 | 0 |
| upper_ref_blk | 0 | -2 | 0 | -2 | 0 | -2 | 0 | -2 |

FIG. 100C

| N | DA,DB,DC,DD | |
|---|---|---|
| | xD | yD |
| PA | -2 | 0 |
| PB | 0 | -2 |

FIG. 100D

| |
|---|
| if (prev_4x4_bipred_mode_flag[ luma4x4BlkIdx]) |
| **Intra4x4PredMode**[ luma4x4BlkIdx] = ref_pred_mode |
| else { |
| if (**rem**_intra4x4_bipred_mode[ luma4x4BlkIdx] <ref_pred_mode) |
| **Intra4x4PredMode**[ luma4x4BlkIdx] = rem_intra4x4_bipred_mode[ luma4x4BlkIdx] |
| else |
| **Intra4x4PredMode**[ luma4x4BlkIdx] = rem_intra4x4_bipred_mode[ luma4x4BlkIdx]+1 |
| } |

FIG. 101

## INTERNATIONAL SEARCH REPORT

International application No.
PCT/JP2008/050158

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/26-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | Taichiro SHIODERA et al., "Block Base Gaiso/ Naiso Yosoku ni Motozuku Intra-Fugoka", 2006 Nen Picture Coding Symposium of Japan (PCSJ2006) Symposium Shiryo, 08 November, 2006 (08.11.06), pages 123 to 124 | 1-4,6-11,<br>18-21,23-26<br>5,22<br>12-17,27-45 |
| Y<br>A | WO 2005/022919 A1 (THOMSON LICENSING S.A.), 10 March, 2005 (10.03.05), Page 12, lines 12 to 13; full text; all drawings<br>& JP 2007-503775 A & JP 2007-503777 A<br>& US 2007/0009044 A1 & US 2007/0047648 A1<br>& EP 1658728 A1 & EP 1658729 A1 | 5,22<br>1-4,6-21,<br>23-45 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 April, 2008 (08.04.08) | 22 April, 2008 (22.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/050158

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2005/022920 A1 (THOMSON LICENSING S.A.),<br>10 March, 2005 (10.03.05),<br>Page 13, lines 4 to 5; full text; all drawings<br>& JP 2007-503777 A & JP 2007-503775 A<br>& US 2007/0047648 A1 & US 2007/0009044 A1<br>& EP 1658729 A1 & EP 1658728 A1 | 5,22<br>1-4,6-21,<br>23-45 |
| A | Kenneth K.C. Lee et al., Spatial Domain Contribution to a High Compression Efficiency System, International Workshop on Advanced Image Technology 2006 (IWAIT2006), 2006.01, P.89-94 | 1-45 |
| A | JP 2004-200991 A (Nippon Telegraph And Telephone Corp.),<br>15 July, 2004 (15.07.04),<br>Full text; all drawings<br>(Family: none) | 1-45 |

Form PCT/ISA/210 (continuation of second sheet) (April 2007)

**INTERNATIONAL SEARCH REPORT**

International application No.
PCT/JP2008/050158

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The technical feature relating to setting of a weighting coefficient based on the prediction direction of plural prediction modes and the special distance between the prediction pixel in the pixel block and the reference pixel is disclosed in Document Taichiro SHIODERA et al., "Block Base Gaiso/Naiso Yosoku ni Motozuku Intra-Fugoka", 2006 Nen Picture Coding Symposium of Japan (PCSJ2006), Symposium Shiryo, 08 November, 2006 (08.11.06), pages 123 to 124

(Continued to extra sheet)

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

INTERNATIONAL SEARCH REPORT

International application No.
PCT/JP2008/050158

Continuation of Box No.III of continuation of first sheet(2)

Accordingly, there is no technical relationship between the inventions of claims 1-29, the inventions of claims 30-32, and the inventions of claims 33-45 involving one or more of the same or corresponding special technical features. The inventions are not so linked as to form a single general inventive concept.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **Kenneth K. C. Lee et al.** Spatial Domain Contribution to a High Compression Efficiency System. *IWAIT2006,* June 2006